(19) Europäisches Patentamt
European Patent Office
Office européen des brevets

(11) EP 4 092 442 A1

(12) **EUROPEAN PATENT APPLICATION**
published in accordance with Art. 153(4) EPC

(43) Date of publication:
**23.11.2022 Bulletin 2022/47**

(21) Application number: **20913324.8**

(22) Date of filing: **17.12.2020**

(51) International Patent Classification (IPC):
***G01S 7/4861** (2020.01)* ***G01S 17/10** (2020.01)*

(52) Cooperative Patent Classification (CPC):
**G01S 7/4861; G01S 17/10**

(86) International application number:
**PCT/JP2020/047303**

(87) International publication number:
**WO 2021/145134 (22.07.2021 Gazette 2021/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.01.2020 JP 2020005722**

(71) Applicant: **Sony Semiconductor Solutions Corporation**
**Atsugi-shi Kanagawa 243-0014 (JP)**

(72) Inventor: **SAKAGUCHI Hiroaki**
**Atsugi-shi, Kanagawa 243-0014 (JP)**

(74) Representative: **Müller Hoffmann & Partner**
**Patentanwälte mbB**
**St.-Martin-Strasse 58**
**81541 München (DE)**

(54) **LIGHT RECEIVING DEVICE, SIGNAL PROCESSING METHOD FOR LIGHT RECEIVING DEVICE, AND RANGING DEVICE**

(57) A light receiving device of the present disclosure includes a light receiving unit that has a plurality of photon counting type light receiving elements arranged, the plurality of photon counting type light receiving elements receiving light from an object, an addition unit configured to add values of the plurality of light receiving elements at a predetermined time to use a resultant as a pixel value, and a logarithmic transformation processing unit configured to transform the pixel value into a logarithmic value or an approximate value thereof to use a resultant as logarithmic representation data, in which reflected pulsed light, from a subject, based on the photon counting type light receiving elements receiving light from the object from a light source unit is received.

*FIG. 13*

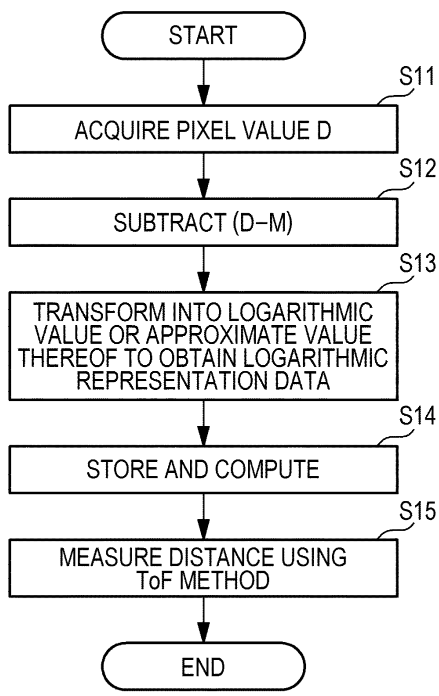


EP 4 092 442 A1

## Description

TECHNICAL FIELD

The present disclosure relates to a light receiving device, a signal processing method for the light receiving device, and a distance measuring device.

BACKGROUND ART

A light receiving device includes, as a light receiving element, an element that generates a signal in response to photon light reception. In this type of light receiving device, as a measurement method for measuring a distance to an object to be measured, a time of flight (ToF) method is used for measuring the amount of time until pulsed light, which has been emitted from a light source unit toward the object to be measured, is reflected by the object to be measured and returns.

Examples of the element that generates a signal in response to photon light reception include a photodetector having a plurality of single photon avalanche diode (SPAD) elements arranged in a plane (see, for example, Patent Document 1). In this type of distance measuring device, values of the plurality of SPAD elements are added together to be used as a pixel value; however, in order to capture reflected light by sampling the pixel value after laser emission from the light source unit, the pixel value is added to a histogram having a bin (BIN) corresponding to a sampling time.

The reflected light from the object to be measured is diffused, and the intensity thereof is inversely proportional to the square of the distance. Therefore, S/N is improved by accumulating (adding up) histograms of reflected light based on a plurality of times of laser emission, and weak reflected light from a farther object to be measured can be discriminated.

CITATION LIST

PATENT DOCUMENT

Patent Document 1: Japanese Patent Application Laid-Open No. 2018-169384

SUMMARY OF THE INVENTION

PROBLEMS TO BE SOLVED BY THE INVENTION

As described above, in the case of accumulating the histograms of the reflected light based on the pulsed laser light emitted a plurality of times, the pixel value of the intense reflected light from an object to be measured relatively close is large, and the dynamic range of a bin corresponding to the close distance of the histogram increases each time the histogram is accumulated. On the other hand, the reflected light from an object to be measured relatively far is weak in inverse proportion to the square of the distance, and the dynamic range of a bin corresponding to the far distance of the histogram is small. Therefore, in a case where all the bins are stored as histograms of fixed-length bit depth representation, a capacity of a memory for storing histograms of the reflected light based on the pulsed laser light emitted a plurality of times increases.

An object of the present disclosure is to provide a light receiving device capable of improving a dynamic range of a histogram at the time of accumulation or reducing a memory capacity, a signal processing method therefor, and a distance measuring device including the light receiving device.

SOLUTIONS TO PROBLEMS

A light receiving device of the present disclosure for achieving the object described above includes:

a light receiving unit that has a plurality of photon counting type light receiving elements arranged, the plurality of photon counting type light receiving elements receiving light from an object;

an addition unit configured to add values of the plurality of light receiving elements at a predetermined time to use a resultant as a pixel value; and
a logarithmic transformation processing unit configured to transform the pixel value obtained as a result of addition by the addition unit into a logarithmic value or an approximate value thereof to use a resultant as logarithmic representation data used for distance measurement calculation; in which

reflected light, from an object to be measured, based on pulsed light applied by a light source unit is received.

Further, a signal processing method for a light receiving device of the present disclosure for achieving the object described above, the light receiving device

includes
a light receiving unit that has a plurality of photon counting type light receiving elements arranged, the plurality of photon counting type light receiving elements receiving light from an object, and
receives reflected light, from an object to be measured, based on pulsed light applied by a light source unit, the signal processing method including:

in signal processing on the light receiving device,
adding values of the plurality of light receiving elements at a predetermined time to use a resultant as a pixel value; and
next, transforming the pixel value into a logarithmic value or an approximate value thereof to use a resultant as logarithmic representation data used for distance measurement calculation.

Further, a distance measuring device of the present disclosure for achieving the object described above includes:

a light source unit configured to apply pulsed light to an object to be measured; and
a light receiving device configured to receive reflected light, from an object to be measured, based on pulsed light applied by the light source unit; in which
the light receiving device
includes
a light receiving unit that has a plurality of photon counting type light receiving elements arranged, the plurality of photon counting type light receiving elements receiving light from an object,
an addition unit configured to add values of the plurality of light receiving elements at a predetermined time to use a resultant as a pixel value, and
a logarithmic transformation processing unit configured to convert the pixel value obtained as a result of addition by the addition unit to a logarithmic value or an approximate value thereof to use a resultant as logarithmic representation data used for distance measurement calculation.

BRIEF DESCRIPTION OF DRAWINGS

Fig. 1 is a block diagram illustrating an example of a configuration of a light receiving device and a distance measuring device as a premise of the present disclosure.
Fig. 2 is an explanatory diagram of processing of an addition unit in a light receiving device.
Figs. 3A, 3B, and 3C are explanatory diagrams of a histogram of reflected light at the first laser emission.
Figs. 4A, 4B, and 4C are explanatory diagrams of a histogram of reflected light at the second laser emission.
Figs. 5A, 5B, and 5C are explanatory diagrams of a histogram of reflected light at the third laser emission.
Fig. 6 is a diagram (No. 1) illustrating a cumulative histogram in linear representation, Fig. 6A illustrates a cumulative histogram in the case of one-time addition, and Fig. 6B illustrates a cumulative histogram in the case of four-time addition.
Fig. 7 is a diagram (No. 2) illustrating a cumulative histogram in linear representation, Fig. 7A illustrates a cumulative histogram in the case of 16-time addition, and Fig. 7B illustrates a smoothed histogram in the case of 16-time addition.
Figs. 8A and 8B are explanatory diagrams of a normally distributed random number and a fixed value.
Fig. 9A is a waveform diagram illustrating a logarithm of accumulation of a histogram in the case of a conventional technology and a logarithm of accumulation of a histogram, and Fig. 9B is a waveform diagram illustrating a logarithm of accumulation of a histogram of a value obtained by subtracting ambient light arithmetic mean in the case of a conventional technology and logarithmic representation of accumulation of a histogram of a value obtained by subtracting ambient light arithmetic mean.
Fig. 10 is a waveform diagram illustrating a logarithm of accumulation of a histogram in the case of a technology according to the present disclosure and accumulation of a histogram of pixel values in logarithmic representation.
Fig. 11 is a waveform diagram illustrating a logarithm of accumulation of a histogram of a value obtained by subtracting ambient light arithmetic mean in the case of a technology according to the present disclosure and accumulation of a histogram of pixel values in logarithmic representation of the value obtained by subtracting the ambient light arithmetic mean.

Fig. 12 is a block diagram illustrating a configuration example of a light receiving device and a distance measuring device according to Example 1 of a first embodiment of the present disclosure.

Fig. 13 is a flowchart depicting the flow of a signal processing method in a light receiving device according to Example 1.

Fig. 14 is a block diagram illustrating a schematic configuration example of a light receiving unit in a light receiving device according to Example 1.

Fig. 15 is a schematic diagram illustrating a schematic configuration example of an SPAD array unit of a light receiving unit.

Fig. 16 is a circuit diagram illustrating a configuration example of a circuit of a pixel of a light receiving unit.

Fig. 17 is a block diagram illustrating a configuration example of an addition unit in a light receiving device according to Example 1.

Fig. 18 is a block diagram illustrating a configuration example of a logarithmic transformation processing unit in a light receiving device according to Example 1.

Fig. 19 is a block diagram illustrating a configuration example of an ambient light estimation processing unit in logarithmic representation in a light receiving device according to Example 1.

Fig. 20 is an explanatory diagram of calculation processing in an ambient light estimation processing unit.

Fig. 21 is a block diagram illustrating a configuration example of a histogram addition processing unit in logarithmic representation in a light receiving device according to Example 1.

Fig. 22 is an explanatory diagram of logarithmic transformation and inverse transformation.

Fig. 23 is a diagram illustrating source codes of a logarithmic transformation and inverse transformation circuit described in a hardware language VerilogHDL.

Fig. 24 is a waveform diagram (No. 1) of each unit in a light receiving device according to Example 1, Fig. 24A illustrates an output waveform of an adder, and Fig. 24B illustrates an output waveform of a logarithmic transformation unit.

Fig. 25 is a waveform diagram (No. 2) of each unit in a light receiving device according to Example 1, Fig. 25A illustrates an output waveform of a histogram addition processing unit, and Fig. 25B illustrates an output waveform of a smoothing filter.

Fig. 26 is a waveform diagram (No. 3) of each unit in a light receiving device according to Example 1 and illustrates an output waveform of a logarithmic transformation unit.

Fig. 27 is a diagram (No. 1) illustrating a cumulative histogram in logarithmic representation for a case where ambient light arithmetic mean is not subtracted from a pixel value, Fig. 27A illustrates a cumulative histogram in the case of one-time addition, and Fig. 27B illustrates a cumulative histogram in the case of four-time addition.

Fig. 28 is a diagram (No. 2) illustrating a cumulative histogram in logarithmic representation for a case where ambient light arithmetic mean is not subtracted from a pixel value, Fig. 28A illustrates a cumulative histogram in the case of 16-time addition, and Fig. 28B illustrates a smoothed histogram in the case of 16-time addition.

Fig. 29 is a diagram (No. 1) illustrating a cumulative histogram in logarithmic representation for a case where ambient light arithmetic mean is subtracted from a pixel value, Fig. 29A illustrates a cumulative histogram in the case of one-time addition, and Fig. 29B illustrates a cumulative histogram in the case of four-time addition.

Fig. 30 is a diagram (No. 2) illustrating a cumulative histogram in logarithmic representation for a case where ambient light arithmetic mean is subtracted from a pixel value, Fig. 30A illustrates a cumulative histogram in the case of 16-time addition, and Fig. 30B illustrates a smoothed histogram in the case of 16-time addition.

Fig. 31 is a block diagram illustrating a configuration example of a light receiving device and a distance measuring device according to Example 2 of the first embodiment of the present disclosure.

Fig. 32A is a block diagram illustrating a configuration example of a logarithmic transformation processing unit in a light receiving device according to Example 2, and Fig. 32B is a block diagram illustrating a configuration example of an ambient light estimation processing unit by geometric mean in a light receiving device according to Example 2.

Fig. 33 is a block diagram illustrating a configuration example of a histogram addition processing unit in logarithmic representation in a light receiving device according to Example 2.

Fig. 34 is a block diagram illustrating a configuration example of a light receiving device and a distance measuring device according to Example 3 of the first embodiment of the present disclosure.

Fig. 35 is a block diagram illustrating a first circuit example of a circuit portion that calculates an ambient light intensity estimate and a variance in logarithmic representation in an ambient light estimation processing unit according to Example 3.

Fig. 36 is a block diagram illustrating a second circuit example of a circuit portion that calculates an ambient light intensity estimate and a variance in logarithmic representation in an ambient light estimation processing unit according to Example 3.

Fig. 37 is a block diagram illustrating a circuit example of a logarithmic transformation unit according to Example 4, Fig. 37A illustrates a circuit configuration according to a first specific example, and Fig. 37B illustrates a circuit configuration according to a second specific example.
Fig. 38 is a diagram (No. 1) illustrating a logarithm of a value obtained by subtracting a minimum value from a cumulative value of a histogram of a pixel value in logarithmic representation, Fig. 38A illustrates a logarithm in the case of one-time addition, and Fig. 38B illustrates a logarithm in the case of four-time addition.
Fig. 39 is a diagram (No. 2) illustrating a logarithm of a value obtained by subtracting a minimum value from a cumulative value of a histogram of a pixel value in logarithmic representation, Fig. 39A illustrates a logarithm in the case of 16-time addition, and Fig. 39B illustrates a logarithm in the case of 32-time addition.
Fig. 40 is a diagram (No. 1) illustrating a logarithm of a value obtained by subtracting a minimum value from a cumulative value of a histogram of a pixel value in logarithmic representation of a value obtained by subtracting ambient light arithmetic mean, Fig. 40A illustrates a logarithm in the case of one-time addition, and Fig. 40B illustrates a logarithm in the case of four-time addition.
Fig. 41 is a diagram (No. 2) illustrating a logarithm of a value obtained by subtracting a minimum value from a cumulative value of a histogram of a pixel value in logarithmic representation of a value obtained by subtracting ambient light arithmetic mean, Fig. 41A illustrates a logarithm in the case of 16-time addition, and Fig. 41B illustrates a logarithm in the case of 32-time addition.
Fig. 42 is a block diagram illustrating a configuration example of a histogram addition processing unit in logarithmic representation according to Example 5.
Fig. 43 is a diagram illustrating the flow of differential encoding of a cumulative histogram of logarithmic representation.
Fig. 44A is a diagram illustrating a data size in a case where histograms of 2048 bins are stored in an SRAM without being compressed, and Fig. 44B is a diagram illustrating a data size in a case where differential encoding is performed.
Fig. 45 is a block diagram illustrating a configuration example of an encoding circuit.
Fig. 46 is a block diagram illustrating a configuration example of a decoding circuit.
Fig. 47 is a diagram illustrating a cumulative histogram in logarithmic representation in the case of 16-time addition without subtraction of ambient light geometric mean.
Fig. 48 is a diagram illustrating a cumulative histogram in logarithmic representation in the case of 16-time addition with subtraction of ambient light geometric mean.
Fig. 49A is a diagram illustrating a difference between geometric mean and arithmetic mean for a case where noise is averaged out by synchronous addition, and Fig. 49B is a diagram illustrating a histogram of data values.
Fig. 50A is a diagram illustrating a difference between geometric mean and arithmetic mean for a case of averaging in a time direction, and Fig. 50B is a diagram illustrating a histogram of data values.
Fig. 51 is a schematic diagram illustrating a schematic configuration example of a distance measuring device according to a second embodiment of the present disclosure.
Fig. 52 is a block diagram illustrating an example of a schematic configuration of a vehicle control system as an example of a mobile object control system to which the technology according to the present disclosure can be applied.
Fig. 53 is a diagram illustrating an example of installation positions of an imaging section and an outside-vehicle information detecting section.

## MODE FOR CARRYING OUT THE INVENTION

Hereinafter, modes for carrying out the technology according to the present disclosure (hereinafter, referred to as "embodiments") are detailed with reference to the drawings. The technology according to the present disclosure is not limited to the embodiments, and various numerical values and the like in the embodiments are examples. In the following description, the same reference numerals are used for the same elements or elements having the same functions, and redundant description is omitted. Note that the description is given in the following order.

1. Description regarding light receiving device, signal processing method for light receiving device, and distance measuring device of present disclosure
2. Light receiving device and distance measuring device as premise of present disclosure

    2-1. Configuration example of system
    2-2. Principle of distance measurement by ToF sensor
    2-3. Configuration example of light source unit
    2-4. Configuration example of light receiving device
    2-5. Problem of conventional technology

3. First embodiment of present disclosure (example of distance measuring device called flash type)

3-1. Example 1 (example of obtaining logarithmic representation data after subtracting predetermined value from pixel value)
3-1-1. Configuration example of system
3-1-2. Schematic configuration example of light receiving unit
3-1-2-1. Schematic configuration example of SPAD array unit
3-1-2-2. Circuit configuration example of SPAD pixel 3-1-2-3. Schematic operation example of SPAD pixel 3-1-3. Configuration example of addition unit
3-1-4. Configuration example of logarithmic transformation processing unit
3-1-5. Configuration example of ambient light estimation processing unit in logarithmic representation
3-1-6. Configuration example of histogram addition processing unit in logarithmic representation
3-2. Example 2 (example of obtaining logarithmic representation data by transforming pixel value into logarithmic value or approximate value thereof and then subtracting predetermined value in logarithmic representation)
3-2-1. Configuration example of system
3-2-2. Configuration example of logarithmic transformation processing unit
3-2-3. Configuration example of ambient light estimation processing unit in logarithmic representation
3-2-4. Configuration example of histogram addition processing unit in logarithmic representation
3-3. Example 3 (example of calculating arithmetic mean and variance of ambient light estimation processing in logarithmic representation)
3-3-1. Configuration example of system
3-3-2. Example of method for calculating arithmetic mean and variance of ambient light in logarithmic representation
3-3-3. Circuit example for calculating arithmetic mean and variance of ambient light in logarithmic representation
3-4. Example 4 (specific example of logarithmic transformation unit in light receiving device according to Examples 1/2)
3-4-1. First circuit example
3-4-2. Second circuit example
3-5. Example 5 (example of reducing memory capacity by compressing data on cumulative histogram of logarithmic representation)
3-5-1. Configuration example of system
3-5-2. Configuration example of encoding circuit 3-5-3. Configuration example of decoding circuit 3-6. Functional effect of first embodiment

4. Second embodiment of present disclosure (example of distance measuring device called scan type)

4-1. System configuration example of distance measuring device
4-2. Functional effect of second embodiment

5. Application example of technology according to present disclosure
5-1. Example of mobile object
6. Configuration that can be taken by present disclosure

<Description regarding light receiving device, signal processing method for light receiving device, and distance measuring device>

In the light receiving device, the signal processing method therefor, and the distance measuring device of the present disclosure, the logarithmic transformation processing unit transforms a value obtained by subtracting a predetermined value from the pixel value into a logarithmic value or an approximate value thereof to use a resultant as the logarithmic representation data used for distance measurement calculation, and in a case where the predetermined value is larger than the pixel value, the logarithmic transformation processing unit performs transformation processing with the value obtained as a result of subtraction as zero (0).

In the light receiving device, the signal processing method therefor, and the distance measuring device of the present disclosure including the preferable configuration described above, assuming that the predetermined value is an ambient light intensity estimate that is obtained by adding a predetermined addend to a value obtained by multiplying arithmetic mean of ambient light by a predetermined multiplier, an ambient light estimation processing unit is included which is configured to, on the basis of the pixel value, calculate the arithmetic mean of the ambient light in logarithmic representation to estimate ambient light intensity. Then, the logarithmic transformation processing unit subtracts, from the pixel value, the ambient light intensity estimated by the ambient light estimation processing unit to use a resultant as the logarithmic representation data used for distance measurement calculation.

Alternatively, in the light receiving device, the signal processing method therefor, and the distance measuring device of the present disclosure including the preferable configuration described above, the logarithmic transformation processing unit subtracts data obtained as a result of transformation from a predetermined value into a logarithmic value or an approximate value thereof from data obtained as a result of transformation from the pixel value into a logarithmic value or an approximate value thereof, and uses a resultant as the logarithmic representation data used for distance measurement calculation.

Further, in the light receiving device, the signal processing method therefor, and the distance measuring device of the present disclosure including the preferable configuration described above, assuming that the predetermined value is an ambient light intensity estimate that is obtained by adding a predetermined addend to a value obtained by multiplying geometric mean of ambient light by a predetermined multiplier, an ambient light estimation processing unit is included which is configured to, on the basis of the pixel value, calculate the geometric mean of the ambient light in logarithmic representation to estimate ambient light intensity. Then, the logarithmic transformation processing unit transforms the ambient light intensity estimated by the ambient light estimation processing unit into a logarithmic value or an approximate value thereof.

Further, in the light receiving device, the signal processing method therefor, and the distance measuring device of the present disclosure including the preferable configuration described above, a histogram addition processing unit is included which is configured to correlate a flight time from emission of pulsed light applied by the light source unit to return of the reflected light as a bin of a histogram and to store logarithmic representation data calculated on the basis of a pixel value sampled at each time as a count value of a bin corresponding to the time.

Further, in the light receiving device, the signal processing method therefor, and the distance measuring device of the present disclosure including the preferable configuration described above, the histogram addition processing unit adds logarithmic representation data of each time of the reflected light from the object to be measured based on emission of the pulsed light applied a plurality of times by the light source unit to the count value of the bin corresponding to the time and updates the histogram.

Further, in the light receiving device, the signal processing method therefor, and the distance measuring device of the present disclosure including the preferable configuration described above, the histogram addition processing unit generates a histogram obtained by accumulating count values calculated on the basis of a pixel value obtained by receiving the reflected light based on the emission of the pulsed light applied a plurality of times by the light source unit, or, alternatively, the histogram addition processing unit subtracts, from the pixel value, a value calculated using pixel values sampled at a plurality of times in a predetermined measurement period as the predetermined value, and adds logarithmic representation data calculated by the subtraction as the count value of the bin of the histogram.

Further, in the light receiving device, the signal processing method therefor, and the distance measuring device of the present disclosure including the preferable configuration described above, a reflected light detection unit is included which is configured to detect a peak of each reflected light by performing magnitude comparison between count values of a histogram with logarithmic representation used and to calculate a distance on the basis of a time corresponding to a bin at a start of a rise of the peak.

Further, in the light receiving device, the signal processing method therefor, and the distance measuring device of the present disclosure including the preferable configuration described above, an ambient light estimation processing unit is configured as follows. To be specific, the ambient light estimation processing unit calculates an approximate value S of a logarithmic value of a sum total of pixel values while maintaining logarithmic representation of logarithmic representation data LogD obtained by transforming pixel values sampled at a plurality of times in a predetermined measurement period into logarithmic values or approximate values thereof by using a predetermined approximate expression. Next, the ambient light estimation processing unit calculates an approximate value $\mu$ of an arithmetic mean on the basis of a value obtained by subtracting a logarithmic value of a sampling number N or an approximate value thereof from the approximate value S. Next, the ambient light estimation processing unit calculates an approximate value SS of a logarithmic value of a sum total obtained by squaring pixel values while maintaining logarithmic representation of a value obtained by doubling logarithmic representation data LogD by using a predetermined approximate expression. Next, the ambient light estimation processing unit calculates a value MM obtained by subtracting the logarithmic value of the sampling number N or the approximate value thereof from the approximate value SS. Next, the ambient light estimation processing unit calculates an approximate value V of a variance of the ambient light by using the approximate value $\mu$ of the arithmetic mean and the value MM. Then, the ambient light estimation processing unit outputs an ambient light intensity estimate obtained by adding a predetermined addend to a value obtained by multiplying the approximate value M of the arithmetic mean by a predetermined multiplier, and an approximate value of a standard deviation of ambient light calculated on the basis of the approximate value V of the variance.

Further, in the light receiving device, the signal processing method therefor, and the distance measuring device of the present disclosure including the preferable configuration described above, the ambient light estimation processing unit transforms a sum total obtained by summing pixel values sampled at a plurality of times in a predetermined measurement period into a logarithmic value or an approximate value thereof, and outputs an image in which logarithmic representation data transformed is used as a pixel value.

Further, in the light receiving device, the signal processing method therefor, and the distance measuring device of the present disclosure including the preferable configuration described above, the ambient light estimation processing unit calculates an approximate value of a logarithmic value of a sum total of pixel values while maintaining logarithmic representation of logarithmic representation data obtained by transforming pixel values sampled at a plurality of times in a predetermined measurement period into logarithmic values or approximate values thereof by using a predetermined approximate expression, and outputs an image in which the approximate value is used as a pixel value.

Further, in the light receiving device, the signal processing method therefor, and the distance measuring device of the present disclosure including the preferable configuration described above, a logarithmic transformation unit is included which is configured to further logarithmically transform and compress a cumulative histogram of logarithmic representation, or, alternatively, a logarithmic transformation unit is included which is configured to further logarithmically transform and compress a cumulative histogram of logarithmic representation after subtraction with a minimum value of the cumulative histogram.

Further, in the light receiving device, the signal processing method therefor, and the distance measuring device of the present disclosure including the preferable configuration described above, the histogram addition processing unit has a data compression/decompression function by differential encoding before and after a memory that stores the logarithmic representation data.

Further, in the light receiving device, the signal processing method therefor, and the distance measuring device of the present disclosure including the preferable configuration described above, the light receiving element includes an avalanche photodiode that operates in Geiger mode.

<Light receiving device and distance measuring device as premise of present disclosure>

Fig. 1 is a block diagram illustrating an example of a configuration of a light receiving device and a distance measuring device as a premise of the present disclosure. Here, the light receiving device and the distance measuring device as the premise of the present disclosure mean a light receiving device and a distance measuring device before the technology according to the present disclosure described later is applied. Hereinafter, the light receiving device and the distance measuring device as the premise of the present disclosure are described as a light receiving device and a distance measuring device according to a conventional technology.

[Configuration example of system]

A distance measuring device 1 according to the conventional technology includes a light source unit 20 that applies light to an object to be measured (subject) 10, a light receiving device 30 that receives reflected light from the object to be measured 10 based on pulsed light applied by the light source unit 20, and a host 40.

The light source unit 20 includes, for example, a laser light source that emits pulsed laser light having a peak wavelength in an infrared wavelength region.

The light receiving device 30 is a ToF sensor that employs a ToF method as a measurement method for measuring a distance d to the object to be measured 10, measures a flight time from when the light source unit 20 emits pulsed laser light to when the pulsed laser light reflected by the object to be measured 10 returns, and obtains the distance d on the basis of the flight time.

[Principle of distance measurement by ToF sensor]

Assuming that t [second] is a round-trip time from when the light source unit 20 emits pulsed laser light toward the object to be measured 10 to when the laser light reflected by the object to be measured 10 returns to the light receiving device 30, the light speed C is $C \approx 300$ million meters/second, so that the distance d between the object to be measured 10 and the distance measuring device 1 can be estimated as in the following equation.

$$d = C \times (t/2)$$

For example, when the reflected light is sampled at 1 gigahertz (GHz), one bin (BIN) of the histogram is the number of SPAD elements per pixel in which light is detected in a period of one nanosecond. Then, the distance measurement resolution is 15 cm per bin.

The host 40 may be an engine control unit (ECU) mounted on an automobile or the like, for example, in a case where the distance measuring device 1 is mounted on the automobile or the like and used. In addition, in a case where the distance measuring device 1 is mounted on an autonomous mobile robot such as a domestic pet robot or an autonomous mobile object such as a robotic cleaner, an unmanned aerial vehicle, or a following transportation robot and used, the host 40 may be a control device or the like that controls the autonomous mobile object.

[Configuration example of light source unit]

The light source unit 20 includes, for example, one or a plurality of semiconductor laser diodes, and emits pulsed laser light $L_1$ having a predetermined time width at a predetermined light emission period. The light source unit 20 emits the pulsed laser light $L_1$ at least toward an angular range equal to or larger than the angle of view of the light reception surface of the light receiving device 30. Further, the light source unit 20 emits the laser light $L_1$ having a time width of one nanosecond at a cycle of 1 gigahertz (GHz), for example. For example, in a case where the object to be measured 10 is present within a distance measuring range, the laser light $L_1$ emitted from the light source unit 20 is reflected by the object to be measured 10 and enters the light reception surface of the light receiving device 30 as reflected light $L_2$.

[Configuration example of light receiving device]

The light receiving device 30 as a ToF sensor includes a control unit 31, a light receiving unit 32, an addition unit 33, a histogram addition processing unit 34, an ambient light estimation processing unit 35, a smoothing filter 36, a reflected light detection unit 37, and an external output interface (I/F) 38.

The control unit 31 is implemented by, for example, an information processing device such as a central processing unit (CPU), and controls each functional unit in the light receiving device 30.

Although details are described later, the light receiving unit 32 includes, for example, a photon counting type light receiving element that receives light from an object, for example, a single photon avalanche diode (SPAD) array unit in which pixels (hereinafter, referred to as "SPAD pixels") each including an SPAD element as a light receiving element, which is an example of an avalanche photodiode operating in Geiger mode, are two-dimensionally arranged in a matrix (lattice). The plurality of SPAD pixels of the SPAD array unit is grouped into a plurality of pixels each including one or more SPAD pixels.

One grouped pixel corresponds to one pixel in a distance measurement image. Therefore, determining the number of SPAD pixels (the number of SPAD elements) constituting one pixel and the shape of the region determines the number of pixels of the entire light receiving device 30, and accordingly, the resolution of the distance measurement image is determined.

After the light source unit 20 emits the pulsed laser light, the light receiving unit 32 outputs information (for example, corresponding to the number of detection signals described later) regarding the number of SPAD elements (hereinafter, referred to as "detection number") in which incidence of photons is detected. For example, the light receiving unit 32 detects incidence of photons at a predetermined sampling period for one light emission of the light source unit 20, and outputs the number of detected photons incident in the same pixel region for each pixel.

The addition unit 33 adds the number of detected photons outputted by the light receiving unit 32 for each of the plurality of SPAD elements (for example, corresponding to one or a plurality of pixels), and outputs the added value as a pixel value to the histogram addition processing unit 34 and the ambient light estimation processing unit 35.

Here, the value (SPAD value) of one SPAD element is 1-bit data having a value of {0, 1}. In the addition unit 33, as illustrated in Fig. 2, a plurality of SPAD pixels 50 arranged two-dimensionally is grouped for every p_h × p_w to form one pixel 60, and the sum of the SPAD values in the pixel 60 is expressed by binary numbers of ceil (log2 (p_h·p_w)) bits (here, ceil () means rounding up of a decimal) and is used as a pixel value of the pixel.

As illustrated in Fig. 2, the addition unit 33 is arranged in parallel for each pixel 60, calculates the pixel values of all the pixels 60 at the same time, and outputs the pixel values to the histogram addition processing unit 34 and the ambient light estimation processing unit 35. Fig. 2 illustrates a two-dimensional SPAD array in which a plurality of SPAD pixels 50 is grouped for every p_h × p_w to form one pixel 60.

The histogram addition processing unit 34 creates a histogram in which the horizontal axis is the flight time (for example, the number indicating the order of sampling (hereinafter, referred to as "sampling number")) and the vertical axis is a cumulative pixel value on the basis of the pixel value obtained for each of one or a plurality of pixels 60. The histogram is created, for example, in a memory (not illustrated) in the histogram addition processing unit 34. The memory can be, for example, a static random-access memory (SRAM) or the like. However, the memory is not limited to the SRAM and can be various memories such as a dynamic RAM (DRAM).

Meanwhile, in addition to the reflected light $L_2$ reflected by the object to be measured and returning, ambient light $L_0$ reflected and scattered by an object, the atmosphere, or the like is also incident on the light receiving unit 32. The ambient light estimation processing unit 35 estimates, on the basis of the addition result of the addition unit 33, the ambient light $L_0$ that is incident on the light receiving unit 32 together with the reflected light $L_2$ on the basis of the arithmetic mean, and gives the ambient light intensity estimate to the histogram addition processing unit 34. The histogram addition processing unit 34 performs processing of subtracting the ambient light intensity estimate given by the ambient light estimation processing unit 35 and adding the resultant to the histogram.

Here, the histogram addition processing is specifically described with reference to Figs. 3, 4, and 5.

Fig. 3A illustrates a histogram of reflected light of the first laser emission. As illustrated in Fig. 3B, the pixel value of the first reflected light is stored in a memory address of a bin number corresponding to the sampling time. Fig. 3C illustrates a case where the ambient light intensity estimate is subtracted and added to the histogram.

Fig. 4A illustrates a histogram of reflected light of the second laser emission. As illustrated in Fig. 4B, the pixel value of the second reflected light is added to the value stored in the memory address of the bin number corresponding to the sampling time. Fig. 4C illustrates a case where the ambient light intensity estimate is subtracted and added to the histogram.

Fig. 5A illustrates a histogram of reflected light of the third laser emission. As illustrated in Fig. 5B, the pixel value of the third reflected light is added to the value stored in the memory address of the bin number corresponding to the sampling time. Fig. 5C illustrates a case where the ambient light intensity estimate is subtracted and added to the histogram.

In the histograms of reflected light generated as described above, the bin in which the reflected light is captured is identified by repeatedly performing magnitude comparison between the count values of the histogram and magnitude comparison with a threshold such as peak detection.

The smoothing filter 36 is configured by using, for example, a finite impulse response (FIR; finite length impulse response) filter or the like to reduce shot noise, reduce the number of unnecessary peaks on the histogram, and perform smoothing processing so as to easily detect a peak of reflected light.

The reflected light detection unit 37 detects a peak of a mountain by repeating the magnitude comparison between the count values of adjacent bins of the histogram, obtains a bin of a rising edge of each mountain using a plurality of mountains having large peak values as candidates, and calculates the distance to the object to be measured on the basis of the flight time of the reflected light. At this time, a plurality of mountains may be detected; however, since the host 40 calculates a final measured distance value with reference to information of peripheral pixels, the measured distance values of the plurality of reflected light candidates are transmitted to the host 40 via the external output interface 38.

The external output interface 38 can be a mobile industry processor interface (MIPI), a serial peripheral interface (SPI), or the like.

Here, accumulation of histograms of linear representation is described. In a case where the cumulative number increases, the variance of the ambient light is proportional to the square root of the cumulative number; however, the reflected light is proportional to the cumulative number, so that S/N can be improved.

The intensity of the reflected light is inversely proportional to the square of the distance; however, the intensity of the ambient light is assumed to be a Gaussian distribution N ($\mu$, $\sigma^2$) regardless of the distance. Fig. 6A illustrates a cumulative histogram (accumulative histogram) in the case of one-time addition. Here, for easy understanding, an example is illustrated of a case where the reflected light returns to the bins 5, 100, 200, ..., and 900. Fig. 6B illustrates a cumulative histogram in the case of four-time addition, and Fig. 7A illustrates a cumulative histogram in the case of 16-time addition. Fig. 7B is a smoothed histogram after smoothing by the smoothing filter 36 in the case of 16-time addition.

In a case where variation in ambient light intensity is large and a standard deviation is large, it is difficult to discriminate the ambient light from the reflected light. The standard deviation can be used as an indicator of whether or not the ambient light and the reflected light can be discriminated from each other with high reliability. Fig. 8A illustrates a normally distributed random number and a fixed value of $\mu$ = 50 and $\sigma$ = 5, and Fig. 8B illustrates a normally distributed random number and a fixed value of $\mu$ = 50 and $\sigma$ = 15. $\mu$ and $\sigma$ are parameter values of the arithmetic mean and the standard deviation of the ambient light used to generate the random number of the normal distribution, respectively.

As described above, in the light receiving device 30 serving as the ToF sensor that uses, for example, the SPAD element as the light receiving element and performs distance measurement by the ToF method, the values of the plurality of SPAD elements are added together to be used as the pixel value; however, in order to capture reflected light by sampling the pixel value after pulsed laser emission, the pixel value is added to a histogram with bins corresponding to the sampling times. The reflected light spreads two-dimensionally as it travels, and the intensity thereof is inversely proportional to the square of the distance; therefore, by accumulating the histograms of reflected light of a plurality of times of pulsed laser emission to improve the S/N by noise averaging by synchronous addition, so that weak reflected light from a farther object to be measured can be discriminated.

[Problem of conventional technology]

However, in the case of accumulating the histograms of reflected light based on the plurality of times of laser emission, the pixel value of the intense reflected light from an object to be measured relatively close is large, and the dynamic range of the histogram increases each time the histogram is accumulated. Therefore, this increases the capacity of the memory that stores the histogram of reflected light based on the plurality of times of laser emission. In particular, during a sunny day, the ambient light becomes more intense, and most of the pixel values become large values; therefore, in order to accumulate more histograms, more bit depth of the count value of the histogram is required.

Further, as described above, it is preferable to use the standard deviation for discrimination between the reflected light and the ambient light; however, since a multiplier and a square root arithmetic unit corresponding to the number of pixels are required, which also causes a problem of increasing the circuit size and the power consumption. In addition, since the data of the histogram is excessively large, transfer to an external device in real time is difficult. In order to solve such a problem, it is possible to logarithmically transform a count value of a histogram and store the resultant in a memory for the purpose of compressing a dynamic range; however, it is necessary to inversely transform the logarithmically transformed value and to perform logarithmic transformation again after accumulation of pixel values, which increases the power consumption.

Fig. 9A illustrates a waveform diagram illustrating a logarithm of accumulation of a histogram (indicated by a dotted line) in the case of a conventional technology and accumulation of a histogram of pixel values in logarithmic representation (indicated by a solid line). Further, Fig. 9B illustrates a waveform diagram illustrating a logarithm of accumulation of a histogram of a value obtained by subtracting arithmetic mean $\mu$ of ambient light (indicated by a dotted line) in the case of a conventional technology and accumulation of a histogram of pixel values in logarithmic representation of a value obtained by subtracting arithmetic mean $\mu$ of ambient light (indicated by a solid line).

<First embodiment of the present disclosure>

In the technology according to the present disclosure, in a light receiving device that includes a light receiving unit having a plurality of light receiving elements, for example, SPAD elements arranged, and receives reflected light from an object to be measured based on pulsed light applied by a light source unit, and a distance measuring device including the light receiving device, values of the plurality of SPAD elements at a predetermined time are added together to be used as a pixel value D, and the pixel value D is transformed into a logarithmic value or an approximate value thereof to obtain logarithmic representation data LogD.

Accumulating a histogram of pixel values in logarithmic representation is equivalent to calculating an amount proportional to the geometric mean. By using this, logarithmic transformation is performed on the pixel value D and calculation is performed as it is. That is, the signal processing after the logarithmic transformation is executed in the logarithmic representation, and distance measurement for measuring the distance d to the object to be measured 10 is performed.

In the signal processing after the logarithmic transformation, the dynamic range of the histogram can be compressed by accumulating the histograms of the pixel values in logarithmic representation, which can reduce the memory capacity. Further, in the signal processing after the logarithmic transformation, arithmetic processing is simplified by using the fact that the arithmetic mean on the logarithmic representation is equal to the logarithmic representation of the geometric mean.

Fig. 10 illustrates a waveform diagram illustrating a logarithm of accumulation of a histogram (indicated by a dotted line) in the case of the technology according to the present disclosure and accumulation of a histogram of pixel values in logarithmic representation (indicated by a solid line). Further, Fig. 11 illustrates a waveform diagram illustrating a logarithm of accumulation of a histogram of a value obtained by subtracting arithmetic mean $\mu$ of an ambient light (indicated by a dotted line) in the case of the technology according to the present disclosure and accumulation of a histogram of pixel values in logarithmic representation of a value obtained by subtracting arithmetic mean $\mu$ of ambient light (indicated by a solid line).

Hereinafter, specific examples of the light receiving device and the distance measuring device according to the first embodiment of the present disclosure are described. The distance measuring device according to the first embodiment is a so-called flash type distance measuring device in which pixels including the SPAD elements are two-dimensionally arranged in a matrix and a wide-angle distance measurement image is acquired at a time.

<<Example 1>>

Example 1 is an example of obtaining logarithmic representation data after subtracting a predetermined value M from a pixel value D. For example, as the predetermined value M, arithmetic mean $\mu$ of the ambient light can be exemplified. Fig. 12 is a block diagram illustrating a configuration example of a light receiving device and a distance measuring device according to Example 1 of the first embodiment of the present disclosure.

In Example 1, a value (D-M) obtained by subtracting the predetermined value M from the pixel value D is transformed into a logarithmic value or an approximate value thereof to obtain logarithmic representation data Log (D-M). Then, the logarithmic representation data Log (D-M) is stored and calculated to perform distance measurement. However, in a case where $D < M$, the transformation into a logarithmic value or an approximate value thereof is performed with D-M as 0.

$$LogD = \log_2(1 + Max(D - M, 0)$$

Here, the flow of a signal processing method (signal processing method of the present disclosure) in the light receiving device according to Example 1 is described with reference to the flowchart of Fig. 13. It is assumed that the signal processing is executed, for example, under the control of the control unit 31 implemented by an information processing device such as a CPU.

The control unit 31 acquires the pixel value D from the addition unit 33 (step S11), then subtracts the predetermined value M from the pixel value D (step S12), and transforms the subtraction result (D-M) into a logarithmic value or an approximate value thereof to obtain the logarithmic representation data Log (D-M) (step S13). Next, the control unit 31 stores and computes the logarithmic representation data Log (D-M) (step S14), and then performs distance measurement of measuring the distance d to the object to be measured 10 using the ToF method (step S15).

Here, the predetermined value M is an ambient light intensity estimate (AMP·U + OFFSET) obtained by multiplying a statistical value U by a predetermined multiplier AMP and adding, to the resultant, a predetermined addend OFFSET. The statistical value U can be arithmetic mean of the pixel values in an ambient light acquisition period, geometric mean of the pixel values, a maximum value of the pixel values, a minimum value of the pixel values, a median of the pixel values, or the like. In Example 1, only the arithmetic mean and the geometric mean are exemplified; however, the maximum value, the minimum value, the median, and the like can be used to calculate statistical values in a similar period at a similar portion. Further, another configuration is possible in which, in a case where the predetermined multiplier AMP is 1 and the predetermined addend OFFSET is 0, the statistical value U itself is used as the predetermined value M.

[Configuration example of system]

A distance measuring device 1 according to Example 1 includes a light source unit 20 that applies light to an object to be measured (subject) 10, a light receiving device 30 that receives reflected light from the object to be measured 10 based on pulsed light applied by the light source unit 20, and a host 40. The light source unit 20 includes, for example, a laser light source that emits laser light having a peak wavelength in an infrared wavelength region.

The light receiving device 30 is a ToF sensor employing the ToF method as a measurement method for measuring the distance d to the object to be measured 10, and includes a logarithmic transformation processing unit 61, an ambient light estimation processing unit 62 in logarithmic representation, a histogram addition processing unit 63 in logarithmic representation, a smoothing filter 64 in logarithmic representation, a logarithmic transformation unit 65, and a reflected light detection unit 66 in logarithmic representation, in addition to the control unit 31, the light receiving unit 32, the addition unit 33, and the external output interface 38.

[Schematic configuration example of light receiving unit]

Fig. 14 is a block diagram illustrating a schematic configuration example of the light receiving unit 32 in the light receiving device 30 according to Example 1. The schematic configuration example of the light receiving unit 32 is similar in each of the examples described later.

As illustrated in Fig. 2, the light receiving unit 32 includes a timing control circuit 321, a drive unit 322, an SPAD array unit 323, and an output unit 324.

The SPAD array unit 323 includes the plurality of SPAD pixels 50 arranged two-dimensionally in a matrix. A pixel drive line LD (row direction in the drawing) is connected, for each pixel row, to the plurality of SPAD pixels 50, and an output signal line LS (column direction in the drawing) is connected, for each pixel column, to the plurality of SPAD pixels 50. One end of the pixel drive line LD is connected to an output end corresponding to each row of the drive unit 322, and one end of the output signal line LS is connected to an input end corresponding to each column of the output unit 324.

The drive unit 322 includes a shift register and an address decoder, and drives each pixel 50 of the SPAD array unit 323 at the same time for all pixels, in units of pixel columns, or the like. Specifically, the drive unit 322 includes at least a circuit unit that applies a quench voltage $V_{QCH}$, described later, to each pixel 50 in a selected column in the SPAD array unit 323, and a circuit unit that applies a selection control voltage $V_{SEL}$, described later, to each pixel 50 in the selected column. Then, the drive circuit 322 applies the selection control voltage $V_{SEL}$ to the pixel drive line LD corresponding to a pixel column to be read out; thereby selects, in units of pixel columns, the SPAD pixels 50 used for detecting incidence of photons.

A signal (hereinafter, referred to as a "detection signal") $V_{OUT}$ outputted from each SPAD pixel 50 of the pixel column selectively scanned by the drive circuit 322 is supplied to the output unit 324 through each of the output signal lines LS. The output unit 324 outputs the detection signal $V_{OUT}$ supplied from each SPAD pixel 50 to the addition unit 33 (see Fig. 13) including one or more SPAD pixels 50 and provided for each pixel 60 described above.

The timing control unit 321 includes a timing generator that generates various timing signals or the like, and controls the drive unit 322 and the output unit 324 on the basis of the various timing signals generated by the timing generator.

(Schematic configuration example of SPAD array unit)

Fig. 15 is a schematic diagram illustrating a schematic configuration example of the SPAD array unit 323 in the light receiving unit 32 of the light receiving device 30 according to Example 1. The schematic configuration example of the SPAD array unit 323 is similar in each of the examples described later.

As illustrated in Fig. 15, the SPAD array unit 323 includes, for example, the plurality of SPAD pixels 50 arranged two-dimensionally in a matrix. The plurality of SPAD pixels 50 is grouped into a plurality of pixels 60 constituted by a predetermined number of SPAD pixels 50 arranged in the row direction and/or the column direction. The shape of a region connected by the outer edges of the SPAD pixels 50 located at the outermost periphery of each pixel 60 is a predetermined shape (for example, a rectangle). The shape can be a two-dimensional arrangement in units of pixels in which pixels are arranged in the row direction, and in such a case, one row is selected and read out in units of rows.

(Circuit configuration example of SPAD pixel)

Fig. 16 is a circuit diagram illustrating a circuit configuration example of the pixel 50 in the SPAD array unit 323 of the light receiving device 30 according to Example 1. The schematic configuration example of the circuit configuration example of the SPAD pixel 50 is similar in each of the examples described later.

As illustrated in Fig. 16, the SPAD pixel 50 includes an SPAD element 51, which is an example of the light receiving element, and a readout circuit 52 which detects incidence of photons on the SPAD element 51. The SPAD element 51 generates an avalanche current when photons are incident in a state where a reverse bias voltage $V_{SPAD}$ equal to or higher than a breakdown voltage is applied between the anode electrode and the cathode electrode.

The readout circuit 52 includes a quench resistor 53, a selection transistor 54, a digital converter 55, an inverter 56, and a buffer 57.

The quench resistor 53 is, for example, an N-type metal oxide semiconductor field effect transistor (MOSFET). (Hereinafter, referred to as an "NMOS transistor"). The NMOS transistor constituting the quench resistor 53 has a drain electrode connected to an anode electrode of the SPAD element 51 and has a source electrode grounded via the selection transistor 54. Further, a quench voltage $V_{QCH}$ set in advance for causing the NMOS transistor constituting the quench resistor 53 to act as a quench resistor is applied to the gate electrode of the NMOS transistor from the drive unit 322 in Fig. 14 via the pixel drive line LD.

The SPAD element 51 is an avalanche photodiode that operates in Geiger mode in response to a reverse bias voltage equal to or higher than a breakdown voltage applied between the anode electrode and the cathode electrode, and can detect incidence of one photon.

The selection transistor 54 is constituted by, for example, an NMOS transistor, and a drain electrode thereof is connected to a source electrode of the NMOS transistor constituting the quench resistor 53, and the source electrode is grounded. In a case where the selection control voltage $V_{SEL}$ is applied from the drive unit 322 of Fig. 14 to the gate electrode of the selection transistor 54 via the pixel drive line LD, the selection transistor 54 changes from the off-state to the on-state.

The digital converter 55 includes a resistive element 551 and an NMOS transistor 552. The NMOS transistor 552 has a drain electrode connected to a node of a power supply voltage $V_{DD}$ via the resistive element 551 and has a source electrode grounded. Further, the gate electrode of the NMOS transistor 552 is connected to a connection node $N_1$ between the anode electrode of the SPAD element 51 and the quench resistor 53.

The inverter 56 has a configuration of a CMOS inverter including a P-type MOSFET (hereinafter, referred to as a "PMOS transistor") 561 and an NMOS transistor 562. The PMOS transistor 561 has a drain electrode connected to the node of the power supply voltage $V_{DD}$ and has a source electrode connected to the drain electrode of the NMOS transistor 562. The NMOS transistor 562 has a drain electrode connected to the source electrode of the PMOS transistor 561 and has a source electrode grounded. The gate electrode of the PMOS transistor 561 and the gate electrode of the NMOS transistor 562 are commonly connected to a connection node $N_2$ between the resistive element 551 and the drain electrode of the NMOS transistor 552. An output terminal of the inverter 56 is connected to an input terminal of the buffer 57.

The buffer 57 is a circuit for impedance conversion, and the buffer 57 converts, in response to the output signal inputted from the inverter 56, the impedance of the output signal thus inputted and outputs the resultant as the detection signal $V_{OUT}$.

(Schematic operation example of SPAD pixel)

The readout circuit 52 illustrated in Fig. 16 operates, for example, as follows. That is, first, during a period in which the selection control voltage $V_{SEL}$ is applied from the drive unit 322 of Fig. 14 to the gate electrode of the selection transistor 54 and the selection transistor 24 is in the on-state, the reverse bias voltage $V_{SPAD}$ equal to or higher than the breakdown voltage is applied to the SPAD element 51. As a result, the operation of the SPAD element 51 is permitted.

On the other hand, in a period in which the selection control voltage $V_{SEL}$ is not applied from the drive unit 322 of Fig. 14 to the selection transistor 54 and the selection transistor 54 is in the off-state, the reverse bias voltage $V_{SPAD}$ is not applied to the SPAD element 51. Therefore, the operation of the SPAD element 51 is prohibited.

When photons are incident on the SPAD element 51 while the selection transistor 54 is in the on-state, an avalanche current is generated in the SPAD element 51. As a result, the avalanche current flows through the quench resistor 53 to increase the voltage of the connection node $N_1$. Then, if the voltage of the connection node $N_1$ becomes higher than the on-voltage of the NMOS transistor 552, then the NMOS transistor 552 is turned on, and the voltage of the connection node $N_2$ changes from the power supply voltage $V_{DD}$ to 0 V.

Then, if the voltage of the connection node $N_2$ changes from the power supply voltage $V_{DD}$ to 0 V, the PMOS transistor 561 changes from the off-state to the on-state, the NMOS transistor 562 changes from the on-state to the off-state, and the voltage of the connection node $N_3$ changes from 0 V to the power supply voltage $V_{DD}$. As a result, the high-level detection signal $V_{OUT}$ is outputted from the buffer 77.

Thereafter, if the voltage of the connection node $N_1$ continues to increase, the voltage applied between the anode electrode and the cathode electrode of the SPAD element 51 becomes smaller than the breakdown voltage. This stops the avalanche current to decrease the voltage of the connection node $N_1$. Then, if the voltage of the connection point $N_1$ becomes lower than the on-voltage of the NMOS transistor 552, then the NMOS transistor 552 is turned off, and the output of the detection signal $V_{OUT}$ from the buffer 57 is stopped. That is, the detection signal $V_{OUT}$ goes to a low level.

As described above, the readout circuit 52 outputs the high-level detection signal $V_{OUT}$ during a period from the timing at which the photon enters the SPAD element 51 to generate the avalanche current and then to turn on the NMOS transistor 552 to the timing at which the avalanche current stops to turn off the NMOS transistor 552.

The detection signal $V_{OUT}$ outputted from the readout circuit 52 is inputted to the addition unit 33 (see Fig. 14) for each pixel 60 via the output unit 324 in Fig. 14. Therefore, the detection signal $V_{OUT}$ of the number (detection number) of SPAD pixels 50 in which incidence of photons is detected among the plurality of SPAD pixels 50 constituting one pixel 60 is inputted to the addition unit 33 for each pixel 60.

[Configuration example of addition unit]

Fig. 17 is a block diagram illustrating a configuration example of the addition unit 33 in the light receiving device 30 according to Example 1. As illustrated in Fig. 17, the addition unit 33 includes, for example, a pulse shaping unit 331 and a light reception number counting unit 332. The configuration example of the addition unit 33 is similar in each of the examples described later.

The pulse shaping unit 331 shapes the pulse waveform of the detection signal $V_{OUT}$ supplied from the SPAD array unit 322 illustrated in Fig. 14 via the output unit 324 into a pulse waveform having a time width according to an operating clock of the addition unit 33.

The light reception number counting unit 332 counts the detection signal $V_{OUT}$ inputted from the corresponding pixel 60 for each sampling period; thereby counts the number of pixels 50 in which incidence of photons is detected (detection number) for each sampling period, and outputs the counted value as the pixel value D of the pixel 60.

Note that, among the pixel values D [i] [8 : 0] in Fig. 17, [i] is an identifier for identifying each SPAD pixel 50, and in this example, is a value from "0" to "R-1" (see Fig. 15). Further, [8 : 0] indicates the bit depth of the pixel value D [i].

Fig. 17 illustrates that the addition unit 33 generates a 9-bit pixel value D that can take values of "0" to "511" on the basis of the detection signal $V_{OUT}$ inputted from the pixel 60 identified by the identifier i.

Here, the sampling period is a period to measure a time (flight time) from when the light source unit 20 emits the laser light $L_1$ to when the light receiving unit 32 of the light receiving device 30 detects incidence of photons. As the sampling period, a period shorter than the light emission period of the light source unit 20 is set. For example, the sampling period is further shortened, which makes it possible to estimate or calculate, with higher time resolution, the flight time of the photons emitted from the light source unit 20 and reflected by the object to be measured 10. This means that the distance to an object 90 can be estimated or calculated with higher distance measurement resolution by increasing the sampling frequency.

For example, assuming that a flight time from when the light source unit 20 emits the laser light $L_1$ to when the laser light $L_1$ is reflected by the object to be measured 10 and the reflected light $L_2$ enters the light receiving unit 32 is denoted by t, the distance d to the object to be measured 10 can be estimated or calculated from the above-described equation (d = C × (t/2)) because the light speed C is constant (C ≈ 300 million meters/second).

In view of this, assuming that the sampling frequency is 1 gigahertz, the sampling period is one nanosecond. In that case, one sampling period corresponds to 15 cm. This indicates that the distance measurement resolution is 15 cm for a case where the sampling frequency is set at 1 gigahertz. Further, assuming that the sampling frequency is 2 gigahertz, which is twice as many as 1 gigahertz, the sampling period is 0.5 nanoseconds, and thus one sampling period corresponds to 7.5 cm. This indicates that the distance measurement resolution can be reduced to 1/2 for a case where the sampling frequency is doubled. As described above, the distance to the object to be measured 10 can be estimated or calculated more precisely by increasing the sampling frequency and shortening the sampling period.

[Configuration example of logarithmic transformation processing unit]

Fig. 18 is a block diagram illustrating a configuration example of the logarithmic transformation processing unit 61 in the light receiving device 30 according to Example 1.

The logarithmic transformation processing unit 61 receives an input of the pixel value D from the addition unit 33 via a D-flip-flop (FF) 71. The D-flip-flop 71 is enabled during a period when the histogram is updated and during a period when the ambient light intensity estimate that is the predetermined value M is acquired.

As illustrated in Fig. 18, the logarithmic transformation processing unit 61 includes a subtractor 611, a clip circuit 612, a logarithmic transformation unit 613, a selector 614, a logarithmic/linear representation setting unit 615, and a D-flip-flop 616.

The subtractor 611 subtracts the predetermined value M (estimated ambient light intensity estimate) from the pixel value D inputted from the addition unit 33 in the ambient light estimation processing unit 62 in logarithmic representation. The subtraction result (D-M) of the subtractor 611 is supplied to the logarithmic transformation unit 613 via the clip circuit 612 and is used as one input of the selector 614.

The logarithmic transformation unit 613 transforms the subtraction result (D-M) obtained by subtracting the predetermined value M from the pixel value D into a logarithmic value or an approximate value thereof to obtain logarithmic representation data Log (D-M). However, in a case where D < M, the transformation into a logarithmic value or an approximate value thereof is performed with D-M as 0. The logarithmic representation data Log (D-M) is used as the other input of the selector 614.

The selector 614 selects one of the two inputs on the basis of setting information lsel from the logarithmic/linear representation setting unit 615. The logarithmic/linear representation setting unit 615 outputs the setting information lsel that is logical "0" in logarithmic representation and logical "1" in linear representation.

Thereby, the selector 614 selects the logarithmic representation data Log (D-M) or the pixel value D of the linear representation on the basis of the setting information lsel. That is, the light receiving device 30 including the logarithmic transformation processing unit 61 according to this example has a mode in which distance measurement is performed by processing (storing and calculating) logarithmic representation data LogD obtained by transforming the pixel value D into a logarithmic value or an approximate value thereof, and a mode in which distance measurement is performed by processing (storing and calculating) the pixel value as linear representation, and the light receiving device 30 is configured to switch between the modes.

The logarithmic representation data Log (D-M) or the pixel value D of the linear representation selected by the selector 614 is supplied to the histogram addition processing unit 63 in the next-stage logarithmic representation via the D-flip-flop 616. The D-flip-flop 616 is enabled during the period when the histogram is updated.

[Configuration example of ambient light estimation processing unit in logarithmic representation]

Fig. 19 is a block diagram illustrating a configuration example of the ambient light estimation processing unit 62 in logarithmic representation in the light receiving device 30 according to Example 1. Note that the ambient light estimation processing unit 62 in logarithmic representation is not an essential constituent element for the light receiving device 30 according to Example 1. That is, in a case where the predetermined value M (ambient light intensity estimate) is not subtracted from the pixel value D, the ambient light estimation processing unit 62 in logarithmic representation can be omitted.

The ambient light estimation processing unit 62 in logarithmic representation receives an input of the pixel value D from the addition unit 33 via the D-flip-flop 71. The D-flip-flop 71 is enabled during the period when the histogram is updated and during the period when the ambient light intensity estimate is acquired.

As illustrated in Fig. 19, the ambient light estimation processing unit 62 in logarithmic representation includes a logarithmic transformation unit 6201, a selector 6202, an arithmetic/geometric mean setting unit 6203, an adder 6204, a D-flip-flop 6205, a divider 6206, and a D-flip-flop 6207. The ambient light estimation processing unit 62 further includes a selector 6208, a parameter setting unit 6209, an adder 6210, a parameter setting unit 6211, a D-flip-flop 6212, an inverse transformation unit 6213, a 1-bit left shift circuit 6214, and a selector 6215.

The pixel value D inputted from the addition unit 33 is transformed into a logarithmic value or an approximate value thereof by the logarithmic transformation unit 6201, and is used as one input of the selector 6202 and directly used as the other input of the selector 6202.

The selector 6202 selects one of the two inputs on the basis of setting information msel from the arithmetic/geometric mean setting unit 6203. The arithmetic/geometric mean setting unit 6203 outputs the setting information msel that is logical "0" in arithmetic mean and logical "1" in geometric mean. Thereby, the selector 6202 selects the pixel value D or the logarithmic representation data LogD on the basis of the setting information msel.

The pixel value D or the logarithmic representation data LogD selected by the selector 6202 is inputted to the adder 6204. The adder 6204 adds the pixel value D or the logarithmic representation data LogD and latch data of the D-flip-flop 6205 of the next stage. The D-flip-flop 6205 is enabled only during the measurement period of the statistical value of the ambient light.

The divider 6206 obtains a statistical value of the ambient light by dividing the latch data of the D-flip-flop 6205 by the number N of data. The D-flip-flop 6207 is enabled for only one cycle at the end of each measurement period of the statistical value of the ambient light, and latches the statistical value of the ambient light which is the geometric mean or the arithmetic mean obtained by the divider 6206.

The statistical value U [7 : 0] which is the geometric mean or the arithmetic mean latched by the D-flip-flop 6207 is the other input of the selector 6208 having 0 as one input. The selector 6208 selects one of the two inputs on the basis of a predetermined multiplier AMP [7 : 0] set by the parameter setting unit 6209 and uses the selected input as an input to the adder 6210. The adder 6210 repeats addition processing of the data selected by the selector 6208 and the output data of the 1-bit shift circuit 6214 for the same number of times as the bit depth of the multiplier AMP on the basis of a predetermined addend OFFSET [7 : 0] set by the parameter setting unit 6211.

After the measurement period of the statistical value of the ambient light ends and the statistical value U [7 : 0] is latched, the D-flip-flop 6212 is enabled in the same cycle as the bit depth of the multiplier AMP [7 : 0] and the addend OFFSET [7 : 0], and calculates AMP [7 : 0] $\times$ U [7 : 0] + OFFSET [7 : 0]. Fig. 20 illustrates an explanatory diagram of calculation processing in the ambient light estimation processing unit 62 in logarithmic representation, that is, calculation processing of AMP [7 : 0] $\times$ U [7 : 0] + OFFSET [7 : 0] .

The latch data of the D-flip-flop 6212 is inversely transformed (subjected to inverse logarithmic transformation) by the inverse transformation unit 6213 to become one input of the selector 6215 and directly become the other input of the selector 6215.

The selector 6215 selects one of the two inputs on the basis of setting information msel from the arithmetic/geometric mean setting unit 6203. Specifically, the selector 6215 selects the latch data of the D-flip-flop 6212 when the setting information msel is logic "0", and selects the output data of the inverse transformation unit 6213 when the setting information msel is logic "1", and outputs the selected output data to the logarithmic transformation processing unit 61.

[Configuration example of histogram addition processing unit in logarithmic representation]

The histogram addition processing unit 63 correlates the flight time from the emission of the laser light from the light source unit 20 to the return of the reflected light as a bin of the histogram, and stores logarithmic representation data calculated on the basis of the pixel value sampled at each time in the memory as a count value of the bin corresponding to the time.

It is assumed that, as for the histogram addition processing unit 63, the histogram is updated by adding the logarithmic representation data LogD of each time of the reflected light from the object to be measured based on the laser emission performed a plurality of times to the count value of the bin corresponding to the time. Then, distance measurement calculation is performed using a histogram obtained by accumulating count values calculated on the basis of the pixel values obtained by receiving reflected light based on the laser emission performed a plurality of times.

With this arrangement, it is possible to reduce the bit depth of the memory storing the histogram or expand the dynamic range of the histogram at the time of accumulation. Further, a logarithmic value of the geometric mean can be calculated. Performing logarithmic quantization reduces variation due to large noise. Hereinafter, the configuration of the histogram addition processing unit 63 is specifically described.

Fig. 21 is a block diagram illustrating a configuration example of the histogram addition processing unit 63 in logarithmic representation in the light receiving device 30 according to Example 1. As illustrated in Fig. 21, the histogram addition processing unit 63 includes an adder 631, a D-flip-flop 632, an SRAM 633, a D-flip-flop 634, an adder (+ 1) 635, a D-flip-flop 636, and a D-flip-flop 637.

Here, the SRAM 633 to which the read address READ_ADDR (RA) is inputted and the SRAM 633 to which the write address WRITE_ADDR (WA) is inputted are the identical SRAM (memory). The latter SRAM 633 is enabled during the period when the histogram is updated.

The histogram addition processing unit 63 receives an input of the logarithmic representation data Log (D-M) or the pixel value D of the linear representation from the logarithmic transformation processing unit 61. The adder 631 adds the read data READ_DATA (RD) from the SRAM 633 to the inputted logarithmic representation data Log (D-M) or the inputted pixel value D of the linear representation.

The D-flip-flop 632 is enabled during the period when the histogram is updated and latches the addition result of the adder 631. The D-flip-flop 632 then supplies the latched data to the SRAM 633 to which the write address WA is inputted as the write data WRITE_DATA (WD).

The D-flip-flop 632 is enabled during the period when the histogram is updated and during the transfer period of histogram data HIST_DATA. The D-flip-flop 632 then supplies the latched data to the SRAM 633 as the read address READ_ADDR. The adder 634 increments the bin (BIN) by adding 1 to the latch data of the D-flip-flop 632.

The read data READ_DATA read out from the SRAM 633 is outputted as the histogram data HIST_DATA. The D-flip-flop 636 is enabled during the period when the histogram is updated and latches the latch data of the D-flip-flop 634. The D-flip-flop 637 is enabled during the period when the histogram is updated and latches the latch data of the D-flip-flop 636. The latch data of the D-flip-flop 637 is outputted as a histogram bin HIST_BIN.

Fig. 22 is an explanatory diagram of logarithmic transformation and inverse transformation. Logarithmic transformation and exponential transformation are performed using polyline approximation. In a case where the logarithmic representation is represented by a fixed-point number of u3.3 (u is the minimum unit of rounding error) and the inversely transformed linear representation is represented by a fixed-point number of u8.0, it can be implemented simply like the hardware language VerilogHDL code illustrated in Fig. 23.

$$\log_2 1 + x : u8.0 \rightarrow u3.3(LOG2)$$

$$2^x - 1 : u3.3 \rightarrow u8.0(EXP2)$$

The description goes back to Fig. 13. In Fig. 13, the smoothing filter 64 performs smoothing processing in logarithmic representation on the cumulative histogram of the logarithmic representation outputted from the histogram addition processing unit 63. Specifically, the smoothing filter 64 reduces shot noise, reduces the number of peaks on the histogram, and performs smoothing processing so that a peak of reflected light is easily detected.

The logarithmic transformation unit 65 further logarithmically transforms and compresses the cumulative histogram of the logarithmic representation smoothed by the smoothing filter 64. Details of the processing of the logarithmic transformation unit 65 are described later.

The reflected light detection unit 66 detects the peak of the mountain by repeating the magnitude comparison between the count values of adjacent bins of the histogram in the logarithmic representation. Then, a plurality of mountains having large peak values is used as candidates, a bin of a rising edge of each mountain is obtained, and the distance to the object to be measured is calculated on the basis of the flight time of the reflected light.

Further, the reflected light detection unit 66 compares magnitudes between the count values of the histogram with values obtained by inverse logarithmic transformation (transformed into exponential function, value returned to linear representation by power of two, or approximate value thereof) from logarithmic representation to detect peaks of the respective reflected lights. Then, the distance can be calculated on the basis of the time corresponding to the bin at the start of the rise of the peak.

An output waveform of the adder 33 is illustrated in Fig. 24A, an output waveform of the logarithmic transformation processing unit 61 is illustrated in Fig. 24B, an output waveform of the histogram addition processing unit 63 in logarithmic representation is illustrated in Fig. 25A, an output waveform of the smoothing filter 64 in logarithmic representation is illustrated in Fig. 25B, and an output waveform of the logarithmic transformation unit 65 is illustrated in Fig. 26.

Here, the description goes on to accumulation of histograms of pixel values of logarithmic representation for a case where the predetermined value M is not subtracted from the pixel value D (that is, a case where the ambient light intensity estimate is arithmetic mean), and accumulation of histograms of pixel values of logarithmic representation in a case where the predetermined value M is subtracted from the pixel value D.

(Case where arithmetic mean of ambient light is not subtracted from pixel value D)

Fig. 27A illustrates a cumulative histogram in the case of one-time addition, Fig. 27B illustrates a cumulative histogram in the case of four-time addition, and Fig. 28A illustrates a cumulative histogram in the case of 16-time addition. Further, Fig. 28B illustrates a smoothed histogram after smoothing by the smoothing filter 64 in logarithmic representation in the case of 16-time addition.

(Case where arithmetic mean of ambient light is subtracted from pixel value D)

Fig. 29A illustrates a cumulative histogram in the case of one-time addition, Fig. 29B illustrates a cumulative histogram in the case of four-time addition, and Fig. 30A illustrates a cumulative histogram in the case of 16-time addition.

Further, Fig. 30B illustrates a smoothed histogram after smoothing by the smoothing filter 64 in logarithmic representation in the case of 16-time addition.

<<Example 2>>

Example 2 is an example of obtaining logarithmic representation data by transforming the pixel value D into a logarithmic value or an approximate value thereof and then subtracting the predetermined value M in logarithmic representation) Fig. 31 is a block diagram illustrating a configuration example of a light receiving device and a distance measuring device according to Example 2 of the first embodiment of the present disclosure.

In Example 2, a value is obtained by subtracting logarithmic representation data LogM obtained by transforming the predetermined value M (arithmetic mean of the ambient light, for example) into a logarithmic value or an approximate value thereof from logarithmic representation data LogD2 obtained by transforming the pixel value D into a logarithmic value or an approximate value thereof. This means calculating the logarithm of the normalized one so that M is calculated to be 1. Then, the logarithmic representation data LogD(= LogD2 - LogM) is stored and calculated to perform distance measurement.

$$\mathrm{LogD2} = \log_2(1 + \mathrm{D2})$$

$$\mathrm{LogM} = \log_2(1 + \mathrm{M})$$

$$\mathrm{LogD} = \log_2(1 + \mathrm{D2}) - \log_2(1 + \mathrm{M})$$

[Configuration example of system]

The distance measuring device 1 according to Example 2 also includes the light source unit 20 that applies light to the object to be measured (subject) 10, the light receiving device 30 that receives reflected light from the object to be measured 10 based on pulsed light applied by the light source unit 20, and the host 40.

As for the light receiving device 30 that is the ToF sensor employing the ToF method, in Example 1, the ambient light estimation processing unit 62 in logarithmic representation is arranged in parallel with the logarithmic transformation processing unit 61 and logarithmic transformation is performed after subtraction of the predetermined value M (arithmetic mean of the ambient light, for example) from the pixel value D, whereas in Example 2, an ambient light estimation processing unit 67 based on geometric mean is arranged at the subsequent stage of the logarithmic transformation processing unit 61.

The logarithmic transformation processing unit 61 generates the logarithmic representation data LogD2 obtained by transforming the pixel value D inputted from the addition unit 33 into a logarithmic value or an approximate value thereof. The ambient light estimation processing unit 67 based on geometric mean generates logarithmic representation data LogM obtained by transforming the predetermined value M (arithmetic mean of the ambient light, for example) into a logarithmic value or an approximate value thereof. Then, the histogram addition processing unit 63 in logarithmic representation subtracts the logarithmic representation data LogM from the logarithmic representation data LogD2 to generate logarithmic representation data LogD (= LogD2 - LogM).

Configurations other than the logarithmic transformation processing unit 61, the ambient light estimation processing unit 67 based on geometric mean, and the histogram addition processing unit 63 in logarithmic representation are the same as those in the case of Example 1. In Example 2, since subtraction (LogD2-LogM) is performed in logarithmic representation and division is performed when returning to linear, normalization is performed such that the arithmetic mean of the ambient light becomes 1.

Considering only that the input range is reduced by logarithmic compression, it can be expected that the functions and effects of the processing in the subsequent stage are similar to those in the case of Example 1. However, in the case of Example 2, more bit depth of the fractional part of the fixed-point number representation of the logarithmic transformation and the inverse transformation is required more than in the case of Example 1.

[Configuration example of logarithmic transformation processing unit]

Fig. 32A is a block diagram illustrating a configuration example of the logarithmic transformation processing unit 61 in the light receiving device 30 according to Example 2.

In the light receiving device 30 according to Example 2, since the logarithmic transformation processing unit 61 does not perform the processing of subtracting the predetermined value M from the pixel value D, the logarithmic transformation processing unit 61 does not include the subtractor 611 and the clip circuit 612 in Fig. 18; however, includes the logarithmic transformation unit 613, the selector 614, the logarithmic/linear representation setting unit 615, and the D-flip-flop 616 as illustrated in Fig. 32 A.

The functions and the like of the logarithmic transformation unit 613, the selector 614, the logarithmic/linear representation setting unit 615, and the D-flip-flop 616 are basically the same as those in the case of Example 1. The D-flip-flop 616 is enabled during the period when the histogram is updated, latches the logarithmic representation data LogD or the pixel value D of the linear representation selected by the selector 614, and outputs the latch data (LogD or D) as the output of the logarithmic transformation processing unit 61.

[Configuration example of ambient light estimation processing unit based on geometric mean]

Fig. 32B is a block diagram illustrating a configuration example of the ambient light estimation processing unit 67 based on geometric mean in the light receiving device 30 according to Example 2. Note that the ambient light estimation processing unit 62 in logarithmic representation is not an essential constituent element for the light receiving device 30 according to Example 2. That is, in a case where the ambient light intensity estimate is not subtracted from the pixel value D, the ambient light estimation processing unit 62 in logarithmic representation can be omitted.

As illustrated in Fig. 32B, the ambient light estimation processing unit 67 based on geometric mean in the light receiving device 30 according to Example 2 includes the adder 6204, the D-flip-flop 6205, the divider 6206, and the D-flip-flop 6207. The ambient light estimation processing unit 67 further includes the selector 6208, the parameter setting unit 6209, the adder 6210, the parameter setting unit 6211, the D-flip-flop 6212, and the 1-bit left shift circuit 6214.

The ambient light estimation processing unit 67 receives an input of the pixel value D or the logarithmic representation data LogD from the logarithmic transformation processing unit 61. The adder 6204 adds the pixel value D or the logarithmic representation data LogD inputted from the logarithmic transformation processing unit 61 and the latch data of the D-flip-flop 6205 of the next stage. The D-flip-flop 6205 is enabled only during the measurement period of the statistical value of the ambient light.

The divider 6206 obtains a statistical value of the ambient light by dividing the latch data of the D-flip-flop 6205 by the number N of data. The D-flip-flop 6207 is enabled for only one cycle after the completion of the measurement period of the statistical value of the ambient light, and latches the statistical value of the ambient light obtained by the divider 6206. The statistical value of the ambient light, which is the output of the D-flip-flop 6207, is the logarithm of the geometric mean at the time of the previous (1-1 -th) histogram addition. The selector 6208 and the subsequent parts are basically similar to the case of the ambient light estimation processing unit 62 in logarithmic representation illustrated in Fig. 19.

[Configuration example of histogram addition processing unit in logarithmic representation]

Fig. 33 is a block diagram illustrating a configuration example of the histogram addition processing unit 63 in logarithmic representation in the light receiving device 30 according to Example 2.

In the light receiving device 30 according to Example 2, since the histogram addition processing unit 63 in logarithmic representation performs subtraction processing of the ambient light intensity estimate, the histogram addition processing unit 63 includes a subtractor 638 and a clip circuit 639 in addition to the constituent elements of the histogram addition processing unit 63 of Example 1.

Here, the SRAM 633 to which the read address READ_ADDR (RA) is inputted and the SRAM 633 to which the write address WRITE_ADDR (WA) is inputted are the identical SRAM (memory). The latter SRAM 633 is enabled during the period when the histogram is updated.

The histogram addition processing unit 63 receives an input of the logarithmic representation data LogD or the pixel value D of the linear representation from the logarithmic transformation processing unit 61. The adder 631 adds the read data READ_DATA (RD) from the SRAM 633 to the inputted logarithmic representation data LogD or the inputted pixel value D of the linear representation.

The subtractor 638 subtracts the ambient light intensity estimate estimated by the ambient light estimation processing unit 67 from the addition result of the adder 631. The subtraction result of the subtractor 638 is supplied to the D-flip-flop 632 via the clip circuit 639. The D-flip-flop 632 is enabled for only one cycle at the end of each measurement period of the statistical value of the ambient light, and latches the value obtained by subtracting the ambient light intensity estimate from the logarithmic representation of the pixel value. The value obtained by subtracting the ambient light intensity estimate from the logarithmic representation of the pixel value is logarithmic representation of a value obtained by normalizing the pixel value by geometric mean, and is supplied, as the write data WRITE_DATA (WD), to the SRAM 633 to which the write address WA is inputted.

The functions and operations of the other constituent elements, that is, the SRAM 633, the D-flip-flop 634, the adder 635, the D-flip-flop 636, and the D-flip-flop 637 are basically the same as those in the case of Example 1.

<<Example 3>>

Example 3 is an example of calculating arithmetic mean and variance of the ambient light estimation processing in logarithmic representation. Fig. 34 is a block diagram illustrating a configuration example of a light receiving device and a distance measuring device according to Example 3 of the first embodiment of the present disclosure.

[Configuration example of system]

The distance measuring device 1 according to Example 3 also includes the light source unit 20 that applies light to the object to be measured (subject) 10, the light receiving device 30 that receives reflected light from the object to be measured 10 based on pulsed light applied by the light source unit 20, and the host 40.

In the light receiving device 30 that is the ToF sensor employing the ToF method, the pixel value D outputted from the addition unit 33 is directly inputted to the histogram addition processing unit 34 and the ambient light estimation processing unit 62 in logarithmic representation, and the ambient light estimation processing unit 62 calculates the arithmetic mean and variance of the ambient light estimation processing in logarithmic representation.

The ambient light estimation processing unit 62 in logarithmic representation can sample the pixel values D at a plurality of times t in a predetermined measurement period, and output an image in which the logarithmic representation data LogSUM obtained by transforming the sum total SUM of the sampled pixel values $D_t$ into a logarithmic value or an approximate value thereof is used as a pixel value. In other words, the light receiving device 30 according to Example 3 is a ToF sensor capable of outputting not only distance measurement information but also an image constituted by a logarithmically transformed pixel value.

[Example of method for calculating arithmetic mean and variance of ambient light in logarithmic representation]

First, as for the arithmetic mean $\mu$ of the ambient light is calculated as follows:
[Mathematical formula 1]

$$S = \log_2\left(\sum_{i=1}^{N}(1+x_i)\right) = \log_2\left(\left(\sum_{i=1}^{N-1}(1+x_i)\right) + (1+x_N)\right)$$
$$\approx \max\left(\log_2\sum_{i=1}^{N-1}(1+x_i), \log_2(1+x_N)\right) + 2^{-\left|\log_2\sum_{i=1}^{N-1}(1+x_i) - \log_2(1+x_N)\right|} \quad \cdots (1)$$

,

as an approximate value S of the logarithm of the sum total SUM is sequentially and approximately calculated, and inverse transformation ($2^x$ - 1) is performed from $\log_2(1 + \mu) = S - \log_2 N$ to obtain the arithmetic mean $\mu$ of the ambient light. Here, N is the number of samplings, and $\log_2 N$ is a logarithmic value of the number of samplings N or an approximate value thereof.

The intensity estimate of the ambient light is supposed to be calculated as $AMP \cdot \mu$ + OFFSET using a predetermined multiplier AMP and a predetermined addend OFFSET on the basis of the arithmetic mean $\mu$ of the ambient light, and can be adjusted by the multiplier AMP and the addend OFFSET.

As for the variance $\sigma^2$, first,
[Mathematical formula 2]

$$SS = \log_2\left(\sum_{i=1}^{N}(1+x_i)^2\right) = \log_2\left(\left(\sum_{i=1}^{N-1}(1+x_i)^2\right)+(1+x_N)^2\right)$$

$$\approx \max\left(\log_2\sum_{i=1}^{N-1}(1+x_i)^2, 2\log_2(1+x_N)\right) + 2^{-\left|\log_2\sum_{i=1}^{N-1}(1+x_i)^2 - 2\log_2(1+x_N)\right|} \quad \cdots (2)$$

,

as SS is calculated sequentially and approximately.

Next, as

[Mathematical formula 3]

$$2(S-\log_2 N) = 2\left(\log_2\left(N+\sum_{i=1}^{N}x_i\right)-\log_2 N\right)$$

$$= 2\log_2(1+\mu) = \log_2(1+\mu)^2 = \log_2(1+2\mu+\mu^2) \quad \cdots (3)$$

[Mathematical formula 4]

$$SS-\log_2 N = \log_2\left(N+2\sum_{i=1}^{N}x_i+\sum_{i=1}^{N}{x_i}^2\right)-\log_2 N$$

$$= \log_2\left(1+2\mu+\frac{\sum_{i=1}^{N}{x_i}^2}{N}\right) \quad \cdots (4)$$

,

2 (S-$\log_2$N) and SS-$\log_2$N (= MM) are obtained by addition/subtraction and shift on logarithmic representation.

As for the variance $\sigma^2$,

[Mathematical formula 5]

since

$$\sigma^2 = \frac{\sum_{i=1}^{N}{x_i}^2}{N} - \mu^2$$

$$= \left(1+2\mu+\frac{\sum_{i=1}^{N}{x_i}^2}{N}\right)-(1+2\mu+\mu^2)$$

$$= 2^{SS-\log_2 N} - 2^{2(S-\log_2 N)} \quad \cdots (5)$$

holds, an approximate value V of the variance $\sigma^2$ is obtained by taking a difference between 2 (S-$\log_2$N) and that obtained by inversely transforming SS-$\log_2$N into $2^x$.

Since the standard deviation $\sigma$ is a square root of the variance $\sigma^2$, a value obtained by performing logarithmic transformation, dividing the resultant by 2, and performing inverse transformation on the resultant, as in the following Formulas (6) and (7), is used as an approximate value.

[Mathematical formula 6]

$$SQ = \frac{\log_2(1+\sigma^2)}{2} = \log_2\sqrt{1+\sigma^2} \quad \cdots (6)$$

[Mathematical formula 7]

$$2^{SQ} = \sqrt{1+\sigma^2} = \sqrt{\sigma^2(1+\frac{1}{\sigma^2})} = \sigma\sqrt{1+\frac{1}{\sigma^2}} \approx \sigma \quad \cdots (7)$$

[First circuit example for calculating arithmetic mean and variance of ambient light in logarithmic representation]

Fig. 35 is a block diagram illustrating the first circuit example of a circuit portion that calculates arithmetic mean and a variance of ambient light in logarithmic representation in the ambient light estimation processing unit 62 according to Example 3.

The ambient light estimation processing unit 62 includes a D-flip-flop 6251, a logarithmic transformation unit 6252, a D-flip-flop 6253, an approximate value calculation unit 6254,
a D-flip-flop 6255, a subtractor 6256, a $\log_2 N$ setting unit 6257, a D-flip-flop 6258, an adder 6259, a $\log_2$AMP setting unit 6260, a logarithmic inverse transformation unit 6261, an adder 6262, an OFFSET-AMP + 1 setting unit 6263, and a D-flip-flop 6264 as a circuit system for calculating the ambient light intensity estimate.

The D-flip-flop 6251, the D-flip-flop 6253, and the D-flip-flop 6255 are enabled during a period when the arithmetic mean and the variance of the ambient light are acquired. Each of the D-flip-flop 6258 and the D-flip-flop 6264 is enabled for one cycle such that the pipeline flows once at the end of the period when the arithmetic mean and the variance of the ambient light are acquired.

The D-flip-flop 6251 receives an input of the pixel value $D_t$ obtained by sampling the pixel value D at a plurality of times t in a predetermined measurement period. When enabled, the D-flip-flop 6251 latches the pixel value $D_t$. The logarithmic transformation unit 6252 performs logarithmic transformation of $\log_2(1 + x)$ on the pixel value $D_t$ latched by the D-flip-flop 6251. When enabled, the D-flip-flop 6253 cumulatively adds the transformation result $\log_2(1 + D_t)$ of the logarithmic transformation unit 6252.

The approximate value calculation unit 6254 performs approximate value calculation on the basis of the output of the D-flip-flop 6253 and the output of the D-flip-flop 6255. The D-flip-flop 6255 outputs, as the pixel value of a display image, S of Formula (1), that is, the approximate value of the logarithmic representation data LogSUM. The output S of the D-flip-flop 6255 is also inputted to the subtractor 6252. The subtractor 6252 subtracts $\log_2 N$ from the output S of the D-flip-flop 6255.

When enabled, the D-flip-flop 6258 latches the subtraction result of the subtractor 6252. The adder 6259 adds $\log_2$AMP to the output of the D-flip-flop 6258. The logarithmic inverse transformation unit 6261 performs $2^x - 1$ inverse logarithmic transformation on the addition result of the adder 6259. The adder 6262 adds OFFSET-AMP + 1 to the inverse transformation result of the logarithmic inverse transformation unit 6261. When enabled, the D-flip-flop 6264 latches the addition result of the adder 6262 and outputs the resultant as the ambient light intensity estimate.

The ambient light estimation processing unit 62 includes, as a circuit system for calculating an approximate value of the standard deviation, a 1-bit left shift circuit 6265, an approximate value calculation unit 6266, a D-flip-flop 6267, a subtractor 6268, a D-flip-flop 6269, a logarithmic inverse transformation unit 6270, a subtractor 6271, a 1-bit left shift circuit 6272, a logarithmic inverse transformation unit 6273, a D-flip-flop 6274, a logarithmic transformation unit 6275, a 1-bit right shift circuit 6276, a logarithmic inverse transformation unit 6277, and a D-flip-flop 6278.

The D-flip-flop 6267 is enabled during the period when the arithmetic mean and the variance of the ambient light are acquired. Each of the D-flip-flop 6269 and the D-flip-flop 6274 is enabled for one cycle such that the pipeline flows once at the end of the period when the arithmetic mean and the variance of the ambient light are acquired.

The output of the D-flip-flop 6253 is supplied to the approximate value calculation unit 6266 via the 1-bit left shift circuit 6265. The approximate value calculation unit 6266 performs approximate value calculation on the basis of the output of the D-flip-flop 6203 shifted to the left by one bit by the 1-bit left shift circuit 6265 and the output of the D-flip-flop 6267. The D-flip-flop 6267 outputs SS of Formula (2) .

The subtractor 6268 subtracts $\log_2 N$ from the output SS of the D-flip-flop 6267. When enabled, the D-flip-flop 6269 latches the subtraction result of the subtractor 6268. The logarithmic inverse transformation unit 6270 performs $2^x$ inverse logarithmic transformation on the output of the D-flip-flop 6269. The logarithmic inverse transformation unit 6271 performs $2^x$ inverse logarithmic transformation on the output of the D-flip-flop 6208 shifted to the left by one bit by the 1-bit left shift circuit 6272.

The subtractor 6273 subtracts between the inverse transformation result of the logarithmic inverse transformation unit 6270 and the inverse transform result of the logarithmic inverse transformation unit 6271. When enabled, the D-flip-flop 6274 latches the subtraction result of the subtractor 6273 and outputs the resultant as the variance $\sigma^2$ of the

ambient light. The logarithmic transformation unit 6275 performs logarithmic transformation of $\log_2$ (x) on the output of the D-flip-flop 6274, that is, the variance $\sigma^2$.

The 1-bit right shift circuit 6276 shifts, only by one bit, the transformation result of the logarithmic transformation unit 6275 to the right. The logarithmic inverse transformation unit 6277 performs $2^x$ inverse logarithmic transformation on the 1-bit right shift circuit 6276. The D-flip-flop 6278 latches the inverse transformation result of the logarithmic inverse transformation unit 6277 and outputs the resultant as an approximate value of the standard deviation.

[Second circuit example for calculating arithmetic mean and variance of ambient light in logarithmic representation]

Fig. 36 is a block diagram illustrating the second circuit example of a circuit portion that calculates arithmetic mean and a variance of ambient light in logarithmic representation in the ambient light estimation processing unit 62 according to Example 3.

In the first circuit example, the approximate value of the logarithmic representation data LogSUM which is the output

S of the D-flip-flop 6255 is outputted as the pixel value of the display image. On the other hand, in the second circuit example, the logarithmic representation data LogSUM is calculated on the basis of the pixel value $D_t$ latched by the D-flip-flop 6251, and is outputted as the pixel value of the display image.

Specifically, as illustrated in Fig. 36, the ambient light estimation processing unit 62 includes an adder 6279, a D-flip-flop 6280, and a logarithmic transformation unit 6281 as a circuit system that calculates the logarithmic representation data LogSUM.

The D-flip-flop 6280 is enabled during the period when the arithmetic mean and the variance of the ambient light are acquired. The adder 6279 and the D-flip-flop 6280 perform cumulative addition of the pixel value $D_t$. The logarithmic transformation unit 6281 performs logarithmic transformation of $\log_2(1 + x)$ on the cumulative addition result of the pixel value $D_t$, and outputs the logarithmic representation data LogSUM, which is the transformation result, as the pixel value of the display image.

Meanwhile, in the first circuit example and the second circuit example, the approximate value calculation LogAdd (a, b) of the approximate value calculation unit 6024 and the approximate value calculation unit 6016 uses the approximate expression of the following Formula (8) to calculate:

[Mathematical formula 8]

$$f(x) = \log_2(1 + x) \approx x \quad \cdots (8)$$

As in the following Formula (9), calculation of adding the content of log in logarithm is performed with a fixed-point number.

[Mathematical formula 9]

$$\log_2(1 + a + 1 + b) \approx LogAdd(a, b) = max(f(a), f(b)) + 2^{-d} \quad \cdots (9)$$

Here, let

[Mathematical formula 10]

$$d = |f(b) - f(a)| \quad \cdots (10)$$

Let f(x) be a fixed-point number with w bits after the decimal point, $2^{-1d1}$ can be approximated by the following Formula (11).

[Mathematical formula 11]

$$\mathrm{rshift}(1.0, |d|) = 2^w \gg \lfloor d \rfloor \quad \cdots (11)$$

LogAdd (a, b), which is a fixed-point number with w bits after the decimal point, is expressed as follows:

[Mathematical formula 12]

$$LogAdd(a, b) \approx max(f(a), f(b)) + \mathrm{rshift}(1.0, d) \quad \cdots (12)$$

and can be implemented by a comparator, a shift circuit, and an adder.

<<Example 4>>

Example 4 is a specific example of the logarithmic transformation unit 65 (see Fig. 13 or 31) in the light receiving device 30 according to Example 1 or Example 2.

[First specific example]

The first specific example is an example in which a cumulative histogram of pixel values in logarithmic representation is further subjected to logarithmic transformation and compressed. This is an example in which the cumulative value of the histogram is subjected to logarithmic transformation and compressed. Fig. 37A is a block diagram illustrating the first specific example of the logarithmic transformation unit 65 according to Example 4.

As illustrated in Fig. 37A, the logarithmic transformation unit 65 according to the first specific example includes a logarithmic transformer 651, a clip circuit 652, and a D-flip-flop 653, and is configured to perform logarithmic transformation on a cumulative value of a histogram of pixel values in logarithmic representation to compress the resultant.

The logarithmic transformation unit 65 receives an input of the histogram data smoothed by the smoothing filter 64 in logarithmic representation illustrated in Fig. 13 or 31, for example, data of about 10 bits to 16 bits.

The logarithmic transformer 651 performs logarithmic transformation of $\log_2(1 + x)$ on the smoothed histogram data. The clip circuit 652 saturates 7 or more to 7 for the transformation result of the logarithmic transformer 651. The D-flip-flop 653 latches the output of the clip circuit 652 to output the resultant as 3-bit data having a value of 0 to 7.

[Second specific example]

The second specific example is an example in which a cumulative histogram of pixel values in logarithmic representation is further subjected to logarithmic transformation and compressed after subtraction with the minimum value. Fig. 37B is a block diagram illustrating the second specific example of the logarithmic transformation unit 65 according to Example 4.

As illustrated in Fig. 37B, the logarithmic transformation unit 65 according to the second specific example includes a subtractor 654 in a preceding stage of the logarithmic transformer 651 in addition to the logarithmic transformer 651, the clip circuit 652, and the D-flip-flop 653, and is configured to further perform logarithmic transformation on a cumulative histogram in logarithmic representation to compress the resultant after subtraction with the minimum value of the cumulative histogram.

The logarithmic transformation unit 65 receives an input of the histogram data smoothed by the smoothing filter 64 in logarithmic representation illustrated in Fig. 13 or 31, for example, data of about 10 bits to 16 bits.

The subtractor 654 subtracts the minimum value of the smoothed histogram data from the smoothed histogram data. The logarithmic transformer 651 performs logarithmic transformation of $\log_2(1 + x)$ on the subtraction result of the subtractor 654. The clip circuit 652 saturates 7 or more to 7 for the transformation result of the logarithmic transformer 651. The D-flip-flop 653 latches the output of the clip circuit 652 to output the resultant as 3-bit data having a value of 0 to 7.

According to the logarithmic transformation unit 65 according to the second specific example having the above configuration, in the case of compression from 10 bits to 3 bits, the compression can be reduced to 30%. Further, in the case of compression from 16 bits to 3 bits, the compression can be reduced to 19%.

As for a logarithm of a value obtained by subtracting a minimum value from a cumulative value of a histogram of a pixel value in logarithmic representation, Fig. 38A illustrates a logarithm in the case of one-time addition, Fig. 38B illustrates a logarithm in the case of four-time addition, Fig. 39A illustrates a logarithm in the case of 16-time addition, and Fig. 39B illustrates a logarithm in the case of 32-time addition.

Further, as for a logarithm of a value obtained by subtracting a minimum value from a cumulative value of a histogram of a pixel value in logarithmic representation of a value obtained by subtracting ambient light arithmetic mean, Fig. 40A illustrates a logarithm in the case of one-time addition, Fig. 40B illustrates a logarithm in the case of four-time addition, Fig. 41A illustrates a logarithm in the case of 16-time addition, and Fig. 41B illustrates a logarithm in the case of 32-time addition.

<<Example 5>>

Example 5 is an example of reducing the memory capacity by data compression of the cumulative histogram of pixel values in logarithmic representation, and is another configuration example of the histogram addition processing unit 63 in logarithmic representation in the light receiving device according to Example 1.

[Configuration example of system]

Fig. 42 is a block diagram illustrating a configuration example of the histogram addition processing unit 63 in logarithmic representation according to Example 5. The histogram addition processing unit 63 according to Example 5 has a configuration in which a data compression/decompression function by differential encoding performed in the form of a difference of sequential data is mounted before and after the SRAM 633 which is an example of the memory that stores logarithmic representation data.

Specifically, as illustrated in Fig. 42, an encoding circuit 641 is mounted on the input stage of the SRAM 633 on the side to which the write address WRITE_ADDR (WA) and the write data WRITE_DATA (WD) are inputted, and a decoding circuit 642 is mounted on the output stage of the SRAM 633 on the side to which the read address READ_ADDR (RA) is inputted. Fig. 43 illustrates the flow of differential encoding of the cumulative histogram of logarithmic representation.

As described above, the memory capacity of the SRAM 633 can be reduced by mounting the data compression/decompression function by differential encoding before and after the SRAM 633. As an example, Fig. 44A illustrates a data size in a case where histograms of 048 bins are stored in the SRAM 633 without being compressed, and Fig. 44B illustrates a data size in a case where the differential encoding is performed.

For example, assuming that the number of escapes is 256 or less, the capacity of an escape memory 6331 (see Fig. 45) of the SRAM 633 is reduced. In the case of 256 escapes, compression to 50.0% [= $(3 \times 2048 + 8 \times 256)/(8 \times 2048)$] can be performed, and in the case of 64 escapes, compression to 40.6% [= $(3 \times 2048 + 8 \times 64)/(8 \times 2048)$] can be performed.

[Configuration example of encoding circuit]

Fig. 45 is a block diagram illustrating a configuration example of the encoding circuit 641. In the meantime, the SRAM 633 includes a code memory 6331 and an escape memory 6332. The write address $WA_t$ inputted from the D-flip-flop 637 in the histogram addition processing unit 63 is written to the code memory 6331.

As illustrated in Fig. 45, the encoding circuit 641 includes a D-flip-flop 6411, a subtractor 6412, a code assignment processing unit 6413, an adder (+1) 6414, and a D-flip-flop 6415.

The D-flip-flop 6411 latches the write data $WD_t$ inputted from the D-flip-flop 632 in the histogram addition processing unit 63. The subtractor 6412 subtracts the latch data $WD_{t-1}$ of the D-flip-flop 6411 from the write data $WD_t$ inputted from the D-flip-flop 632.

The code assignment processing unit 6413 supplies the write data $SingWD_t$, $Abs_t$ to the code memory 6331 and supplies the write data $EscapeWD_t$ to the escape memory 6332 on the basis of the write data $WD_t$ inputted from the D-flip-flop 632 and the subtraction result ($WD_t$ - $WD_{t-1}$) of the subtractor 6412.

The adder 6414 and the D-flip-flop 6415 count up (increment) the write address EscapeWA of the escape memory 6332 every time an escape code can be generated.

[Configuration example of decoding circuit]

Fig. 46 is a block diagram illustrating a configuration example of the decoding circuit 642. As illustrated in Fig. 46, the decoding circuit 642 includes a multiplier 6421, an adder 6422, a D-flip-flop 6423, a selector 6424, an escape determination unit 6425, an adder (+1) 6426, and a D-flip-flop 6427.

The multiplier 6421 multiplies the read data $SingWD_t$ inputted from the code memory 6331 by the read data $Abs_t$. The adder 6422 adds the latch data $RD_{t-1}$ of the D-flip-flop 6423 to the multiplication result ($SingWD_t \times Abs_t$) of the multiplier 6421. The D-flip-flop 6423 latches the read data $RD_t$ outputted from the selector 6424.

The selector 6424 receives two inputs of the addition result of the adder 6422 and the read data $EscapeRD_t$ read out from the escape memory 6332, selects any one of the two inputs on the basis of the determination result of the escape determination unit 6425, and outputs the selected one as the read data $RD_t$. The escape determination unit 6425 performs escape determination on the basis of the read data $Abs_t$ inputted from the code memory 6331.

The adder 6426 and the D-flip-flop 6427 count up (increment) the write address EscapeWA of the escape memory 6332 every time an escape code is read out.

<<Functional effect of first embodiment>>

According to the first embodiment, the following functional effects can be obtained.

(Improvement in dynamic range or reduction in memory capacity)

- Although there is a trade-off relationship between the dynamic range of the histogram and the memory size, for the same memory size, the dynamic range is larger than that in the conventional method. Therefore, even if the number of times of laser emission is increased to improve the S/N, the histogram is not saturated, so that the accuracy of the position determination of the reflected light is not deteriorated.
- In the case of the same dynamic range, since the memory size can be reduced, the circuit size can be reduced.

(Reduction of power consumption)

- By reducing the bit depth (reduction, for example, from 12 bits in linear representation to 8 bits in logarithmic representation) in logarithmic representation, the bit depth of the D-flip-flop (FF) and the memory is reduced, so that power consumption at the time of histogram processing can be reduced.
- A multiplier and a square root arithmetic unit are not required for the variance calculation, and instead, an adder/subtractor and a simple circuit for logarithmic transformation and inverse transformation can be used, leading to the reduction in power consumption.

[Functional effect of ambient light estimation processing based on geometric mean]

- It is less likely to be affected by a temporarily large fluctuation of ambient light.
- Even for a sample including reflected light, a value close to the average of the ambient light can be calculated.

(Functional effect by lossy compression of histogram obtained by further logarithmic transformation of logarithmic accumulation)

- Compressing data makes it possible to reduce a necessary data transfer band, shorten a transfer time, and reduce the number of pins of the LSI.

(Functional effect by differential encoding of logarithmic representation)

- Since the bit depth is reduced by logarithmic representation, the bit depth of the escape code can be reduced, and the memory capacity of the escape SRAM can be reduced. Further, since the 2-bit code SRAM and the escape SRAM suffice, the memory capacity of the SRAM can be reduced, and the circuit size and power consumption can be reduced by reducing the bit depth of the ECC circuit.

(Effect of logarithmic accumulation)

When $2^k - 1 \leq a \leq 2^{k+1} - 1$, k = 0, 1, ... hold,

[Mathematical formula 13]

$$\log_2(1+a) \sim k - 1 + \frac{a+1}{2^k}$$

can be approximated by and a polyline.

Let

[Mathematical formula 14]

$$\log_2(1+a) \sim k - 1 + \frac{a+1}{2^k}$$

where s ($\geq 0$) is the number of SPAD elements that have reacted to the reflected light, the expected value $\mu_{s1}$ of the sum of the logarithm $\log_2(1 + X_i)$ of the L mutually independent random variables $X_i$ is given by

[Mathematical formula 15]

$$\mu_{sl} = E\left[\sum_{i=1}^{L} \log_2(1+X_i)\right] = E\left[\sum_{i=1}^{L} \log_2(1+s+e_i)\right]$$

$$= E\left[\sum_{i=1}^{L} \log_2(1+s)(1+\tfrac{e_i}{1+s})\right] = L\ \log_2(1+s) + E\left[\sum_{i=1}^{L} \log_2(1+\tfrac{e_i}{1+s})\right]$$

$$\sim L\log_2(1+s) + E\left[\sum_{i=1}^{L}\left(k-1+\frac{\frac{e_i}{1+s}+1}{2^k}\right)\right] = L\left(\log_2(1+s) + \left(k-1+\frac{\frac{\mu_e}{1+s}+1}{2^k}\right)\right)$$

$$\sim L\left(\log_2(1+s) + \log_2\left(1+\frac{\mu_e}{1+s}\right)\right) = L\ \log_2(1+s+\mu_e)$$

and the variance $\sigma_{s1}^2$ is given by

[Mathematical formula 16]

$$\mu_{sl} = E\left[\sum_{i=1}^{L} \log_2(1+X_i)\right] = E\left[\sum_{i=1}^{L} \log_2(1+s+e_i)\right]$$

$$= E\left[\sum_{i=1}^{L} \log_2(1+s)(1+\tfrac{e_i}{1+s})\right] = L\ \log_2(1+s) + E\left[\sum_{i=1}^{L} \log_2(1+\tfrac{e_i}{1+s})\right]$$

$$\sim L\log_2(1+s) + E\left[\sum_{i=1}^{L}\left(k-1+\frac{\frac{e_i}{1+s}+1}{2^k}\right)\right] = L\left(\log_2(1+s) + \left(k-1+\frac{\frac{\mu_e}{1+s}+1}{2^k}\right)\right)$$

$$\sim L\left(\log_2(1+s) + \log_2\left(1+\frac{\mu_e}{1+s}\right)\right) = L\ \log_2(1+s+\mu_e)$$

Here, assuming that 1 = k,

[Mathematical formula 17]

$$\sigma_{sl}{}^2 \sim E\left[\sum_{i=1}^{L}\left(\frac{\frac{e_i}{1+s}-\frac{\mu_e}{1+s}}{2^k}\right)^2\right] = \frac{\sum_{i=1}^{L} E[(e_i-\mu_e)^2]}{(1+s)^2 2^{2k}} = \frac{L\,\sigma_e{}^2}{(1+s)^2 2^{2k}}$$

$$\sigma_{sl} \sim \frac{\sqrt{L}}{(1+s)2^k}\sigma_e$$

holds.

When $2^k - 1 \le \mu_e/(1 + s) \le 2^{k+1}-1$, $2^k - 1 \le e_i/(1 + s) \le 2^{k+1} - 1$, and k = 0, 1, ... hold, the expected value $\mu_{s1}$ can be approximated as $L\log_2(1 + s + \mu_e)$, and the standard deviation $\sigma_{sl}$ can be approximated as $\{\sqrt{L}/(1 + s)2^k\}\sigma_e$.

As described above, the expected value $\mu_{sl}$ is proportional to L; however, the standard deviation $\sigma_{sl}$ is proportional to $\sqrt{L}$, which is similar to those in linear representation. Further, the standard deviation $\sigma_{sl}$ is inversely proportional to the magnitude s of the signal level, and when the magnitude s of the signal level is small, the standard deviation $\sigma_{sl}$ is inversely proportional to the noise range $2^k$.

Fig. 47 illustrates a cumulative histogram in logarithmic representation in the case of 16-time addition without subtraction of ambient light geometric mean. The larger the signal level, the smaller the standard deviation of the logarithmic accumulation.

Fig. 48 illustrates a cumulative histogram in logarithmic representation in the case of 16-time addition with subtraction of ambient light geometric mean. In the case of the subtraction of the ambient light geometric mean, since the magnitude of the signal level of the portion having no reflected light is small, there is no effect of reducing the standard deviation of the logarithmic accumulation; however, the magnitude of the signal level of the reflected light is not so small.

(Effect of reduction by averaging noise in synchronous addition)

The geometric mean becomes smaller than the arithmetic mean, and the arithmetic mean does not match the location of the distribution peak when there is a large outlier, but the geometric mean tends to match.

When $2^k-1 \le \mu_e/(1 + s) \le 2^{k+1}-1$, $2^k-1 \le e_i/(1 + s) \le 2^{k+1}-1$, and k = 0, 1, ... hold, the expected value $\mu_{sl}$ can be approximated as $L\log_2(1 + s + \mu_e)$. The arithmetic mean of L times of $\log_2(1 + x_i)$ is

[Mathematical formula 18]

$$\frac{\mu_{sl}}{L} = \frac{1}{L}E\left[\sum_{i=1}^{L}\log_2(1+X_i)\right] = E\left[\frac{1}{L}\sum_{i=1}^{L}\log_2(1+X_i)\right] = E\left[\log_2\sqrt[L]{\prod_{i=1}^{L}(1+X_i)}\right]$$

and is the expected value $\mu_{geo}$ of the logarithm of the geometric mean of $1 + x_i$, therefore, the accumulation of L times of $\log_2(1 + x_i)$ is obtained by multiplying the expected value $\mu_{geo}$ of the logarithm of the geometric mean by L.

In the case of a distribution including a large value, the arithmetic mean tends to be larger than the median. The geometric mean has the characteristic of not being so large also in such cases. Since the accumulation of $\log_2(1 + x_i)$ performed L times also has this characteristic, for example, in a case where the distance measuring device of the present disclosure is mounted on a vehicle control system and used, even if a large value is accidentally mixed several times in the laser emission performed L times due to the headlight of an oncoming vehicle or the like, it is hardly affected.

Fig. 49A illustrates a difference between the geometric mean and the arithmetic mean for a case where noise is averaged out by synchronous addition, and Fig. 49B illustrates a histogram of data values (output values of the SPAD element).

(Effect of averaging in time direction)

As with the case where noise averaging is performed by synchronous addition, the geometric mean becomes smaller than the arithmetic mean, and the arithmetic mean does not match the location of the distribution peak when there is a large outlier, but the geometric mean tends to match.

In the estimation of the ambient light intensity estimate, when the geometric mean is taken in a state where the reflected light is mixed, the value becomes close to the arithmetic mean of the arithmetic mean value of the ambient light without being greatly affected by the reflected light. Fig. 50A illustrates a difference between the geometric mean and the arithmetic mean for the case of averaging in the time direction, and Fig. 50B illustrates a histogram of data values (pixel values).

<Second embodiment of the present disclosure>

In the first embodiment, the distance measuring device called a flash type is described as an example. In contrast, in the second embodiment, a distance measuring device called a scan type is described as an example. Note that, in the following description, configurations similar to those of the first embodiment are denoted by the same reference numerals, and redundant description thereof is omitted.

[System configuration example of distance measuring device]

Fig. 51 is a schematic diagram illustrating a schematic configuration example of the distance measuring device according to the second embodiment of the present disclosure. As illustrated in Fig. 51, the distance measuring device according to the second embodiment includes a control device 200, a condenser lens 201, a half mirror 202, a micromirror 203, a light receiving lens 204, and a scanner unit 205, in addition to the light source unit 20 and the light receiving device 30.

The micromirror 203 and the scanner unit 205 constitute a scanning unit that scans light incident on the light receiving unit 32 of the light receiving device 30. Note that the scanning unit may include at least one of the condenser lens 201, the half mirror 202, and the light receiving lens 204 in addition to the micromirror 203 and the scanner unit 205.

As with the case of the first embodiment, the light source unit 20 includes, for example, one or a plurality of semiconductor laser diodes, and emits pulsed laser light $L_1$ having a predetermined time width at a predetermined light emission period. Further, the light source unit 20 emits the laser light $L_1$ having a time width of one nanosecond at a cycle of 1 gigahertz (GHz), for example.

The condenser lens 201 condenses the laser light $L_1$ emitted from the light source unit 20. For example, the condenser lens 201 condenses the laser light $L_1$ such that the spread of the laser light $L_1$ is about the same as the angle of view of the light reception surface of the light receiving device 30.

The half mirror 202 reflects at least a part of the incident laser light $L_1$ toward the micromirror 203. Note that, instead of the half mirror 202, it is also possible to use an optical element that reflects a part of the light and transmits another part of the light, such as a polarizing mirror.

The micromirror 203 is attached to the scanner unit 205 so that the angle can be changed with the center of the reflective surface as the axis. For example, the scanner unit 205 causes the micromirror 203 to swing or vibrate in the horizontal direction such that an image SA of the laser light $L_1$ reflected by the micromirror 203 horizontally reciprocates in a predetermined scanning area AR. For example, the scanner unit 205 causes the micromirror 203 to swing or vibrate in the horizontal direction such that the image SA of the laser light $L_1$ reciprocates in the predetermined scanning area AR in one millisecond. Note that a stepping motor, a piezoelectric element, or the like can be used to swing or vibrate the micromirror 203.

The reflected light $L_2$ of the laser light $L_1$ reflected by the object 90 that is present in the distance measuring range is incident on the micromirror 203 from the direction opposite to the laser light $L_1$ with the same optical axis as the emission axis of the laser light $L_1$ as the incident axis. The reflected light $L_2$ incident on the micromirror 203 enters the half mirror 202 along the same optical axis as the laser light $L_1$, and a part thereof passes through the half mirror 202.

The image of the reflected light $L_2$ that has passed through the half mirror 202 is formed on a pixel column in the light receiving unit 32 of the light receiving device 30 through the light receiving lens 204.

The light receiving device 30 can have a configuration similar to that of the light receiving device exemplified in the first embodiment, specifically, the light receiving device according to each example of the first embodiment. Other configurations and operations may be similar to those of the first embodiment. Therefore, the detailed description is omitted here.

In the light receiving device 30, the light receiving unit 32 has, for example, a structure in which the pixels 60 exemplified in the first embodiment are arranged in the vertical direction (corresponding to the row direction). That is, the light receiving unit 32 can be configured, for example, by some rows (one row or several rows) of the SPAD array unit 323 illustrated in Fig. 15.

The control device 200 is implemented by, for example, an information processing device such as a central processing unit (CPU), and controls the light source unit 20, the light receiving device 30, the scanner unit 205, and so on.

<<Functional effect of second embodiment>>

As described above, the technology according to the present disclosure is applicable not only to the flash type distance measuring device but also to the scanning type distance measuring device. Then, in the scanning type distance measuring device, by using the light receiving device according to each example of the first embodiment as the light receiving device 30, it is possible to obtain functional effects similar to those in the case of the first embodiment.

Although the embodiments of the present disclosure have been described above, the technical scope of the present disclosure is not limited to the above-described embodiments as it is, and various modifications can be made without departing from the gist of the present disclosure. Further, constituent elements of different embodiments and modifications may be appropriately combined.

Further, the effects in the embodiments described in the present specification are only examples and are not limitative ones, and there may be other effects.

<Application example of technology according to present disclosure>

The technology according to the present disclosure can be applied to various products. Hereinafter, a more specific application example is described. For example, the technology according to the present disclosure may be implemented as a distance measuring device mounted on any type of mobile object as an automobile, an electric vehicle, a hybrid electric vehicle, a motorcycle, a bicycle, a personal mobility, an airplane, a drone, a ship, a robot, a construction machine, an agricultural machine (tractor), and so on.

[Mobile object]

Fig. 52 is a block diagram depicting an example of schematic configuration of a vehicle control system 7000 as an example of a mobile body control system to which the technology according to an embodiment of the present disclosure can be applied. The vehicle control system 7000 includes a plurality of electronic control units connected to each other via a communication network 7010. In the example illustrated in Fig. 52, the vehicle control system 7000 includes a driving system control unit 7100, a body system control unit 7200, a battery control unit 7300, an outside-vehicle information detecting unit 7400, an in-vehicle information detecting unit 7500, and an integrated control unit 7600. The communication network 7010 connecting the plurality of control units to each other may, for example, be a vehicle-mounted communication network compliant with an arbitrary standard such as controller area network (CAN), local interconnect network (LIN), local area network (LAN), FlexRay (registered trademark), or the like.

Each of the control units includes: a microcomputer that performs arithmetic processing according to various kinds of programs; a storage section that stores the programs executed by the microcomputer, parameters used for various kinds of operations, or the like; and a driving circuit that drives various kinds of control target devices. Each of the control units further includes: a network interface (I/F) for performing communication with other control units via the communication network 7010; and a communication I/F for performing communication with a device, a sensor, or the like within and without the vehicle by wire communication or wireless communication. A functional configuration of the integrated control unit 7600 illustrated in Fig. 52 includes a microcomputer 7610, a general-purpose communication I/F 7620, a dedicated communication I/F 7630, a positioning section 7640, a beacon receiving section 7650, an in-vehicle device I/F 7660, a sound/image output section 7670, a vehicle-mounted network I/F 7680, and a storage section 7690. The other control units similarly include a microcomputer, a communication I/F, a storage section, and the like.

The driving system control unit 7100 controls the operation of devices related to the driving system of the vehicle in accordance with various kinds of programs. For example, the driving system control unit 7100 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like. The driving system control unit 7100 may have a function as a control device of an antilock brake system (ABS), electronic stability control (ESC), or the like.

The driving system control unit 7100 is connected with a vehicle state detecting section 7110. The vehicle state detecting section 7110, for example, includes at least one of a gyro sensor that detects the angular velocity of axial rotational movement of a vehicle body, an acceleration sensor that detects the acceleration of the vehicle, and sensors for detecting an amount of operation of an accelerator pedal, an amount of operation of a brake pedal, the steering angle of a steering wheel, an engine speed or the rotational speed of wheels, and the like. The driving system control unit 7100 performs arithmetic processing using a signal input from the vehicle state detecting section 7110, and controls the internal combustion engine, the driving motor, an electric power steering device, the brake device, and the like.

The body system control unit 7200 controls the operation of various kinds of devices provided to the vehicle body in accordance with various kinds of programs. For example, the body system control unit 7200 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 7200. The body system control unit 7200 receives these input radio waves or signals, and controls a door lock device, the power window device, the lamps, or the like of the vehicle.

The battery control unit 7300 controls a secondary battery 7310, which is a power supply source for the driving motor, in accordance with various kinds of programs. For example, the battery control unit 7300 is supplied with information about a battery temperature, a battery output voltage, an amount of charge remaining in the battery, or the like from a battery device including the secondary battery 7310. The battery control unit 7300 performs arithmetic processing using these signals, and performs control for regulating the temperature of the secondary battery 7310 or controls a cooling device provided to the battery device or the like.

The outside-vehicle information detecting unit 7400 detects information about the outside of the vehicle including the vehicle control system 7000. For example, the outside-vehicle information detecting unit 7400 is connected with at least one of an imaging section 7410 or an outside-vehicle information detecting section 7420. The imaging section 7410 includes at least one of a time-of-flight (ToF) camera, a stereo camera, a monocular camera, an infrared camera, and other cameras. The outside-vehicle information detecting section 7420, for example, includes at least one of an environmental sensor for detecting current atmospheric conditions or weather conditions and a peripheral information detecting sensor for detecting another vehicle, an obstacle, a pedestrian, or the like on the periphery of the vehicle including the vehicle control system 7000.

The environmental sensor, for example, may be at least one of a rain drop sensor detecting rain, a fog sensor detecting a fog, a sunshine sensor detecting a degree of sunshine, and a snow sensor detecting a snowfall. The peripheral information detecting sensor may be at least one of an ultrasonic sensor, a radar device, and a LIDAR (light detection and ranging device, or laser imaging detection and ranging) device. Each of the imaging section 7410 and the outside-vehicle information detecting section 7420 may be provided as an independent sensor or device, or may be provided as a device in which a plurality of sensors or devices is integrated.

Here, Fig. 53 illustrates an example of installation positions of the imaging section 7410 and the outside-vehicle information detecting section 7420. Imaging sections 7910, 7912, 7914, 7916, and 7918 are, for example, disposed at least one of positions on a front nose, sideview mirrors, a rear bumper, and a back door of the vehicle 7900 and a position on an upper portion of a windshield within the interior of the vehicle. The imaging section 7910 provided to the front nose and the imaging section 7918 provided to the upper portion of the windshield within the interior of the vehicle obtain mainly an image of the front of the vehicle 7900. The imaging sections 7912 and 7914 provided to the sideview mirrors obtain mainly an image of the sides of the vehicle 7900. The imaging section 7916 provided to the rear bumper or the back door obtains mainly an image of the rear of the vehicle 7900. The imaging section 7918 provided to the upper portion of the windshield within the interior of the vehicle is used mainly to detect a preceding vehicle, a pedestrian, an obstacle, a signal, a traffic sign, a lane, or the like.

Incidentally, Fig. 53 illustrates an example of imaging ranges of the respective imaging sections 7910, 7912, 7914, and 7916. An imaging range a represents the imaging range of the imaging section 7910 provided to the front nose. Imaging ranges b and c respectively represent the imaging ranges of the imaging sections 7912 and 7914 provided to the sideview mirrors. An imaging range d represents the imaging range of the imaging section 7916 provided to the rear bumper or the back door. A bird's-eye image of the vehicle 7900 as viewed from above can be obtained by superimposing image data imaged by the imaging sections 7910, 7912, 7914, and 7916, for example.

Outside-vehicle information detecting sections 7920, 7922, 7924, 7926, 7928, and 7930 provided to the front, rear, sides, and corners of the vehicle 7900 and the upper portion of the windshield within the interior of the vehicle may be, for example, an ultrasonic sensor or a radar device. The outside-vehicle information detecting sections 7920, 7926, and 7930 provided to the front nose of the vehicle 7900, the rear bumper, the back door of the vehicle 7900, and the upper portion of the windshield within the interior of the vehicle may be a LIDAR device, for example. These outside-vehicle information detecting sections 7920 to 7930 are used mainly to detect a preceding vehicle, a pedestrian, an obstacle, or the like.

Returning to Fig. 52, the description will be continued. The outside-vehicle information detecting unit 7400 makes the imaging section 7410 image an image of the outside of the vehicle, and receives imaged image data. In addition, the outside-vehicle information detecting unit 7400 receives detection information from the outside-vehicle information detecting section 7420 connected to the outside-vehicle information detecting unit 7400. In a case where the outside-vehicle information detecting section 7420 is an ultrasonic sensor, a radar device, or a LIDAR device, the outside-vehicle information detecting unit 7400 transmits an ultrasonic wave, an electromagnetic wave, or the like, and receives information of a received reflected wave. On the basis of the received information, the outside-vehicle information detecting unit 7400 may perform processing of detecting an object such as a human, a vehicle, an obstacle, a sign, a character on a road surface, or the like, or processing of detecting a distance thereto. The outside-vehicle information detecting unit 7400 may perform environment recognition processing of recognizing a rainfall, a fog, road surface conditions, or the like on the basis of the received information. The outside-vehicle information detecting unit 7400 may calculate a distance to an object outside the vehicle on the basis of the received information.

In addition, on the basis of the received image data, the outside-vehicle information detecting unit 7400 may perform image recognition processing of recognizing a human, a vehicle, an obstacle, a sign, a character on a road surface, or the like, or processing of detecting a distance thereto. The outside-vehicle information detecting unit 7400 may subject the received image data to processing such as distortion correction, alignment, or the like, and combine the image data imaged by a plurality of different imaging sections 7410 to generate a bird's-eye image or a panoramic image. The outside-vehicle information detecting unit 7400 may perform viewpoint conversion processing using the image data imaged by the imaging section 7410 including the different imaging parts.

The in-vehicle information detecting unit 7500 detects information about the inside of the vehicle. The in-vehicle information detecting unit 7500 is, for example, connected with a driver state detecting section 7510 that detects the state of a driver. The driver state detecting section 7510 may include a camera that images the driver, a biosensor that detects biological information of the driver, a microphone that collects sound within the interior of the vehicle, or the like. The biosensor is, for example, disposed in a seat surface, the steering wheel, or the like, and detects biological information of an occupant sitting in a seat or the driver holding the steering wheel. On the basis of detection information input from the driver state detecting section 7510, the in-vehicle information detecting unit 7500 may calculate a degree of fatigue of the driver or a degree of concentration of the driver, or may determine whether or not the driver is dozing. The in-vehicle information detecting unit 7500 may subject an audio signal obtained by the collection of the sound to processing such as noise canceling processing or the like.

The integrated control unit 7600 controls general operation within the vehicle control system 7000 in accordance with various kinds of programs. The integrated control unit 7600 is connected with an input section 7800. The input section 7800 is implemented by a device capable of input operation by an occupant, such, for example, as a touch panel, a button, a microphone, a switch, a lever, or the like. The integrated control unit 7600 may be supplied with data obtained by voice recognition of voice input through the microphone. The input section 7800 may, for example, be a remote control device using infrared rays or other radio waves, or an external connecting device such as a mobile telephone, a personal digital assistant (PDA), or the like that supports operation of the vehicle control system 7000. The input section 7800 may be, for example, a camera, and in that case, an occupant can input information by gesture. Alternatively, data may be input which is obtained by detecting the movement of a wearable device that an occupant wears. Further, the input section 7800 may, for example, include an input control circuit or the like that generates an input signal on the basis of information input by an occupant or the like using the above-described input section 7800, and which outputs the generated input signal to the integrated control unit 7600. An occupant or the like inputs various kinds of data or gives an instruction for processing operation to the vehicle control system 7000 by operating the input section 7800.

The storage section 7690 may include a read only memory (ROM) that stores various kinds of programs executed by the microcomputer and a random-access memory (RAM) that stores various kinds of parameters, operation results, sensor values, or the like. In addition, the storage section 7690 may be implemented by a magnetic storage device such as a hard disc drive (HDD) or the like, a semiconductor storage device, an optical storage device, a magneto-optical storage device, or the like.

The general-purpose communication I/F 7620 is a communication I/F used widely, which communication I/F mediates communication with various apparatuses present in an external environment 7750. The general-purpose communication I/F 7620 may implement a cellular communication protocol such as global system of mobile communications (GSM) (registered trademark), worldwide interoperability for microwave access (WiMAX), long term evolution (LTE)), LTE-advanced (LTE-A), or the like, or another wireless communication protocol such as wireless LAN (referred to also as wireless fidelity (Wi-Fi (registered trademark)), Bluetooth (registered trademark), or the like. The general-purpose communication I/F 7620 may, for example, connect to an apparatus (for example, an application server or a control server) present on an external network (for example, the Internet, a cloud network, or a company-specific network) via a base station or an access point. In addition, the general-purpose communication I/F 7620 may connect to a terminal present in the vicinity of the vehicle (which terminal is, for example, a terminal of the driver, a pedestrian, or a store, or a machine type communication (MTC) terminal) using a peer to peer (P2P) technology, for example.

The dedicated communication I/F 7630 is a communication I/F that supports a communication protocol developed for use in vehicles. The dedicated communication I/F 7630 may implement a standard protocol such, for example, as wireless access in vehicle environment (WAVE), which is a combination of institute of electrical and electronic engineers (IEEE) 802.11p as a lower layer and IEEE 1609 as a higher layer, dedicated short range communications (DSRC), or a cellular communication protocol. The dedicated communication I/F 7630 typically carries out V2X communication as a concept including one or more of communication between a vehicle and a vehicle (Vehicle to Vehicle), communication between a road and a vehicle (Vehicle to Infrastructure), communication between a vehicle and a home (Vehicle to Home), and communication between a pedestrian and a vehicle (Vehicle to Pedestrian).

The positioning section 7640, for example, performs positioning by receiving a global navigation satellite system (GNSS) signal from a GNSS satellite (for example, a GPS signal from a global positioning system (GPS) satellite), and generates positional information including the latitude, longitude, and altitude of the vehicle. Incidentally, the positioning section 7640 may identify a current position by exchanging signals with a wireless access point, or may obtain the positional information from a terminal such as a mobile telephone, a personal handy-phone system (PHS), or a smart phone that has a positioning function.

The beacon receiving section 7650, for example, receives a radio wave or an electromagnetic wave transmitted from a radio station installed on a road or the like, and thereby obtains information about the current position, congestion, a closed road, a necessary time, or the like. Incidentally, the function of the beacon receiving section 7650 may be included in the dedicated communication I/F 7630 described above.

The in-vehicle device I/F 7660 is a communication interface that mediates connection between the microcomputer 7610 and various in-vehicle devices 7760 present within the vehicle. The in-vehicle device I/F 7660 may establish wireless connection using a wireless communication protocol such as wireless LAN, Bluetooth, near field communication (NFC), or wireless universal serial bus (WUSB). In addition, the in-vehicle device I/F 7660 may establish wired connection by universal serial bus (USB), high-definition multimedia interface (HDMI) (registered trademark), mobile high-definition link (MHL), or the like via a connection terminal (and a cable if necessary) not illustrated in the figures. The in-vehicle devices 7760 may, for example, include at least one of a mobile device and a wearable device possessed by an occupant and an information device carried into or attached to the vehicle. The in-vehicle devices 7760 may also include a navigation device that searches for a path to an arbitrary destination. The in-vehicle device I/F 7660 exchanges control signals or data signals with these in-vehicle devices 7760.

The vehicle-mounted network I/F 7680 is an interface that mediates communication between the microcomputer 7610 and the communication network 7010. The vehicle-mounted network I/F 7680 transmits and receives signals or the like in conformity with a predetermined protocol supported by the communication network 7010.

The microcomputer 7610 of the integrated control unit 7600 controls the vehicle control system 7000 in accordance with various kinds of programs on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. For example, the microcomputer 7610 may calculate a control target value for the driving force generating device, the steering mechanism, or the braking device on the basis of the obtained information about the inside and outside of the vehicle, and output a control command to the driving system control unit 7100. For example, the microcomputer 7610 may perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like. In addition, the microcomputer 7610 may perform cooperative control intended for automatic driving, which makes the vehicle to travel autonomously without depending on the operation of the driver, or the like, by controlling the driving force generating device, the steering mechanism, the braking device, or the like on the basis of the obtained information about the surroundings of the vehicle.

The microcomputer 7610 may generate three-dimensional distance information between the vehicle and an object such as a surrounding structure, a person, or the like, and generate local map information including information about the surroundings of the current position of the vehicle, on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. In addition, the microcomputer 7610 may predict danger such as collision of the vehicle, approaching of a pedestrian or the like, an entry to a closed road, or the like on the basis of the obtained information, and generate a warning signal. The warning signal may, for example, be a signal for producing a warning sound or lighting a warning lamp.

The sound/image output section 7670 transmits an output signal of at least one of a sound or an image to an output device capable of visually or auditorily notifying information to an occupant of the vehicle or the outside of the vehicle. In the example of Fig. 52, an audio speaker 7710, a display section 7720, and an instrument panel 7730 are illustrated as the output device. The display section 7720 may, for example, include at least one of an on-board display and a head-up display. The display section 7720 may have an augmented reality (AR) display function. The output device may be other than these devices, and may be another device such as headphones, a wearable device such as an eyeglass type display worn by an occupant or the like, a projector, a lamp, or the like. In a case where the output device is a display device, the display device visually displays results obtained by various kinds of processing performed by the microcomputer 7610 or information received from another control unit in various forms such as text, an image, a table, a graph, or the like. In addition, in a case where the output device is an audio output device, the audio output device converts an audio signal constituted of reproduced audio data or sound data or the like into an analog signal, and auditorily outputs the analog signal.

Incidentally, at least two control units connected to each other via the communication network 7010 in the example illustrated in Fig. 52 may be integrated into one control unit. Alternatively, each individual control unit may include a plurality of control units. Further, the vehicle control system 7000 may include another control unit not illustrated in the figures. In addition, part or the whole of the functions performed by one of the control units in the above description may be assigned to another control unit. That is, predetermined arithmetic processing may be performed by any of the control units as long as information is transmitted and received via the communication network 7010. Similarly, a sensor or a device connected to one of the control units may be connected to another control unit, and a plurality of control units may mutually transmit and receive detection information via the communication network 7010.

An example of the vehicle control system to which the technology according to the present disclosure can be applied has been described above. In the technology according to the present disclosure, for example, in a case where the imaging section 7410 includes a ToF camera (ToF sensor) among the constituent elements described above, particularly, the light receiving device according to the first embodiment or the second embodiment described above can be used as the ToF camera. By mounting the light receiving device as the ToF camera of the distance measuring device, for example, a vehicle control system capable of detecting an object to be measured with high accuracy can be constructed.

<Configuration that can be taken by the present disclosure>

Note that the present disclosure may also have the following configurations.

<<A. Light receiving device>>

[A-1] A light receiving device
including:

a light receiving unit that has a plurality of photon counting type light receiving elements arranged, the plurality of photon counting type light receiving elements receiving light from an object;
an addition unit configured to add values of the plurality of light receiving elements at a predetermined time to use a resultant as a pixel value; and
a logarithmic transformation processing unit configured to transform the pixel value obtained as a result of addition by the addition unit into a logarithmic value or an approximate value thereof to use a resultant as logarithmic representation data used for distance measurement calculation; in which
reflected light, from an object to be measured, based on pulsed light applied by a light source unit is received.

[A-2] The light receiving device according to [A-1] described above, in which
the logarithmic transformation processing unit transforms a value obtained by subtracting a predetermined value from the pixel value into a logarithmic value or an approximate value thereof to use a resultant as the logarithmic representation data used for distance measurement calculation.

[A-3] The light receiving device according to [A-2] described above, in which
in a case where the predetermined value is larger than the pixel value, the logarithmic transformation processing unit performs transformation processing with the value obtained as a result of subtraction as zero (0).

[A-4] The light receiving device according to [A-3] described above, further including,

assuming that the predetermined value is an ambient light intensity estimate that is obtained by adding a predetermined addend to a value obtained by multiplying arithmetic mean of ambient light by a predetermined multiplier,
an ambient light estimation processing unit configured to, on the basis of the pixel value, calculate the arithmetic mean of the ambient light in logarithmic representation to estimate ambient light intensity, in which
the logarithmic transformation processing unit subtracts, from the pixel value, the ambient light intensity estimated by the ambient light estimation processing unit.

[A-5] The light receiving device according to [A-1] described above, in which
the logarithmic transformation processing unit subtracts data obtained as a result of transformation from a predetermined value into a logarithmic value or an approximate value thereof from data obtained as a result of transformation from the pixel value into a logarithmic value or an approximate value thereof, and uses a resultant as the logarithmic representation data used for distance measurement calculation.

[A-6] The light receiving device according to [A-5] described above, further including,

assuming that the predetermined value is an ambient light intensity estimate that is obtained by adding a predetermined addend to a value obtained by multiplying geometric mean of ambient light by a predetermined multiplier,
an ambient light estimation processing unit configured to, on the basis of the pixel value, calculate the geometric mean of the ambient light in logarithmic representation to estimate ambient light intensity, in which
the ambient light estimation processing unit transforms the ambient light intensity estimated by the ambient light estimation processing unit into a logarithmic value or an approximate value thereof.

[A-7] The light receiving device according to any one of [A-2] to [A-6] described above, further including a histogram addition processing unit configured to correlate a flight time from emission of pulsed light applied by the light source unit to return of the reflected light as a bin of a histogram and to store logarithmic representation data calculated on the basis of a pixel value sampled at each time as a count value of a bin corresponding to the time.

[A-8] The light receiving device according to [A-7] described above, in which the histogram addition processing unit adds logarithmic representation data of each time of the reflected light from the object to be measured based on emission of the pulsed light applied a plurality of times by the light source unit to the count value of the bin corresponding to the time and updates the histogram.

[A-9] The light receiving device according to [A-8] described above, in which the histogram addition processing unit generates a histogram obtained by accumulating count values calculated on the basis of a pixel value obtained by receiving the reflected light based on the emission of the pulsed light applied a plurality of times by the light source unit.

[A-10] The light receiving device according to [A-8] described above, in which the histogram addition processing unit subtracts, from the pixel value, a value calculated using pixel values sampled at a plurality of times in a predetermined measurement period as the predetermined value, and adds logarithmic representation data calculated by the subtraction as the count value of the bin of the histogram.

[A-11] The light receiving device according to any one of [A-1] to [A-10] described above, further including a reflected light detection unit configured to detect a peak of each reflected light by performing magnitude comparison between count values of a histogram with logarithmic representation used and to calculate a distance on the basis of a time corresponding to a bin at a start of a rise of the peak.

[A-12] The light receiving device according to any one of [A-1] to [A-11] described above, in which

an ambient light estimation processing unit
calculates an approximate value S of a logarithmic value of a sum total of pixel values while maintaining logarithmic representation of logarithmic representation data LogD obtained by transforming pixel values sampled at a plurality of times in a predetermined measurement period into logarithmic values or approximate values thereof by using a predetermined approximate expression,
calculates an approximate value $\mu$ of an arithmetic mean on the basis of a value obtained by subtracting a logarithmic value of a sampling number N or an approximate value thereof from the approximate value S,
calculates an approximate value SS of a logarithmic value of a sum total obtained by squaring pixel values while maintaining logarithmic representation of a value obtained by doubling logarithmic representation data LogD by using a predetermined approximate expression,
calculates a value MM obtained by subtracting the logarithmic value of the sampling number N or the approximate value thereof from the approximate value SS,
calculates an approximate value V of a variance of the ambient light by using the approximate value $\mu$ of the arithmetic mean and the value MM, and
outputs an ambient light intensity estimate obtained by adding a predetermined addend to a value obtained by multiplying the approximate value $\mu$ of the arithmetic mean by a predetermined multiplier, and an approximate value of a standard deviation of ambient light calculated on the basis of the approximate value V of the variance.

[A-13] The light receiving device according to any one of [A-1] to [A-12] described above, in which an ambient light estimation processing unit transforms a sum total obtained by summing pixel values sampled at a plurality of times in a predetermined measurement period into a logarithmic value or an approximate value thereof, and outputs an image in which logarithmic representation data transformed is used as a pixel value.

[A-14] The light receiving device according to any one of [A-1] to [A-12] described above, in which an ambient light estimation processing unit calculates an approximate value of a logarithmic value of a sum total of pixel values while maintaining logarithmic representation of logarithmic representation data obtained by transforming pixel values sampled at a plurality of times in a predetermined measurement period into logarithmic values or approximate values thereof by using a predetermined approximate expression, and outputs an image in which the approximate value is used as a pixel value.

[A-15] The light receiving device according to any one of [A-1] to [A-14] described above, further including a logarithmic transformation unit configured to further logarithmically transform and compress a cumulative histogram of logarithmic representation.

[A-16] The light receiving device according to any one of [A-1] to [A-14] described above, further including a logarithmic transformation unit configured to further logarithmically transform and compress a cumulative histogram of logarithmic representation after subtraction with a minimum value of the cumulative histogram.

[A-17] The light receiving device according to any one of [A-1] to [A-16] described above, in which a histogram addition processing unit has a data compression/decompression function by differential encoding before and after a memory that stores the logarithmic representation data.

[A-18] The light receiving device according to any one of [A-1] to [A-17] described above, in which the light receiving element includes an avalanche photodiode that operates in Geiger mode.

<<B. Signal processing method for light receiving device>>

[B-1] A signal processing method for a light receiving device that includes

a light receiving unit that has a plurality of photon counting type light receiving elements arranged, the plurality of photon counting type light receiving elements receiving light from an object, and
receives reflected light, from an object to be measured, based on pulsed light applied by a light source unit, the signal processing method including:

in signal processing on the light receiving device,
adding values of the plurality of light receiving elements at a predetermined time to use a resultant as a pixel value; and
next, transforming the pixel value into a logarithmic value or an approximate value thereof to use a resultant as logarithmic representation data used for distance measurement calculation.

<<C. Distance measuring device>>

[C-1] A distance measuring device including:

a light source unit configured to apply pulsed light to an object to be measured; and a light receiving device configured to receive reflected light, from an object to be measured, based on pulsed light applied by the light source unit; in which the light receiving device includes
a light receiving unit that has a plurality of photon counting type light receiving elements arranged, the plurality of photon counting type light receiving elements receiving light from an object,
an addition unit configured to add values of the plurality of light receiving elements at a predetermined time to use a resultant as a pixel value, and
a logarithmic transformation processing unit configured to convert the pixel value obtained as a result of addition by the addition unit to a logarithmic value or an approximate value thereof to use a resultant as logarithmic representation data used for distance measurement calculation.

[C-2] The distance measuring device according to [C-1] described above, in which the logarithmic transformation processing unit transforms a value obtained by subtracting a predetermined value from the pixel value into a logarithmic value or an approximate value thereof to use a resultant as the logarithmic representation data used for distance measurement calculation.

[C-3] The distance measuring device according to [C-2] described above, in which in a case where the predetermined value is larger than the pixel value, the logarithmic transformation processing unit performs transformation processing with the value obtained as a result of subtraction as zero (0).

[C-4] The distance measuring device according to [C-3] described above, further including

assuming that the predetermined value is an ambient light intensity estimate that is obtained by adding a predetermined addend to a value obtained by multiplying arithmetic mean of ambient light by a predetermined multiplier,
an ambient light estimation processing unit configured to, on the basis of the pixel value, calculate the arithmetic mean of the ambient light in logarithmic representation to estimate ambient light intensity, in which
the logarithmic transformation processing unit subtracts, from the pixel value, the ambient light intensity estimated by the ambient light estimation processing unit.

[C-5] The distance measuring device according to [C-1] described above, in which the logarithmic transformation processing unit subtracts data obtained as a result of transformation from a predetermined value into a logarithmic value or an approximate value thereof from data obtained as a result of transformation from the pixel value into a logarithmic value or an approximate value thereof, and uses a resultant as the logarithmic representation data used for distance measurement calculation.

[C-6] The distance measuring device according to [C-5] described above, further including

assuming that the predetermined value is an ambient light intensity estimate that is obtained by adding a predetermined addend to a value obtained by multiplying geometric mean of ambient light by a predetermined multiplier, an ambient light estimation processing unit configured to, on the basis of the pixel value, calculate the geometric mean of the ambient light in logarithmic representation to estimate ambient light intensity, in which the ambient light estimation processing unit transforms the ambient light intensity estimated by the ambient light estimation processing unit into a logarithmic value or an approximate value thereof.

[C-7] The distance measuring device according to any one of [C-2] to [C-6] described above, further including a histogram addition processing unit configured to correlate a flight time from emission of pulsed light applied by the light source unit to return of the pulsed light as a bin of a histogram and to store logarithmic representation data calculated on the basis of a pixel value sampled at each time as a count value of a bin corresponding to the time.

[C-8] The distance measuring device according to [C-7] described above, in which the histogram addition processing unit adds logarithmic representation data of each time of the reflected light from the object to be measured based on emission of the pulsed light applied a plurality of times by the light source unit to the count value of the bin corresponding to the time and updates the histogram.

[C-9] The distance measuring device according to [C-8] described above, in which the histogram addition processing unit generates a histogram obtained by accumulating count values calculated on the basis of a pixel value obtained by receiving the reflected light based on the emission of the pulsed light applied a plurality of times by the light source unit.

[C-10] The distance measuring device according to [C-8] described above, in which the histogram addition processing unit subtracts, from the pixel value, a value calculated using pixel values sampled at a plurality of times in a predetermined measurement period as the predetermined value, and adds logarithmic representation data calculated by the subtraction as the count value of the bin of the histogram.

[C-11] The distance measuring device according to any one of [C-1] to [C-10] described above, further including a reflected light detection unit configured to detect a peak of each reflected light by performing magnitude comparison between count values of a histogram with logarithmic representation used and to calculate a distance on the basis of a time corresponding to a bin at a start of a rise of the peak.

[C-12] The distance measuring device according to any one of [C-1] to [C-11] described above, in which

an ambient light estimation processing unit calculates an approximate value S of a logarithmic value of a sum total of pixel values while maintaining logarithmic representation of logarithmic representation data LogD obtained by transforming pixel values sampled at a plurality of times in a predetermined measurement period into logarithmic values or approximate values thereof by using a predetermined approximate expression,
calculates an approximate value $\mu$ of an arithmetic mean on the basis of a value obtained by subtracting a logarithmic value of a sampling number N or an approximate value thereof from the approximate value S,
calculates an approximate value SS of a logarithmic value of a sum total obtained by squaring pixel values while maintaining logarithmic representation of a value obtained by doubling logarithmic representation data LogD by using a predetermined approximate expression,
calculates a value MM obtained by subtracting the logarithmic value of the sampling number N or the approximate value thereof from the approximate value SS,
calculates an approximate value V of a variance of the ambient light by using the approximate value $\mu$ of the arithmetic mean and the value MM, and
outputs an ambient light intensity estimate obtained by adding a predetermined addend to a value obtained by multiplying the approximate value $\mu$ of the arithmetic mean by a predetermined multiplier, and an approximate value of a standard deviation of ambient light calculated on the basis of the approximate value V of the variance.

[C-13] The distance measuring device according to any one of [C-1] to [C-12] described above, in which an ambient light estimation processing unit transforms a sum total obtained by summing pixel values sampled at a plurality of times in a predetermined measurement period into a logarithmic value or an approximate value thereof, and outputs an image in which logarithmic representation data transformed is used as a pixel value.

[C-14] The distance measuring device according to any one of [C-1] to [C-12] described above, in which an ambient light estimation processing unit calculates an approximate value of a logarithmic value of a sum total of pixel values while maintaining logarithmic representation of logarithmic representation data obtained by transforming pixel values sampled at a plurality of times in a predetermined measurement period into logarithmic values or approximate values thereof by using a predetermined approximate expression, and outputs an image in which the approximate value is used as a pixel value.

[C-15] The distance measuring device according to any one of [C-1] to [C-14] described above, further including

a logarithmic transformation unit configured to further logarithmically transform and compress a cumulative histogram of logarithmic representation.

[C-16] The distance measuring device according to any one of [C-1] to [C-14] described above, further including a logarithmic transformation unit configured to further logarithmically transform and compress a cumulative histogram of logarithmic representation after subtraction with a minimum value of the cumulative histogram.

[C-17] The distance measuring device according to any one of [C-1] to [C-16] described above, in which a histogram addition processing unit has a data compression/decompression function by differential encoding before and after a memory that stores the logarithmic representation data.

[C-18] The distance measuring device according to any one of [C-1] to [C-17] described above, in which the light receiving element includes an avalanche photodiode that operates in Geiger mode.

REFERENCE SIGNS LIST

1 DISTANCE MEASURING DEVICE
10 OBJECT TO BE MEASURED (SUBJECT)
20 LIGHT SOURCE UNIT
30 LIGHT RECEIVING DEVICE
31 CONTROL UNIT
32 LIGHT RECEIVING UNIT
33 ADDITION UNIT
34 HISTOGRAM ADDITION PROCESSING UNIT
35 AMBIENT LIGHT ESTIMATION PROCESSING UNIT
36 SMOOTHING FILTER
37 REFLECTED LIGHT DETECTION UNIT
38 EXTERNAL OUTPUT INTERFACE (I/F)
40 HOST 50 SPAD PIXEL
60 PIXEL
61 LOGARITHMIC TRANSFORMATION PROCESSING UNIT
62 AMBIENT LIGHT ESTIMATION PROCESSING UNIT IN LOGARITHMIC REPRESENTATION
63 HISTOGRAM ADDITION PROCESSING UNIT IN LOGARITHMIC REPRESENTATION
64 SMOOTHING FILTER IN LOGARITHMIC REPRESENTATION
65 LOGARITHMIC TRANSFORMATION UNIT
66 REFLECTED LIGHT DETECTION UNIT IN LOGARITHMIC REPRESENTATION
70 PIXEL GROUP

## Claims

**1.** A light receiving device comprising:

a light receiving unit that has a plurality of photon counting type light receiving elements arranged, the plurality of photon counting type light receiving elements receiving light from an object;
an addition unit configured to add values of the plurality of light receiving elements at a predetermined time to use a resultant as a pixel value; and
a logarithmic transformation processing unit configured to transform the pixel value obtained as a result of addition by the addition unit into a logarithmic value or an approximate value thereof to use a resultant as logarithmic representation data used for distance measurement calculation; wherein
reflected light, from an object to be measured, based on pulsed light applied by a light source unit is received.

**2.** The light receiving device according to claim 1, wherein the logarithmic transformation processing unit transforms a value obtained by subtracting a predetermined value from the pixel value into a logarithmic value or an approximate value thereof to use a resultant as the logarithmic representation data used for distance measurement calculation.

**3.** The light receiving device according to claim 2, wherein

in a case where the predetermined value is larger than the pixel value, the logarithmic transformation processing unit performs transformation processing with the value obtained as a result of subtraction as zero (0).

4. The light receiving device according to claim 3, further comprising,

assuming that the predetermined value is an ambient light intensity estimate that is obtained by adding a predetermined addend to a value obtained by multiplying arithmetic mean of ambient light by a predetermined multiplier,
an ambient light estimation processing unit configured to, on a basis of the pixel value, calculate the arithmetic mean of the ambient light in logarithmic representation to estimate ambient light intensity, wherein
the logarithmic transformation processing unit subtracts, from the pixel value, the ambient light intensity estimated by the ambient light estimation processing unit.

5. The light receiving device according to claim 1, wherein
the logarithmic transformation processing unit subtracts data obtained as a result of transformation from a predetermined value into a logarithmic value or an approximate value thereof from data obtained as a result of transformation from the pixel value into a logarithmic value or an approximate value thereof, and uses a resultant as the logarithmic representation data used for distance measurement calculation.

6. The light receiving device according to claim 5, further comprising,

assuming that the predetermined value is an ambient light intensity estimate that is obtained by adding a predetermined addend to a value obtained by multiplying geometric mean of ambient light by a predetermined multiplier,
an ambient light estimation processing unit configured to, on a basis of the pixel value, calculate the geometric mean of the ambient light in logarithmic representation to estimate ambient light intensity, wherein
the ambient light estimation processing unit transforms the ambient light intensity estimated by the ambient light estimation processing unit into a logarithmic value or an approximate value thereof.

7. The light receiving device according to claim 2, further comprising
a histogram addition processing unit configured to correlate a flight time from emission of pulsed light applied by the light source unit to return of the reflected light as a bin of a histogram and to store logarithmic representation data calculated on a basis of a pixel value sampled at each time as a count value of a bin corresponding to the time.

8. The light receiving device according to claim 7, wherein
the histogram addition processing unit adds logarithmic representation data of each time of the reflected light from the object to be measured based on emission of the pulsed light applied a plurality of times by the light source unit to the count value of the bin corresponding to the time and updates the histogram.

9. The light receiving device according to claim 8, wherein
the histogram addition processing unit generates a histogram obtained by accumulating count values calculated on a basis of a pixel value obtained by receiving the reflected light based on the emission of the pulsed light applied a plurality of times by the light source unit.

10. The light receiving device according to claim 8, wherein
the histogram addition processing unit subtracts, from the pixel value, a value calculated using pixel values sampled at a plurality of times in a predetermined measurement period as the predetermined value, and adds logarithmic representation data calculated by the subtraction as the count value of the bin of the histogram.

11. The light receiving device according to claim 1, further comprising
a reflected light detection unit configured to detect a peak of each reflected light by performing magnitude comparison between count values of a histogram with logarithmic representation used and to calculate a distance on a basis of a time corresponding to a bin at a start of a rise of the peak.

12. The light receiving device according to claim 1, wherein

an ambient light estimation processing unit
calculates an approximate value S of a logarithmic value of a sum total of pixel values while maintaining logarithmic representation of logarithmic representation data LogD obtained by transforming pixel values sampled at a plurality of times in a predetermined measurement period into logarithmic values or approximate values thereof by using a predetermined approximate expression,
calculates an approximate value $\mu$ of an arithmetic mean on a basis of a value obtained by subtracting a logarithmic value of a sampling number N or an approximate value thereof from the approximate value S,
calculates an approximate value SS of a logarithmic value of a sum total obtained by squaring pixel values while maintaining logarithmic representation of a value obtained by doubling logarithmic representation data LogD by using a predetermined approximate expression,
calculates a value MM obtained by subtracting the logarithmic value of the sampling number N or the approximate value thereof from the approximate value SS,
calculates an approximate value V of a variance of the ambient light by using the approximate value $\mu$ of the arithmetic mean and the value MM, and
outputs an ambient light intensity estimate obtained by adding a predetermined addend to a value obtained by multiplying the approximate value $\mu$ of the arithmetic mean by a predetermined multiplier, and an approximate value of a standard deviation of ambient light calculated on a basis of the approximate value V of the variance.

**13.** The light receiving device according to claim 1, wherein
an ambient light estimation processing unit transforms a sum total obtained by summing pixel values sampled at a plurality of times in a predetermined measurement period into a logarithmic value or an approximate value thereof, and outputs an image in which logarithmic representation data transformed is used as a pixel value.

**14.** The light receiving device according to claim 1, wherein
an ambient light estimation processing unit calculates an approximate value of a logarithmic value of a sum total of pixel values while maintaining logarithmic representation of logarithmic representation data obtained by transforming pixel values sampled at a plurality of times in a predetermined measurement period into logarithmic values or approximate values thereof by using a predetermined approximate expression, and outputs an image in which the approximate value is used as a pixel value.

**15.** The light receiving device according to claim 1, further comprising
a logarithmic transformation unit configured to further logarithmically transform and compress a cumulative histogram of logarithmic representation.

**16.** The light receiving device according to claim 1, further comprising
a logarithmic transformation unit configured to further logarithmically transform and compress a cumulative histogram of logarithmic representation after subtraction with a minimum value of the cumulative histogram.

**17.** The light receiving device according to claim 1, wherein
a histogram addition processing unit has a data compression/decompression function by differential encoding before and after a memory that stores the logarithmic representation data.

**18.** The light receiving device according to claim 1, wherein
the light receiving element includes an avalanche photodiode that operates in Geiger mode.

**19.** A signal processing method for a light receiving device that

includes
a light receiving unit that has a plurality of photon counting type light receiving elements arranged, the plurality of photon counting type light receiving elements receiving light from an object, and
receives reflected light, from an object to be measured, based on pulsed light applied by a light source unit, the signal processing method comprising:

in signal processing on the light receiving device,
adding values of the plurality of light receiving elements at a predetermined time to use a resultant as a pixel value; and
next, transforming the pixel value into a logarithmic value or an approximate value thereof to use a resultant as logarithmic representation data used for distance measurement calculation.

**20.** A distance measuring device

comprising:

a light source unit configured to apply pulsed light to an object to be measured; and

a light receiving device configured to receive reflected light, from an object to be measured, based on pulsed light applied by the light source unit; wherein

the light receiving device includes

a light receiving unit that has a plurality of photon counting type light receiving elements arranged, the plurality of photon counting type light receiving elements receiving light from an object,

an addition unit configured to add values of the plurality of light receiving elements at a predetermined time to use a resultant as a pixel value, and

a logarithmic transformation processing unit configured to convert the pixel value obtained as a result of addition by the addition unit to a logarithmic value or an approximate value thereof to use a resultant as logarithmic representation data used for distance measurement calculation.

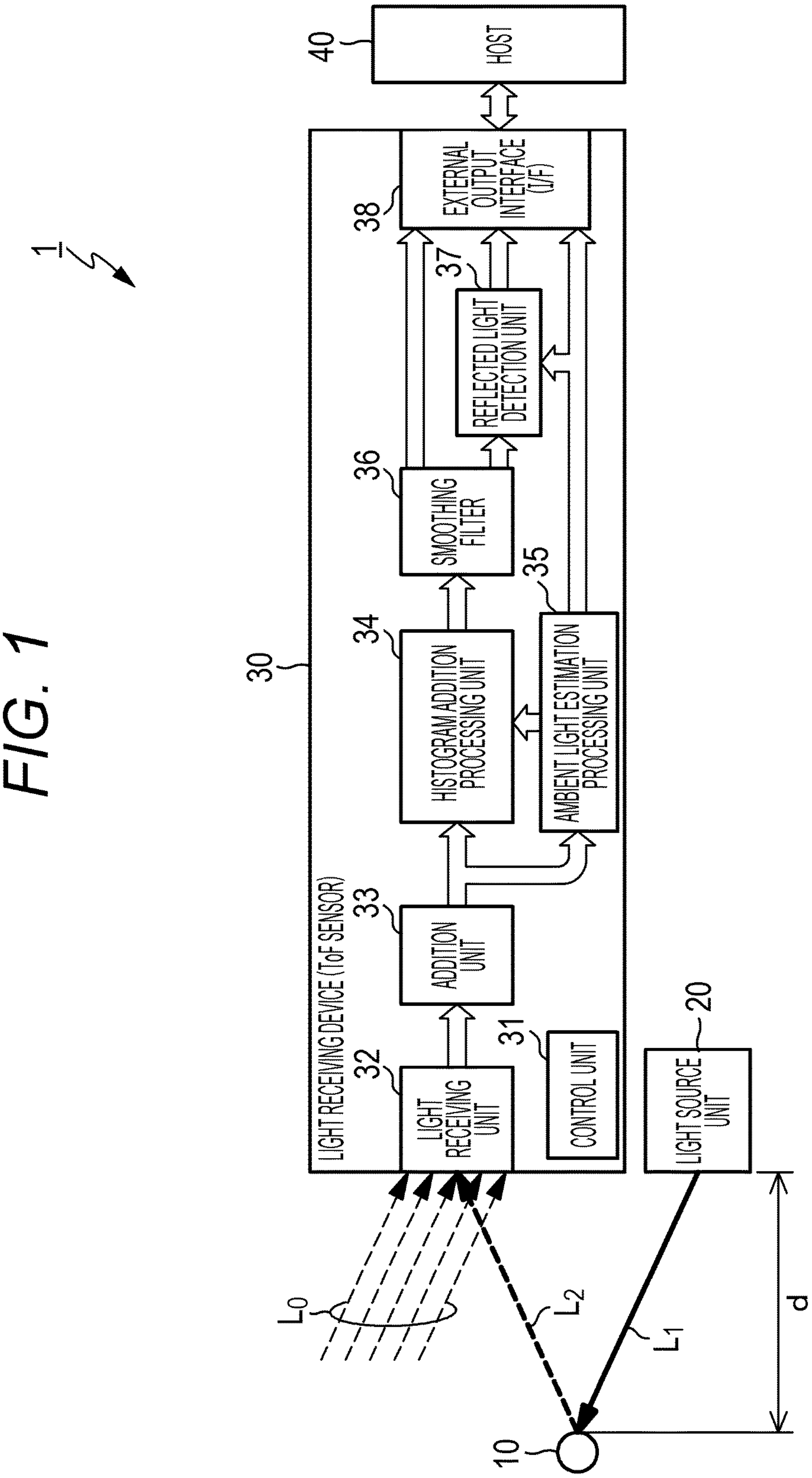
1
30
LIGHT RECEIVING DEVICE (ToF SENSOR)
32
LIGHT RECEIVING UNIT
31
CONTROL UNIT
33
ADDITION UNIT
34
HISTOGRAM ADDITION PROCESSING UNIT
35
AMBIENT LIGHT ESTIMATION PROCESSING UNIT
36
SMOOTHING FILTER
37
REFLECTED LIGHT DETECTION UNIT
38
EXTERNAL OUTPUT INTERFACE (I/F)
40
HOST
20
LIGHT SOURCE UNIT
10
L0
L1
L2
d

FIG. 1

FIG. 2

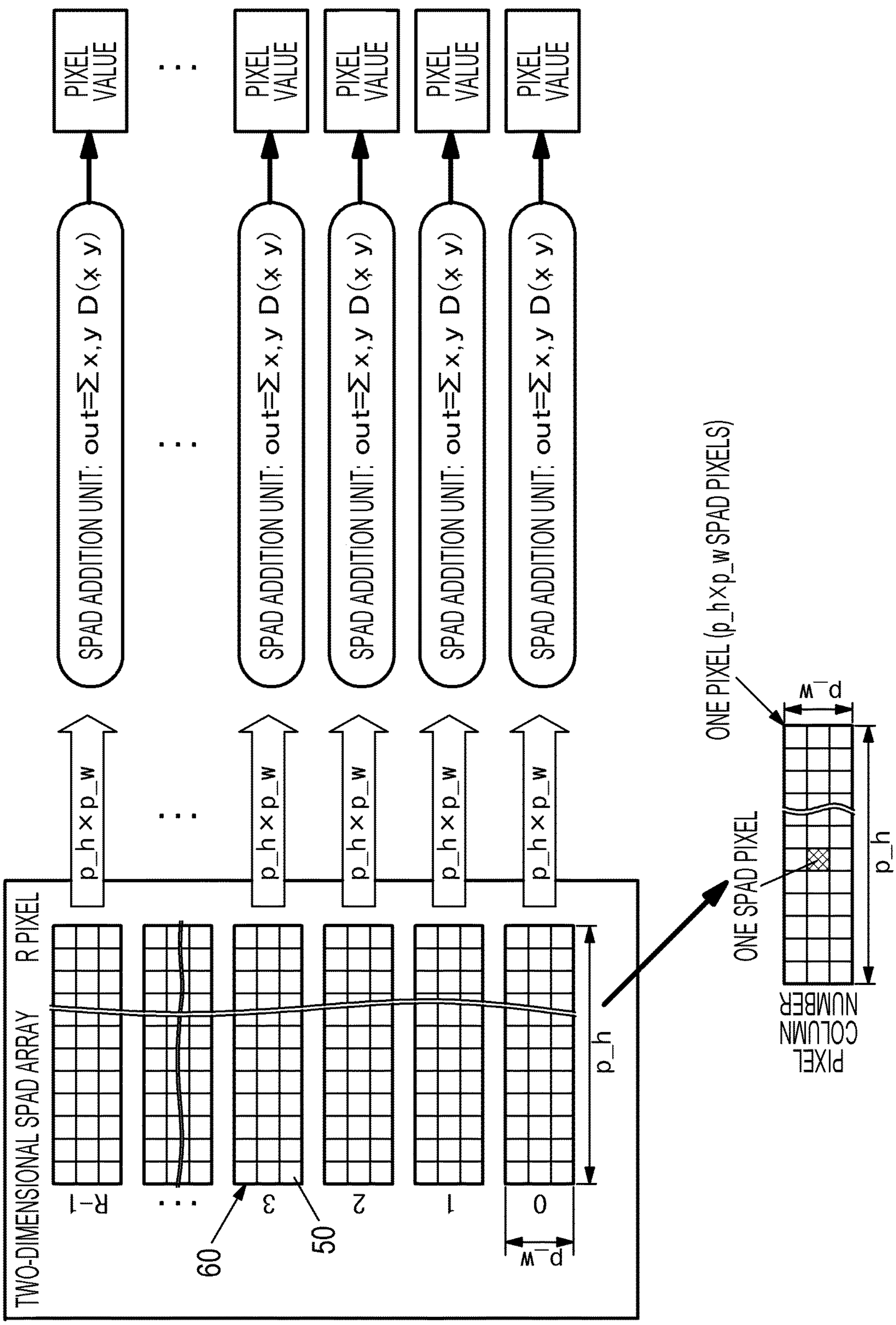
TWO-DIMENSIONAL SPAD ARRAY
R PIXEL
R-1
...
3
2
1
0
60
50
p_w
p_h
p_h×p_w
SPAD ADDITION UNIT: out=Σx,y D(x, y)
PIXEL VALUE
ONE PIXEL (p_h×p_w SPAD PIXELS)
ONE SPAD PIXEL
PIXEL COLUMN NUMBER

FIG. 3A

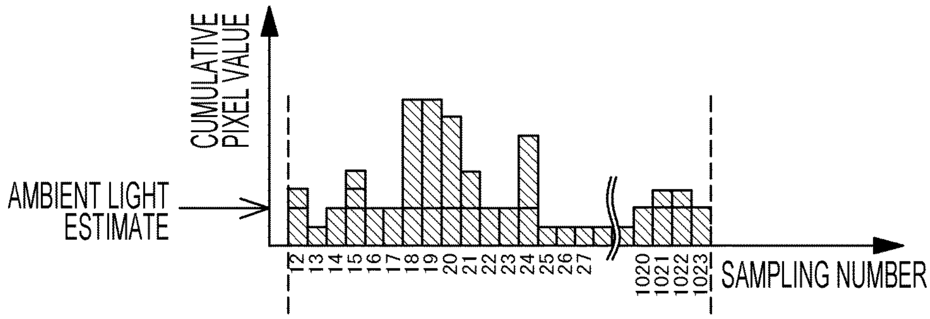


FIG. 3B

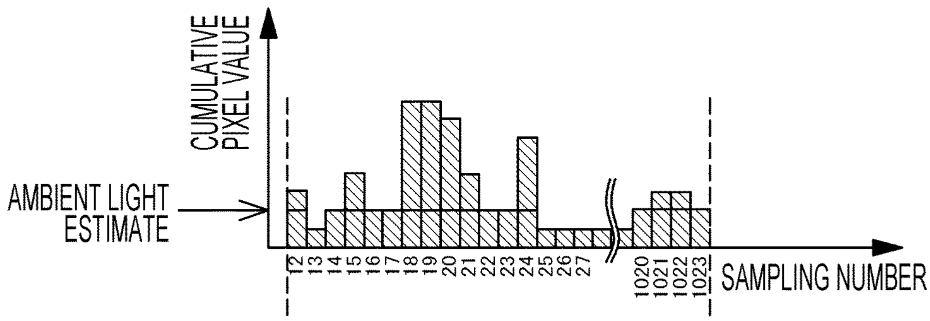


FIG. 3C

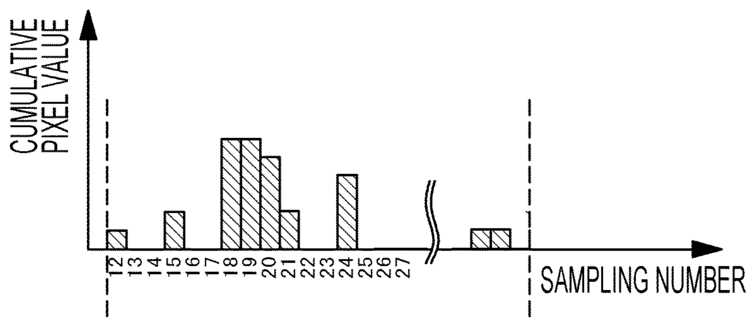

FIG. 4A

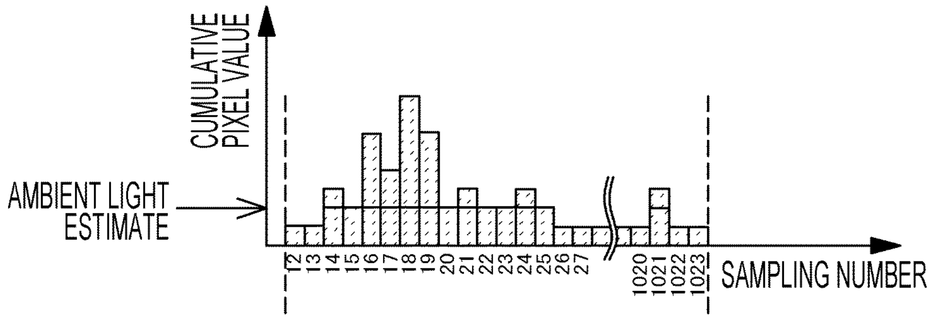


FIG. 4B

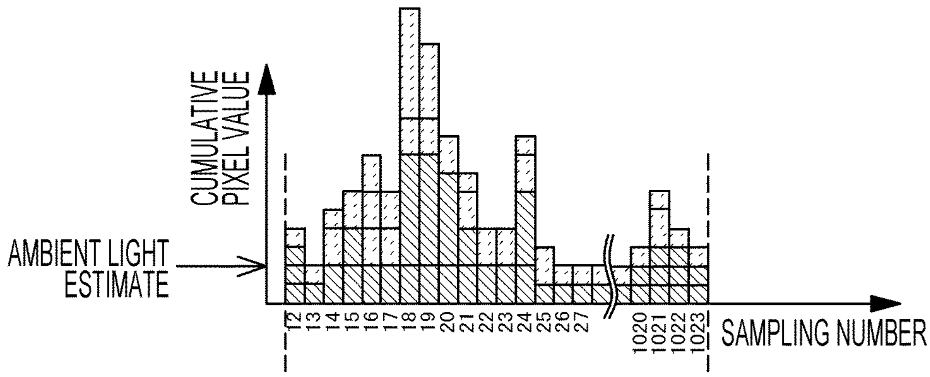


FIG. 4C

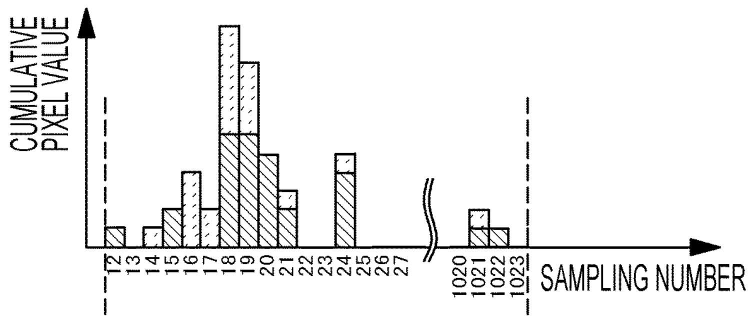

FIG. 5A

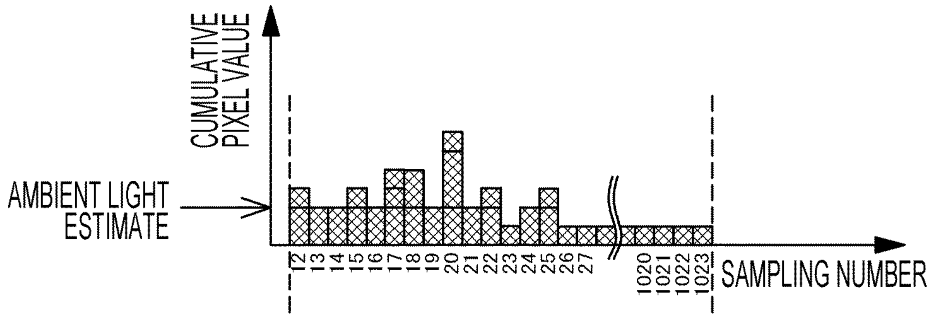


FIG. 5B

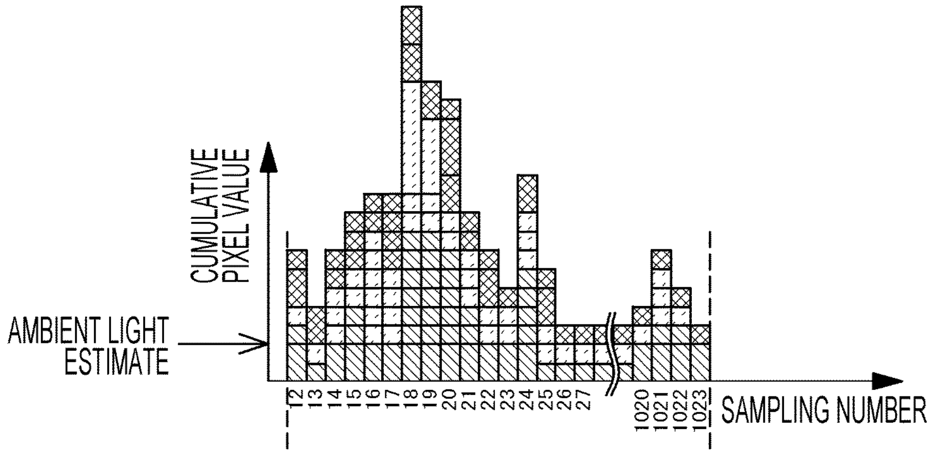


FIG. 5C

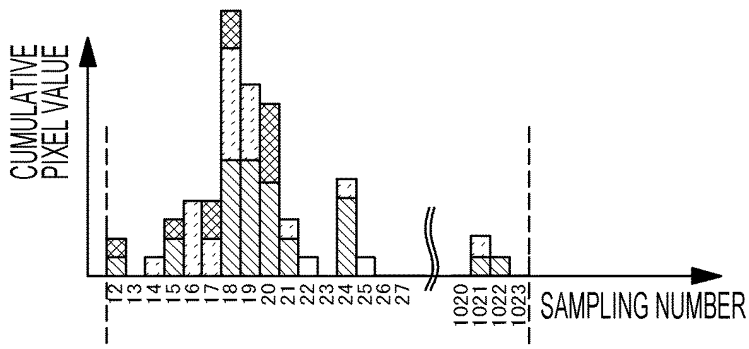

FIG. 6A

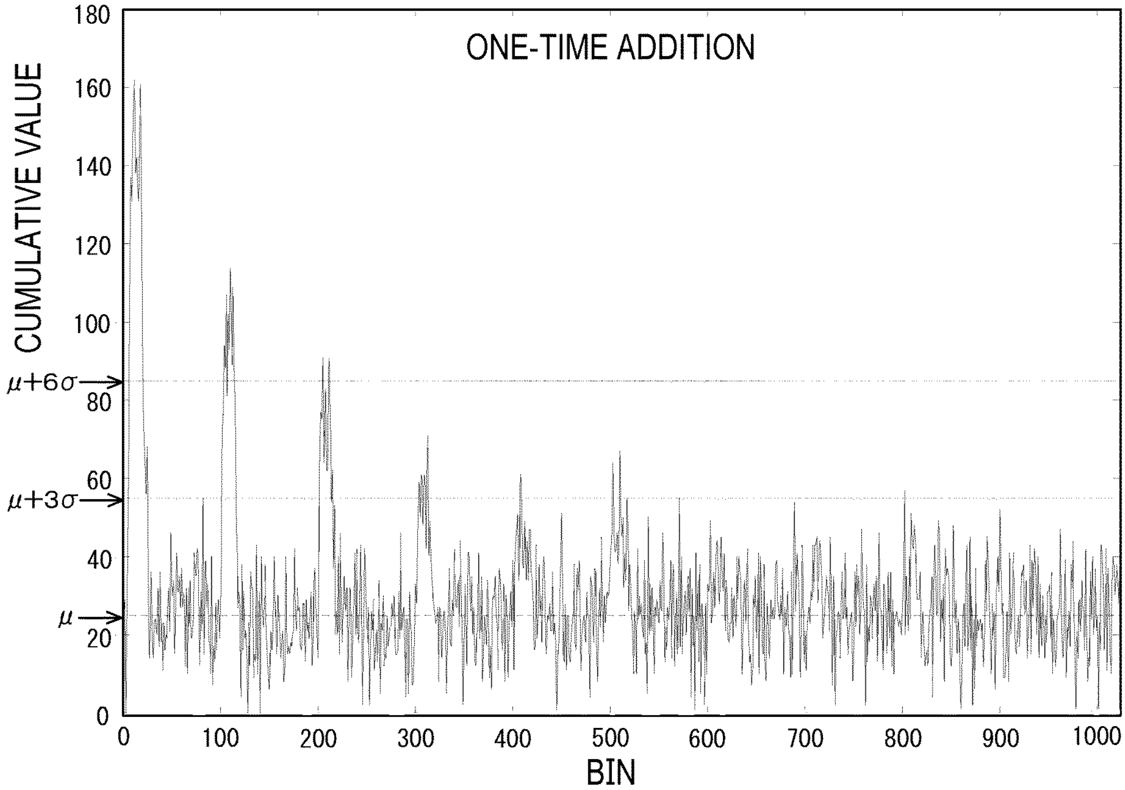
ONE-TIME ADDITION
CUMULATIVE VALUE
BIN
μ+6σ
μ+3σ
μ
0
20
40
60
80
100
120
140
160
180
0
100
200
300
400
500
600
700
800
900
1000

FIG. 6B

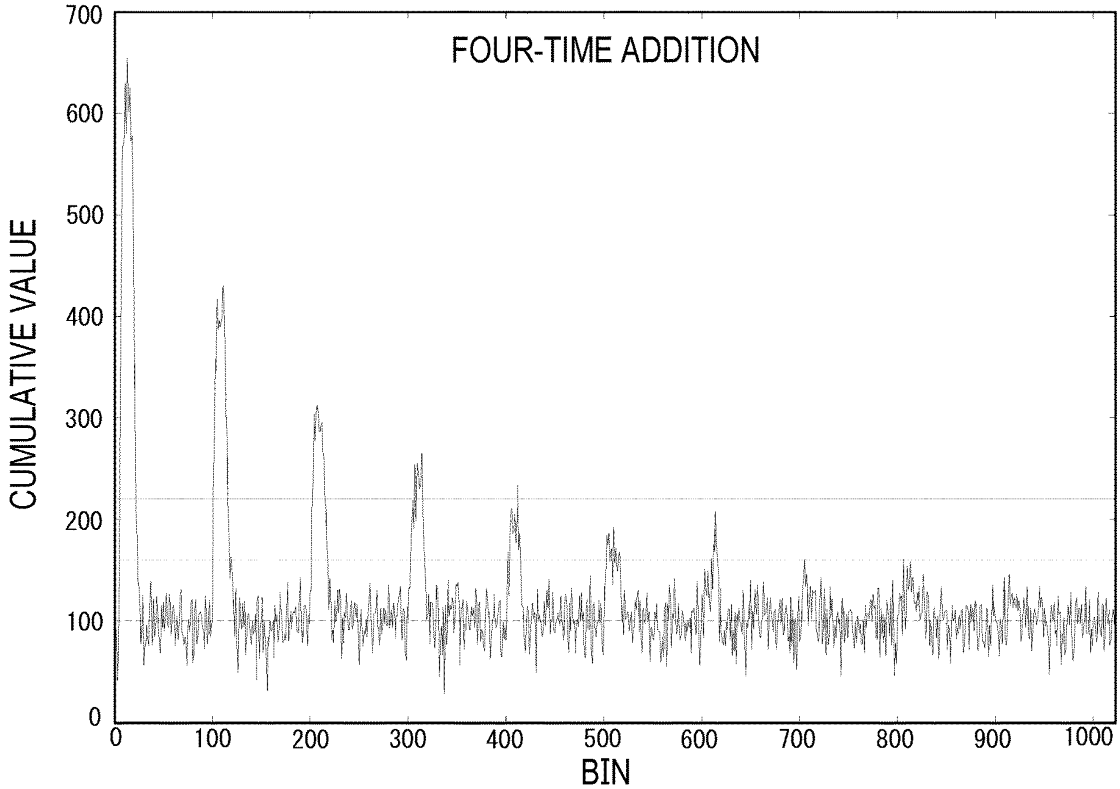
FOUR-TIME ADDITION
CUMULATIVE VALUE
BIN
0
100
200
300
400
500
600
700
0
100
200
300
400
500
600
700
800
900
1000

FIG. 7A

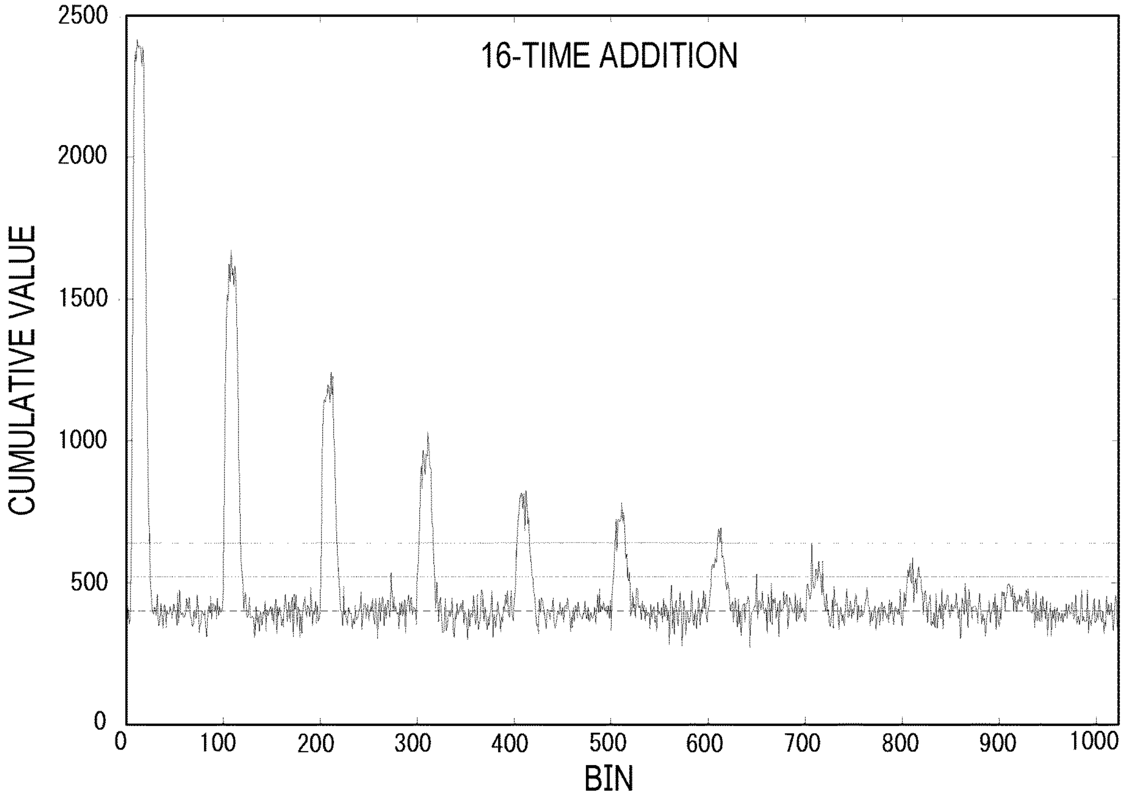
16-TIME ADDITION
CUMULATIVE VALUE
2500
2000
1500
1000
500
0
0
100
200
300
400
500
600
700
800
900
1000
BIN

FIG. 7B

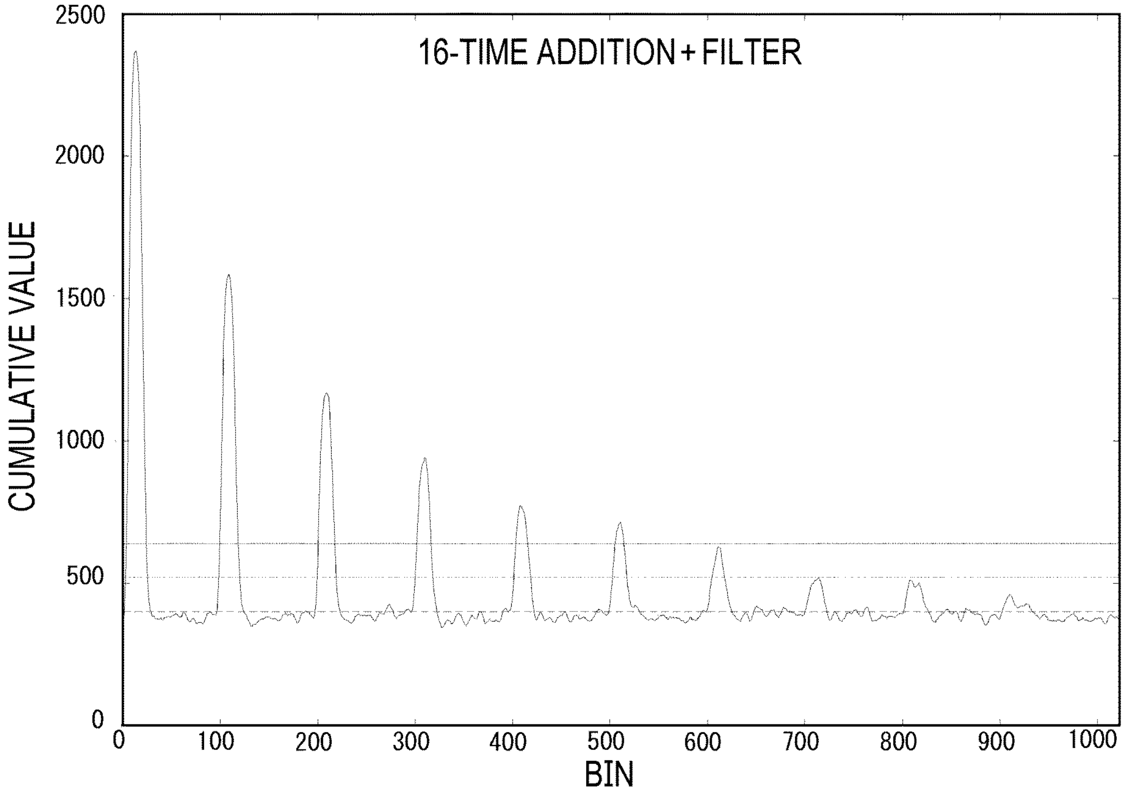
16-TIME ADDITION+FILTER
CUMULATIVE VALUE
2500
2000
1500
1000
500
0
0
100
200
300
400
500
600
700
800
900
1000
BIN

# FIG. 8A

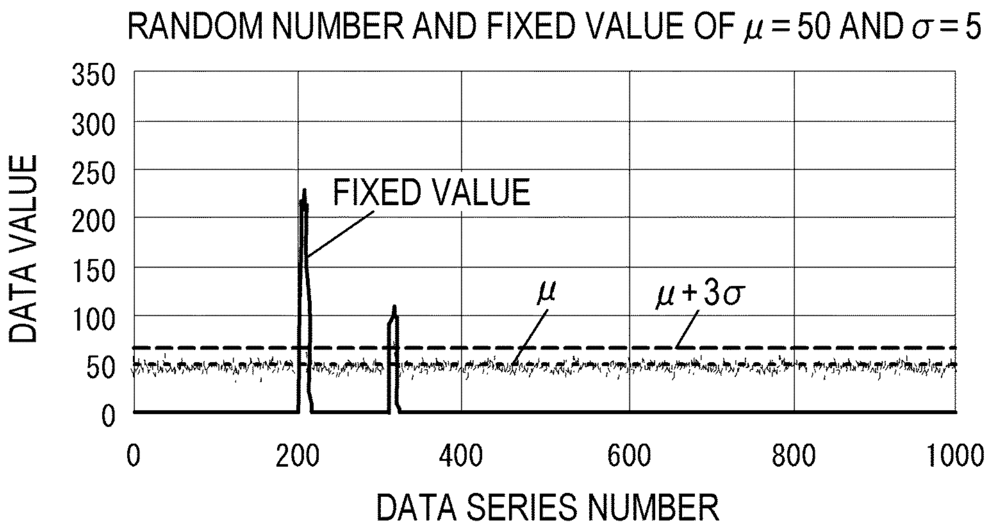
RANDOM NUMBER AND FIXED VALUE OF μ = 50 AND σ = 5
DATA VALUE
350
300
250
200
150
100
50
0
FIXED VALUE
μ
μ + 3σ
0
200
400
600
800
1000
DATA SERIES NUMBER

# FIG. 8B

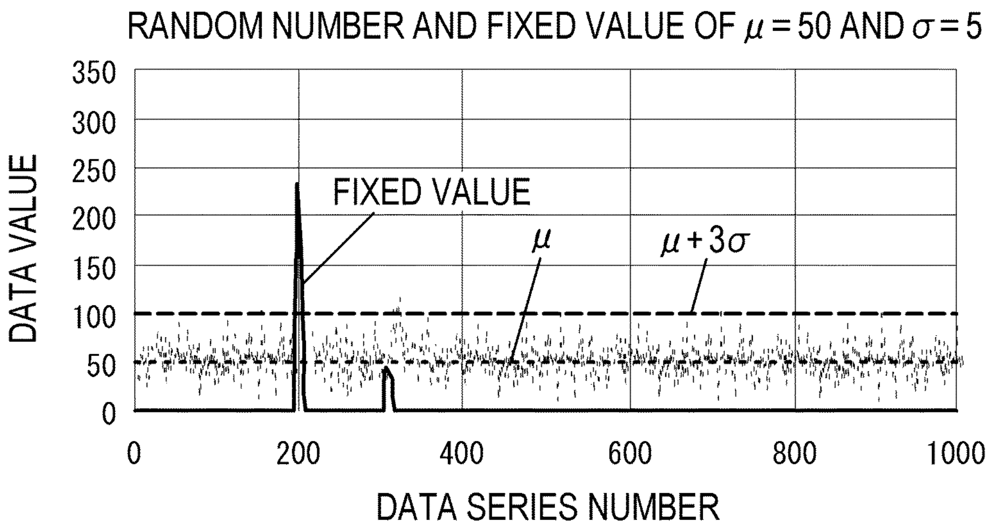
RANDOM NUMBER AND FIXED VALUE OF μ = 50 AND σ = 5
DATA VALUE
350
300
250
200
150
100
50
0
FIXED VALUE
μ
μ + 3σ
0
200
400
600
800
1000
DATA SERIES NUMBER

# FIG. 9A

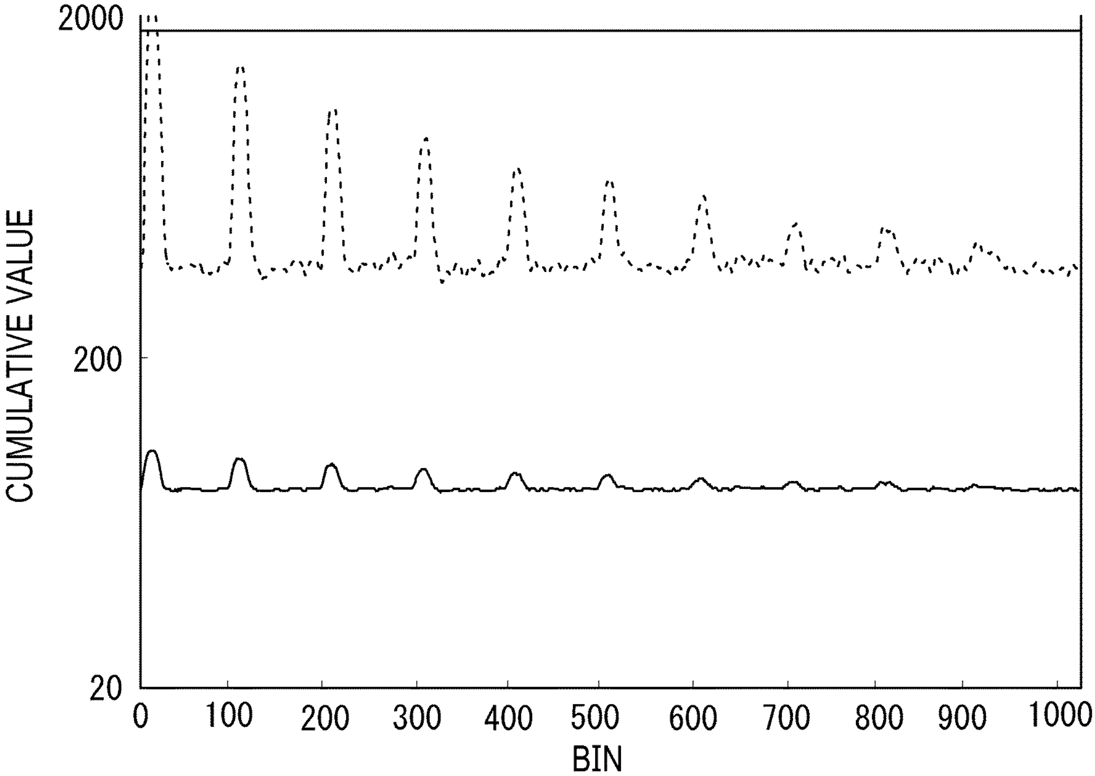
2000
200
20
CUMULATIVE VALUE
0
100
200
300
400
500
600
700
800
900
1000
BIN

# FIG. 9B

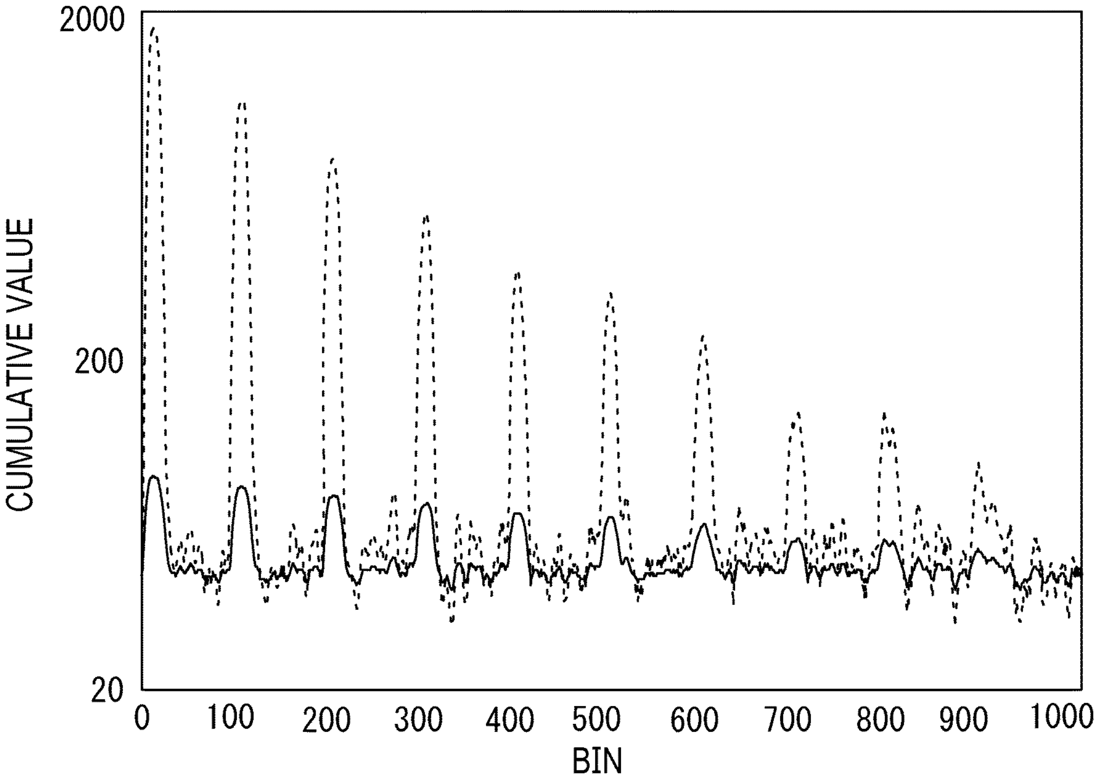
2000
200
20
CUMULATIVE VALUE
0
100
200
300
400
500
600
700
800
900
1000
BIN

FIG. 10

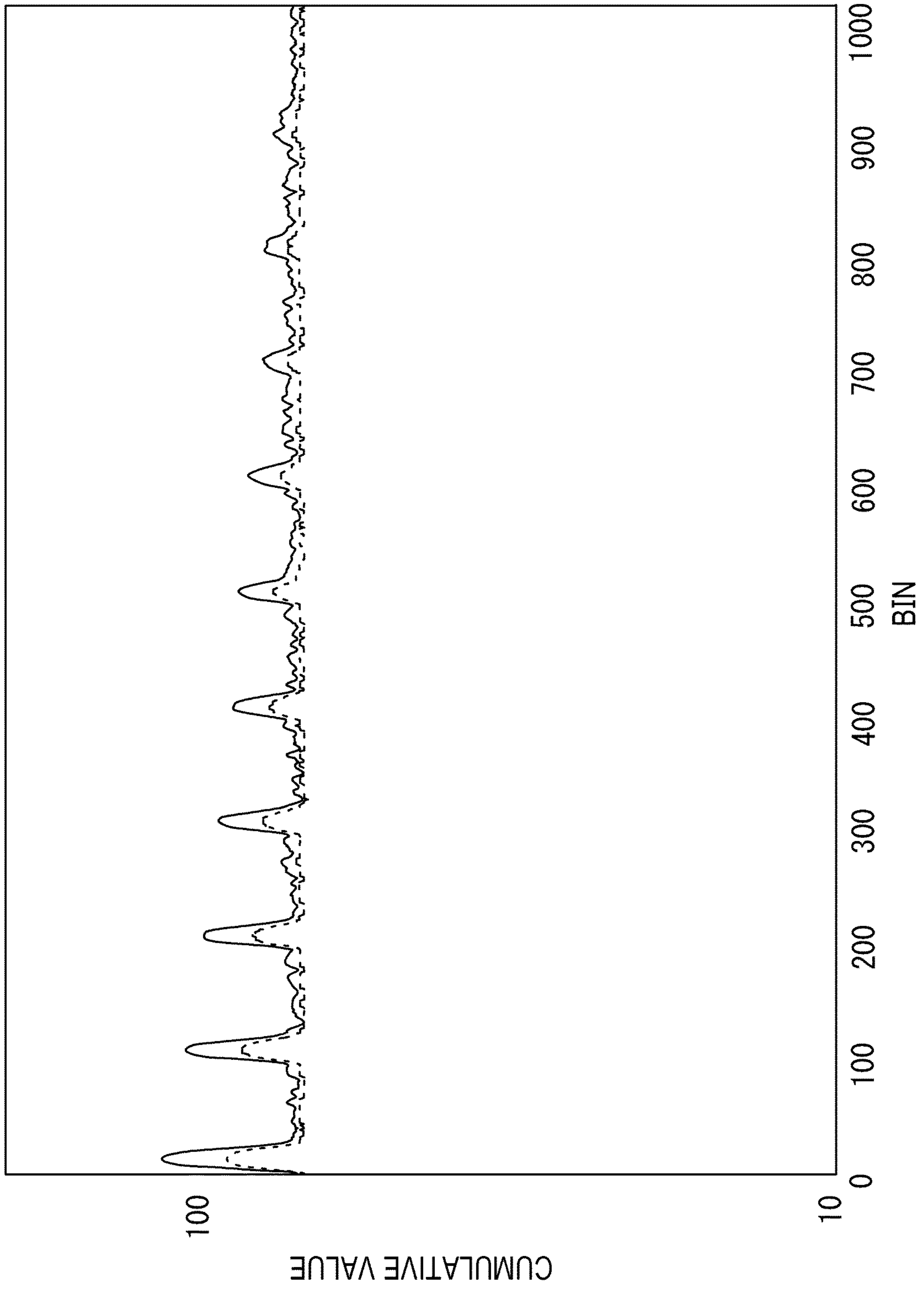
CUMULATIVE VALUE
100
10
BIN
0
100
200
300
400
500
600
700
800
900
1000

FIG. 11

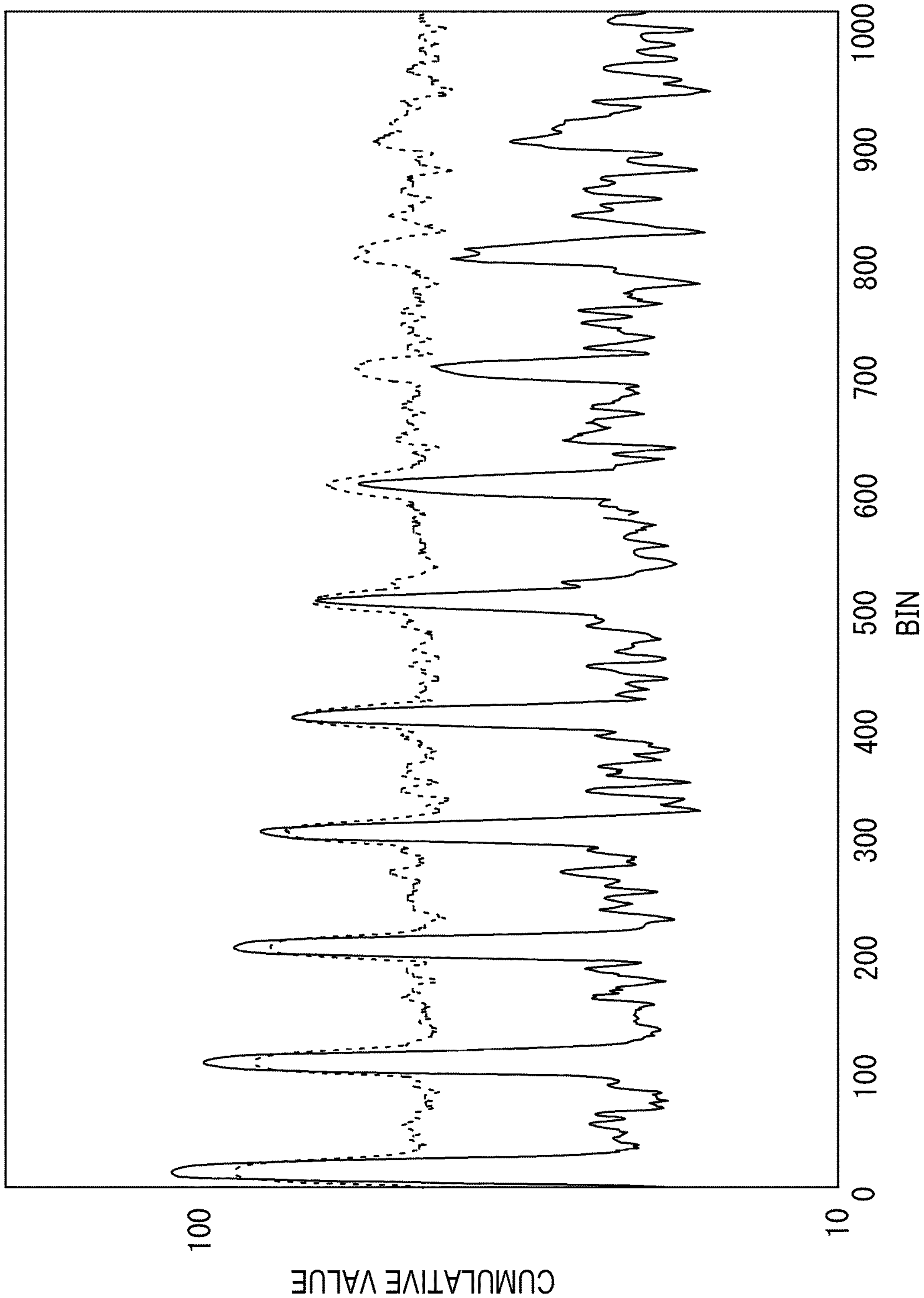
CUMULATIVE VALUE
100
10
BIN
0
100
200
300
400
500
600
700
800
900
1000

FIG. 12

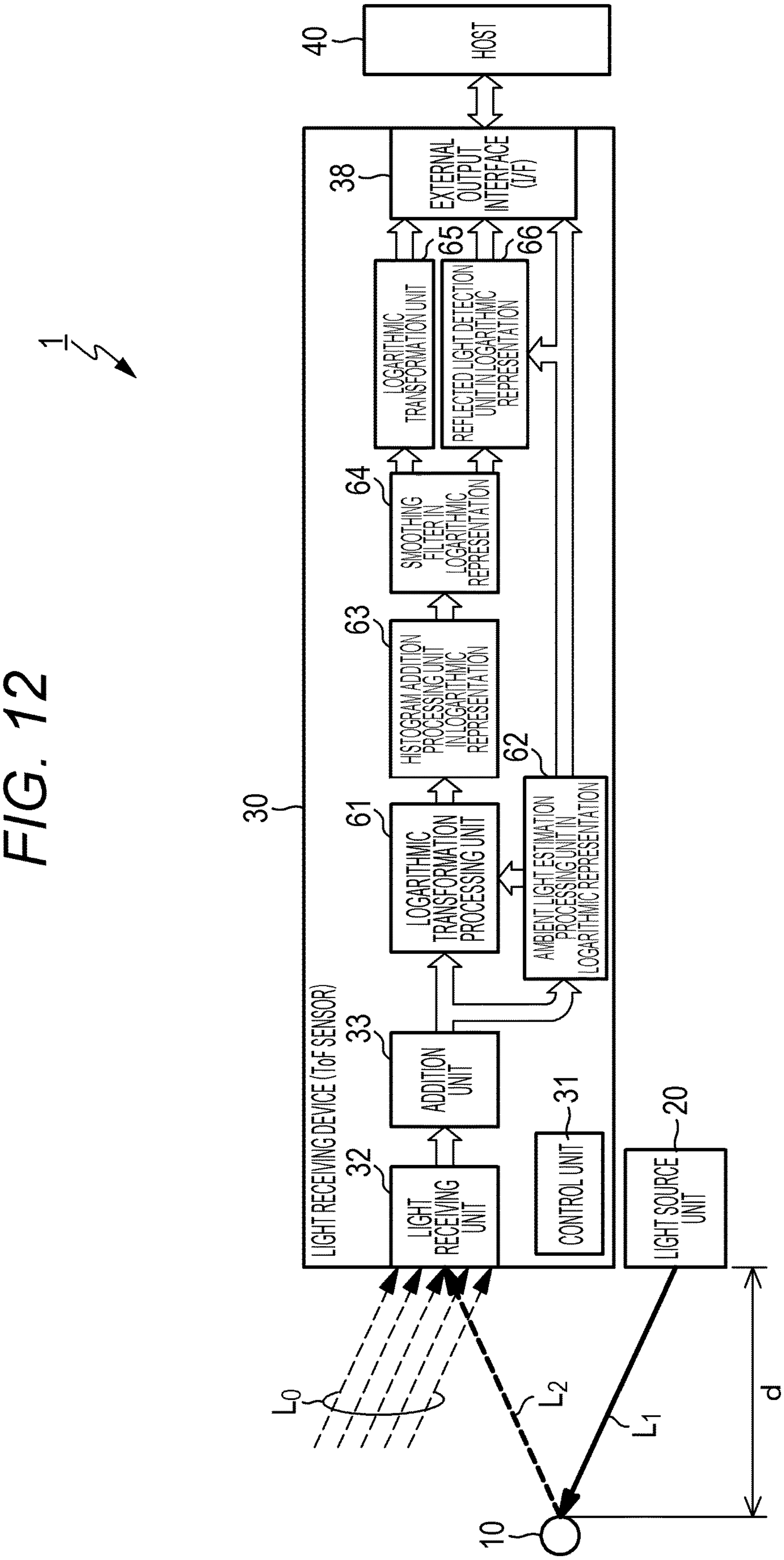
1
40
HOST
30
LIGHT RECEIVING DEVICE (ToF SENSOR)
38
EXTERNAL OUTPUT INTERFACE (I/F)
65
LOGARITHMIC TRANSFORMATION UNIT
66
REFLECTED LIGHT DETECTION UNIT IN LOGARITHMIC REPRESENTATION
64
SMOOTHING FILTER IN LOGARITHMIC REPRESENTATION
63
HISTOGRAM ADDITION PROCESSING UNIT IN LOGARITHMIC REPRESENTATION
62
AMBIENT LIGHT ESTIMATION PROCESSING UNIT IN LOGARITHMIC REPRESENTATION
61
LOGARITHMIC TRANSFORMATION PROCESSING UNIT
33
ADDITION UNIT
32
LIGHT RECEIVING UNIT
31
CONTROL UNIT
20
LIGHT SOURCE UNIT
$L_0$
$L_2$
$L_1$
d
10

FIG. 13

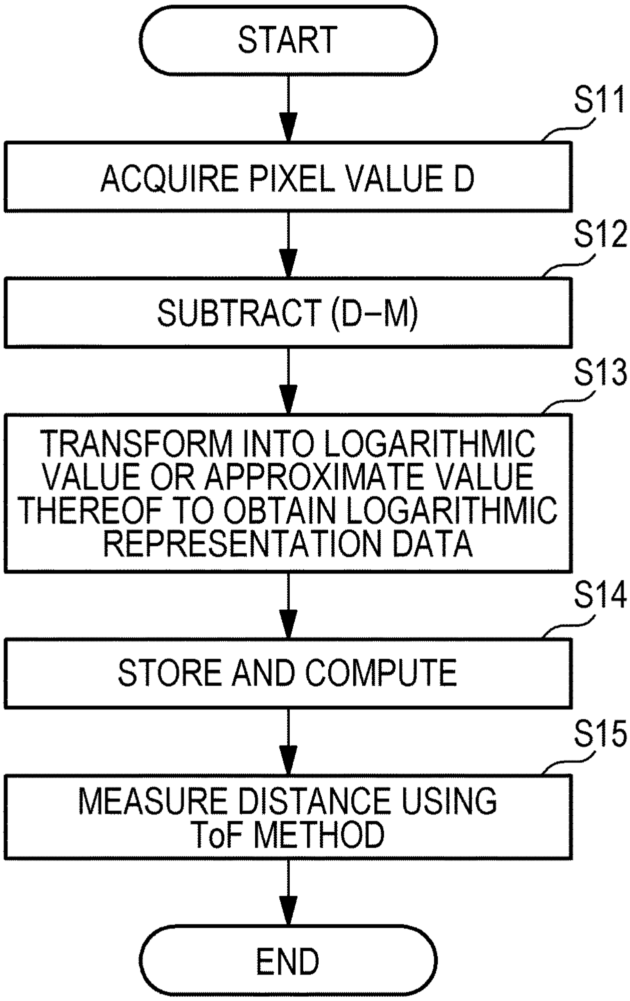
START
S11
ACQUIRE PIXEL VALUE D
S12
SUBTRACT (D−M)
S13
TRANSFORM INTO LOGARITHMIC VALUE OR APPROXIMATE VALUE THEREOF TO OBTAIN LOGARITHMIC REPRESENTATION DATA
S14
STORE AND COMPUTE
S15
MEASURE DISTANCE USING ToF METHOD
END

FIG. 14

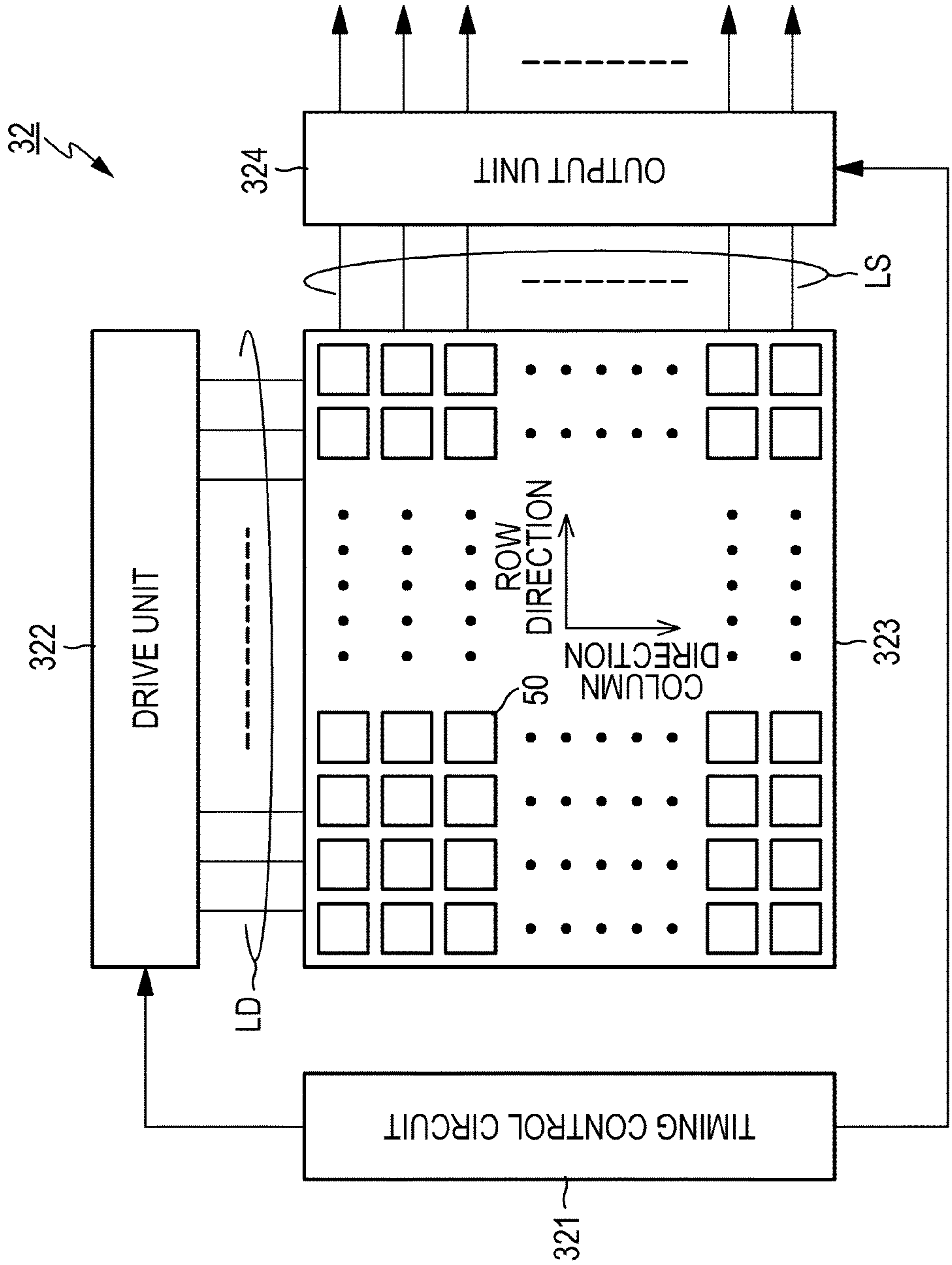
32
324
OUTPUT UNIT
LS
322
DRIVE UNIT
ROW DIRECTION
COLUMN DIRECTION
50
323
LD
TIMING CONTROL CIRCUIT
321

FIG. 15

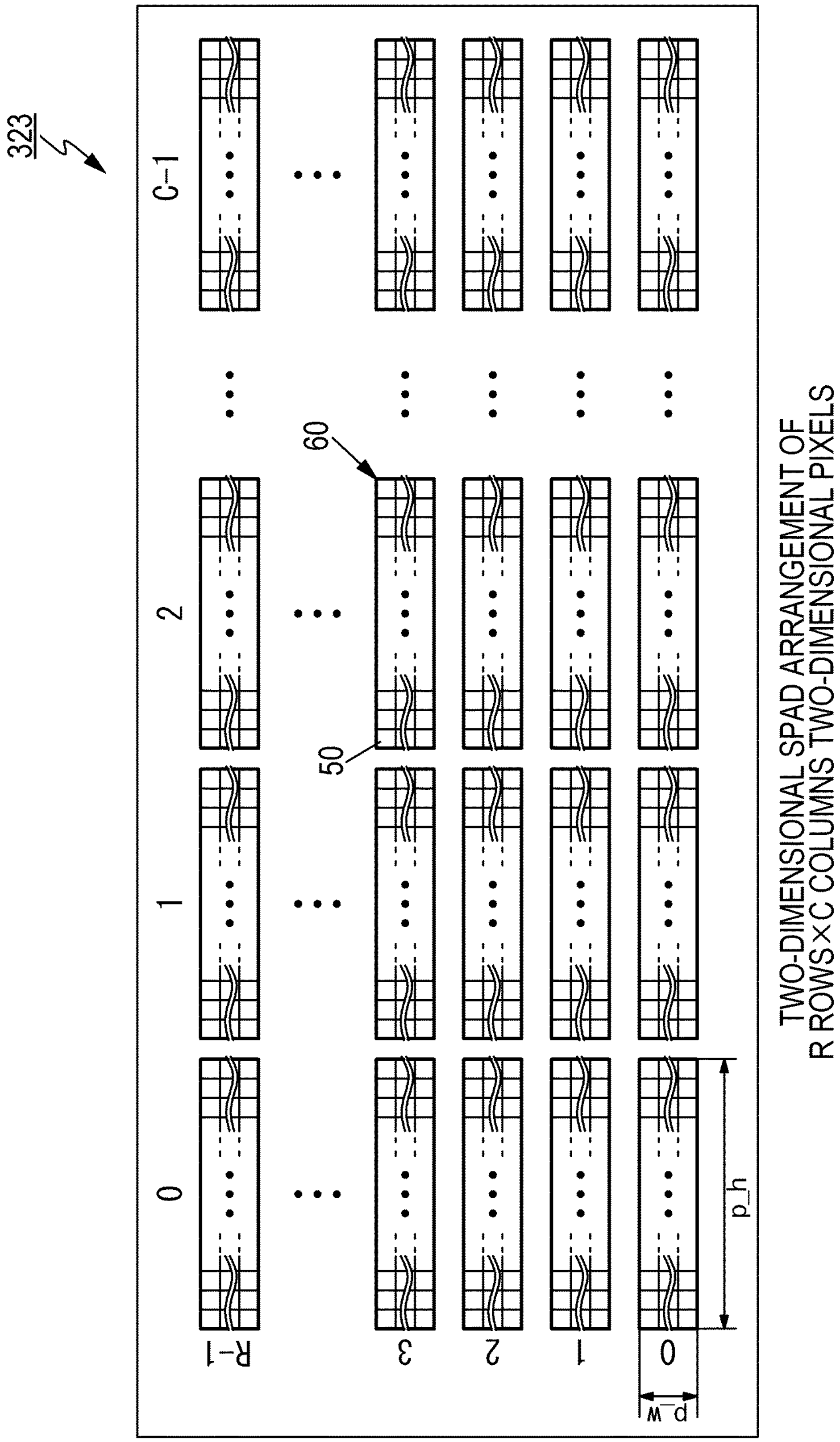
323
0
1
2
C−1
R−1
3
2
1
0
60
50
p_h
p_w
TWO-DIMENSIONAL SPAD ARRANGEMENT OF
R ROWS×C COLUMNS TWO-DIMENSIONAL PIXELS

FIG. 16

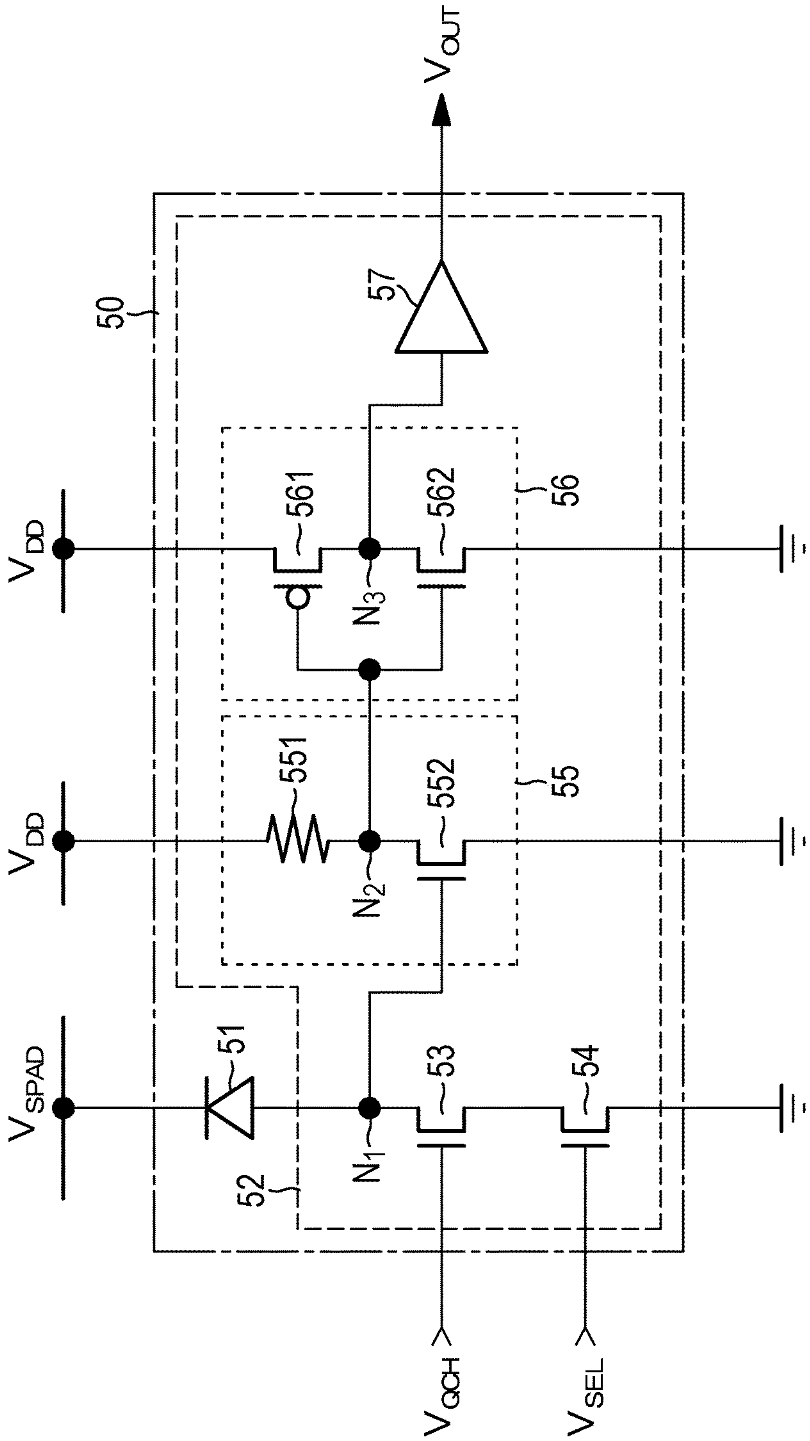
$V_{OUT}$
50
57
$V_{DD}$
561
562
56
$N_3$
$V_{DD}$
551
552
55
$N_2$
$V_{SPAD}$
51
53
54
$N_1$
52
$V_{QCH}$
$V_{SEL}$

FIG. 17

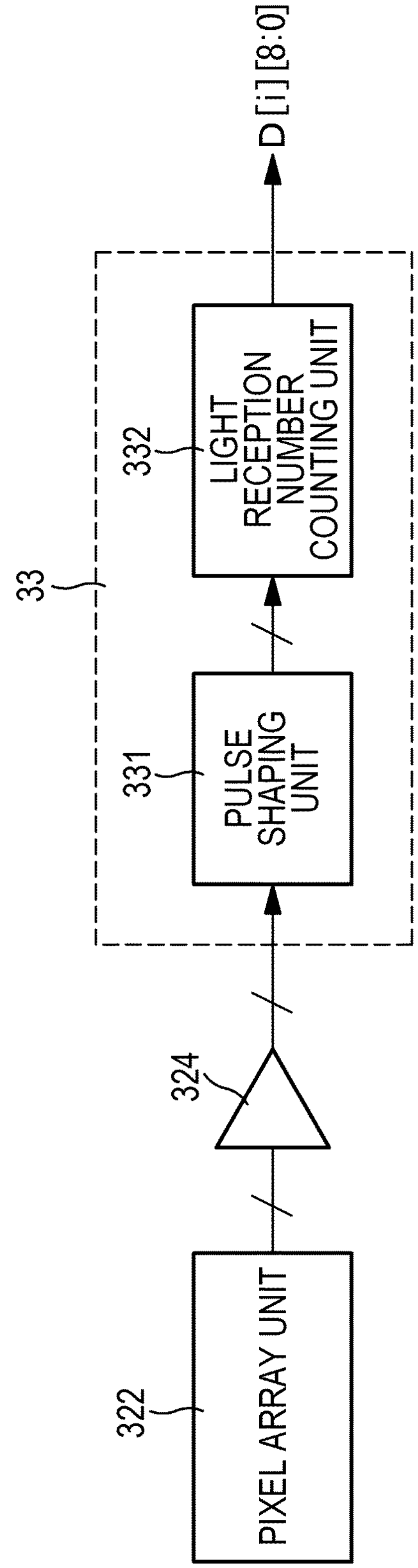
D [i] [8:0]
332
LIGHT RECEPTION NUMBER COUNTING UNIT
33
331
PULSE SHAPING UNIT
324
322
PIXEL ARRAY UNIT

FIG. 18

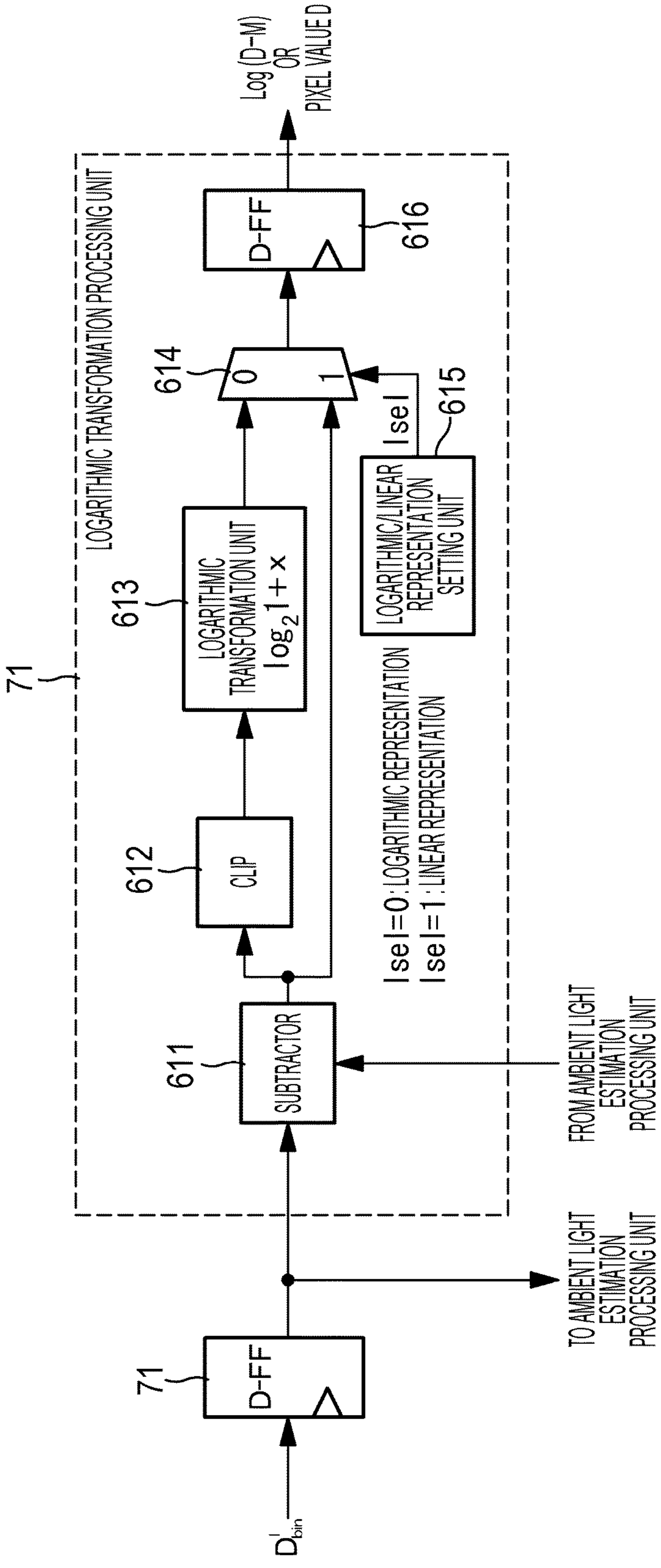
71
LOGARITHMIC TRANSFORMATION PROCESSING UNIT
$D^l_{bin}$
71
D-FF
TO AMBIENT LIGHT ESTIMATION PROCESSING UNIT
611
SUBTRACTOR
FROM AMBIENT LIGHT ESTIMATION PROCESSING UNIT
612
CLIP
613
LOGARITHMIC TRANSFORMATION UNIT
$\log_2 1+x$
614
0
1
Isel
615
LOGARITHMIC/LINEAR REPRESENTATION SETTING UNIT
Isel=0 : LOGARITHMIC REPRESENTATION
Isel=1 : LINEAR REPRESENTATION
D-FF
616
Log(D-M) OR PIXEL VALUE D

FIG. 19

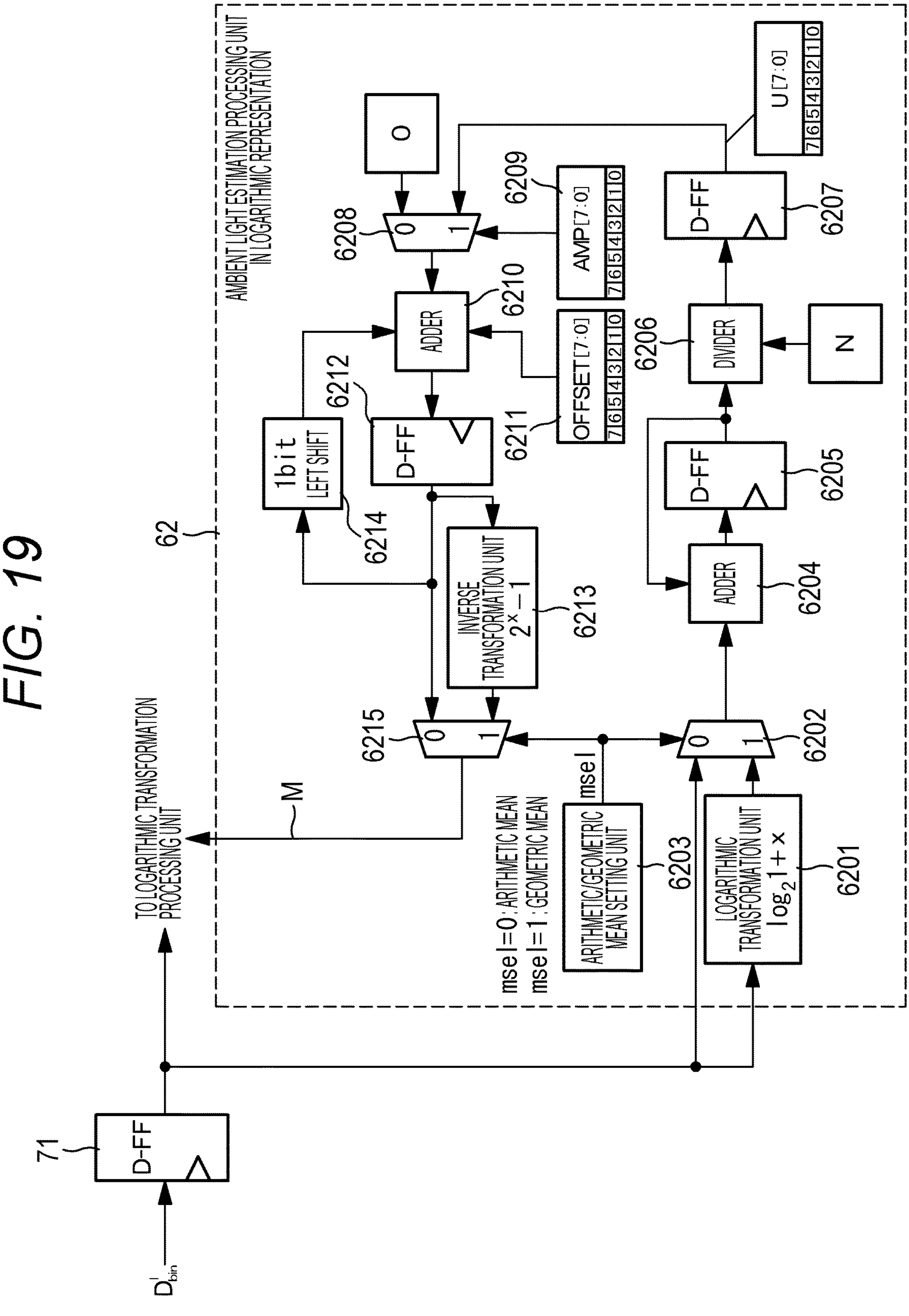
62
AMBIENT LIGHT ESTIMATION PROCESSING UNIT IN LOGARITHMIC REPRESENTATION
71
D-FF
$D^{l}_{bin}$
TO LOGARITHMIC TRANSFORMATION PROCESSING UNIT
M
6201
LOGARITHMIC TRANSFORMATION UNIT
$\log_2 1+x$
6202
0
1
6203
ARITHMETIC/GEOMETRIC MEAN SETTING UNIT
msel
msel=0: ARITHMETIC MEAN
msel=1: GEOMETRIC MEAN
6204
ADDER
6205
D-FF
6206
DIVIDER
N
6207
D-FF
U[7:0]
7 6 5 4 3 2 1 0
6208
0
1
O
6209
AMP[7:0]
7 6 5 4 3 2 1 0
6210
ADDER
6211
OFFSET[7:0]
7 6 5 4 3 2 1 0
6212
D-FF
6213
INVERSE TRANSFORMATION UNIT
$2^x-1$
6214
1bit LEFT SHIFT
6215
0
1

FIG. 20

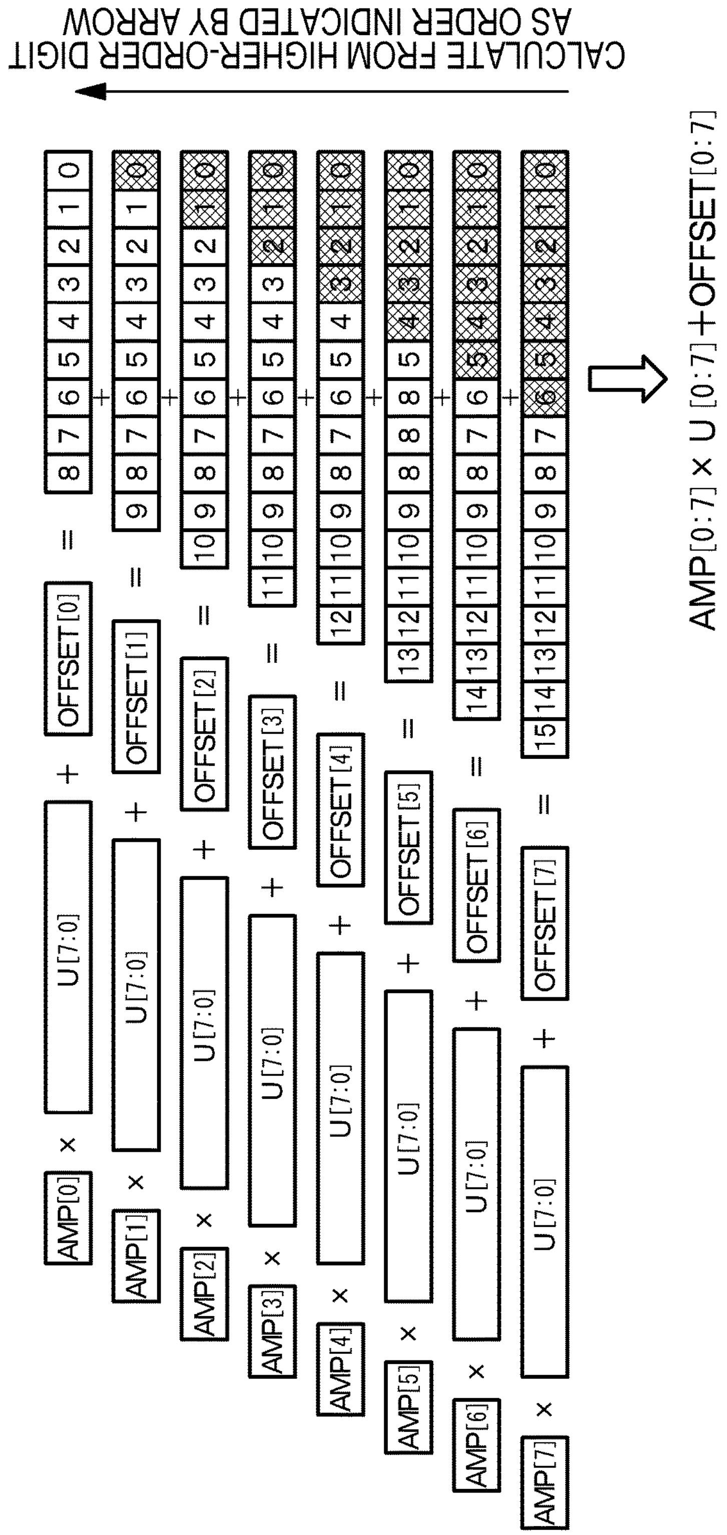
CALCULATE FROM HIGHER-ORDER DIGIT
AS ORDER INDICATED BY ARROW
AMP[0] × U[7:0] + OFFSET[0] =
AMP[1] × U[7:0] + OFFSET[1] =
AMP[2] × U[7:0] + OFFSET[2] =
AMP[3] × U[7:0] + OFFSET[3] =
AMP[4] × U[7:0] + OFFSET[4] =
AMP[5] × U[7:0] + OFFSET[5] =
AMP[6] × U[7:0] + OFFSET[6] =
AMP[7] × U[7:0] + OFFSET[7] =
AMP[0:7] × U [0:7] + OFFSET[0:7]

FIG. 21

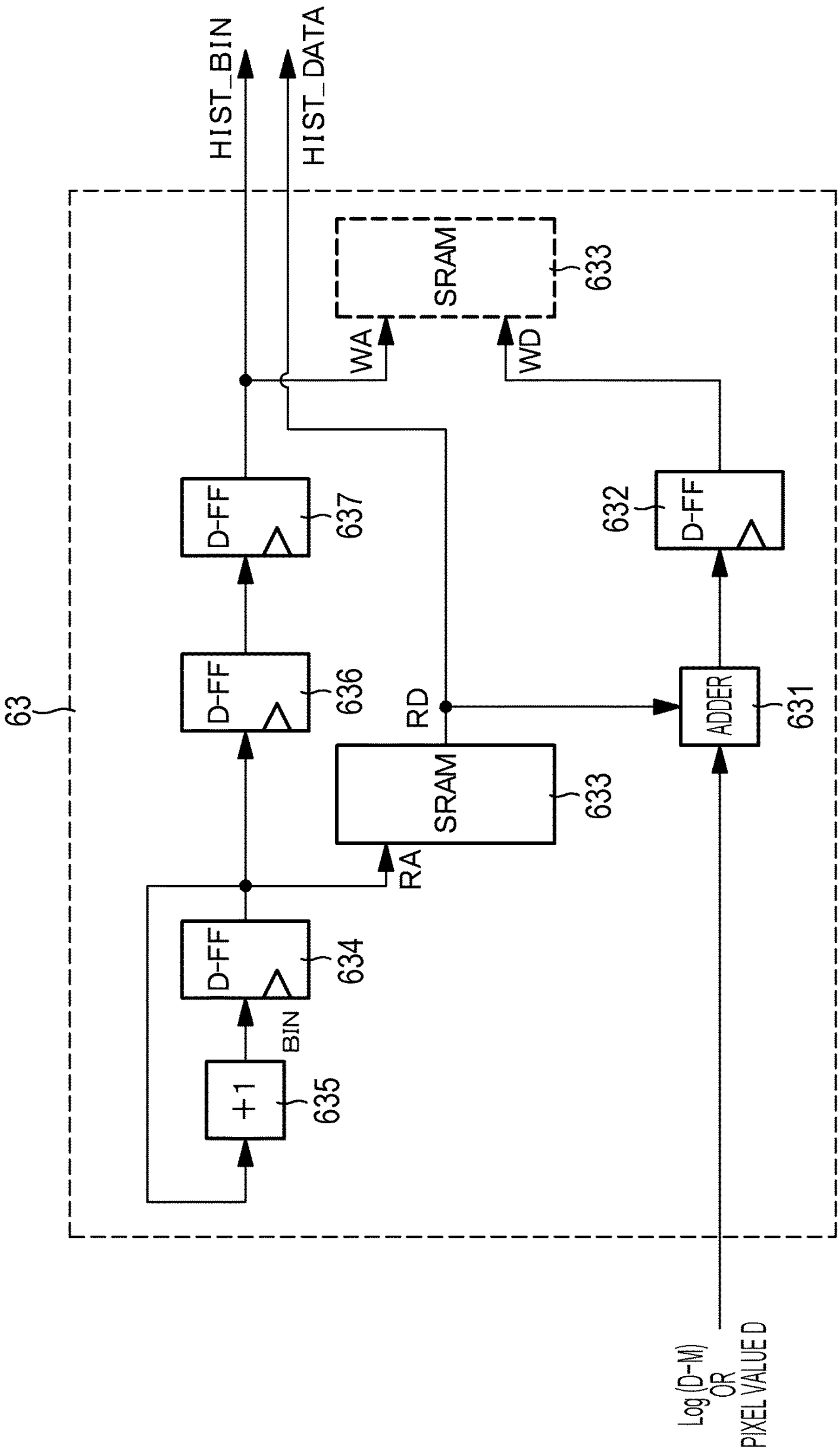
63
HIST_BIN
HIST_DATA
SRAM
633
WA
WD
D-FF
637
D-FF
636
D-FF
634
D-FF
632
RD
RA
SRAM
633
ADDER
631
BIN
+1
635
Log(D−M)
OR
PIXEL VALUE D

FIG. 22

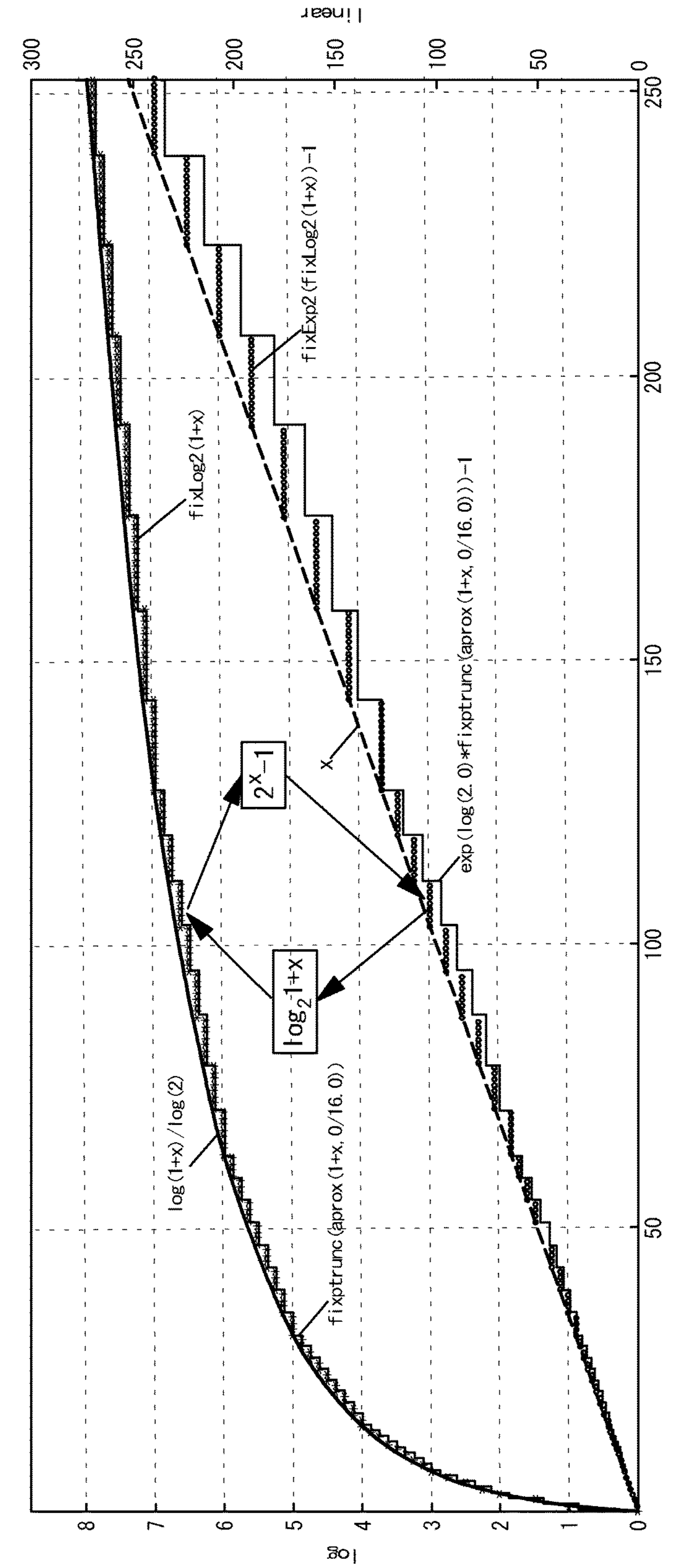
linear
log
fixLog2(1+x)
log(1+x)/log(2)
fixptrunc(aprox(1+x, 0/16.0))
fixExp2(fixLog2(1+x))-1
exp(log(2.0)*fixptrunc(aprox(1+x, 0/16.0)))-1
x
$2^x-1$
$\log_2 1+x$
0
50
100
150
200
250
300
1
2
3
4
5
6
7
8

# FIG. 23

VerilogHDL

```
module LOG2
 (
  input [8-1:0] X,
  output [3+3-1:0] L
  );

 wire [8-1:0]   xp1 = X + 8'h1;
 wire [3+8-1:0]   xx = {xp1,3'b000};
 assign L = xp1[7] ? {3'h7,xx[7+3-1:7]} :
               xp1[6] ? {3'h6,xx[6+3-1:6]} :
               xp1[5] ? {3'h5,xx[5+3-1:5]} :
               xp1[4] ? {3'h4,xx[4+3-1:4]} :
               xp1[3] ? {3'h3,xx[3+3-1:3]} :
               xp1[2] ? {3'h2,xx[2+3-1:2]} :
               xp1[1] ? {3'h1,xx[1+3-1:1]} :
                     {      3'h0,xx[0+3-1:0]} ;
endmodule
```

```
module EXP2
 (
  input [3+3-1:0] X,
  output [8-1:0] E
  );

 wire [3-1:0]  e = X[3+3-1:3];
 wire [3-1:0]  m = X[0+3-1:0];
 wire [3+8-1:0] f = {1'b1,m}<<e;

 assign E = f[3+8-1:3] - 1;

endmodule
```

FIG. 24A

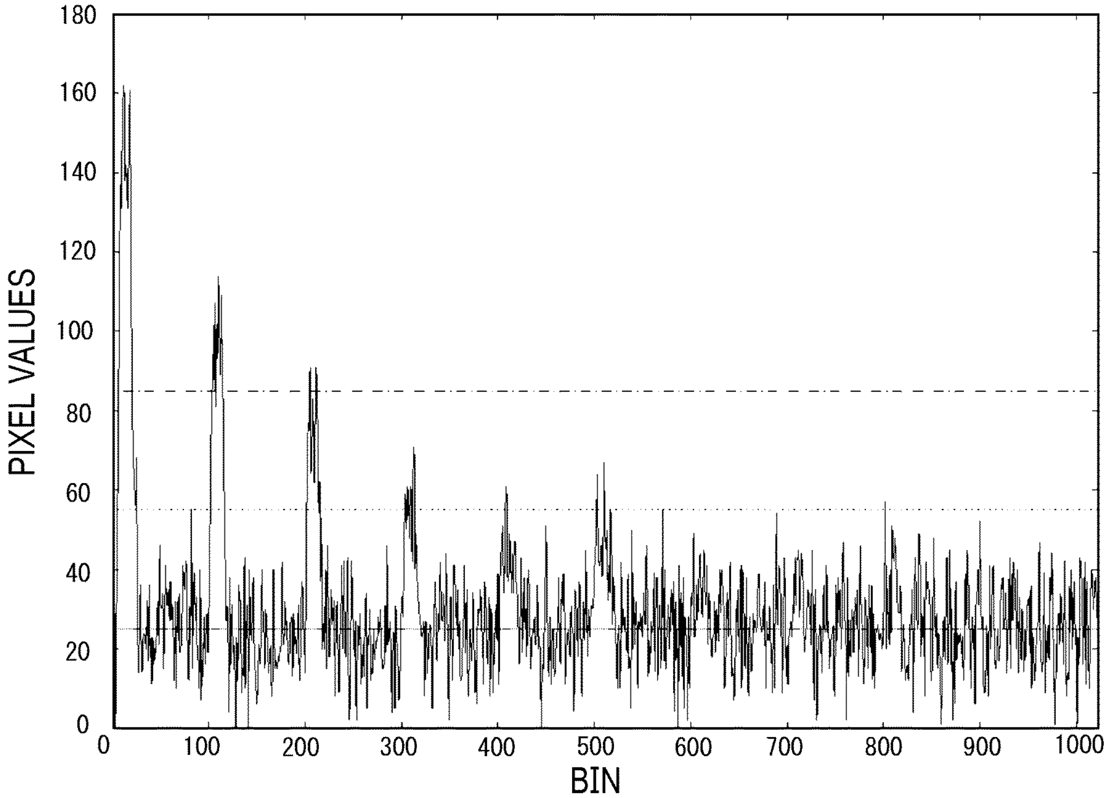


FIG. 24B

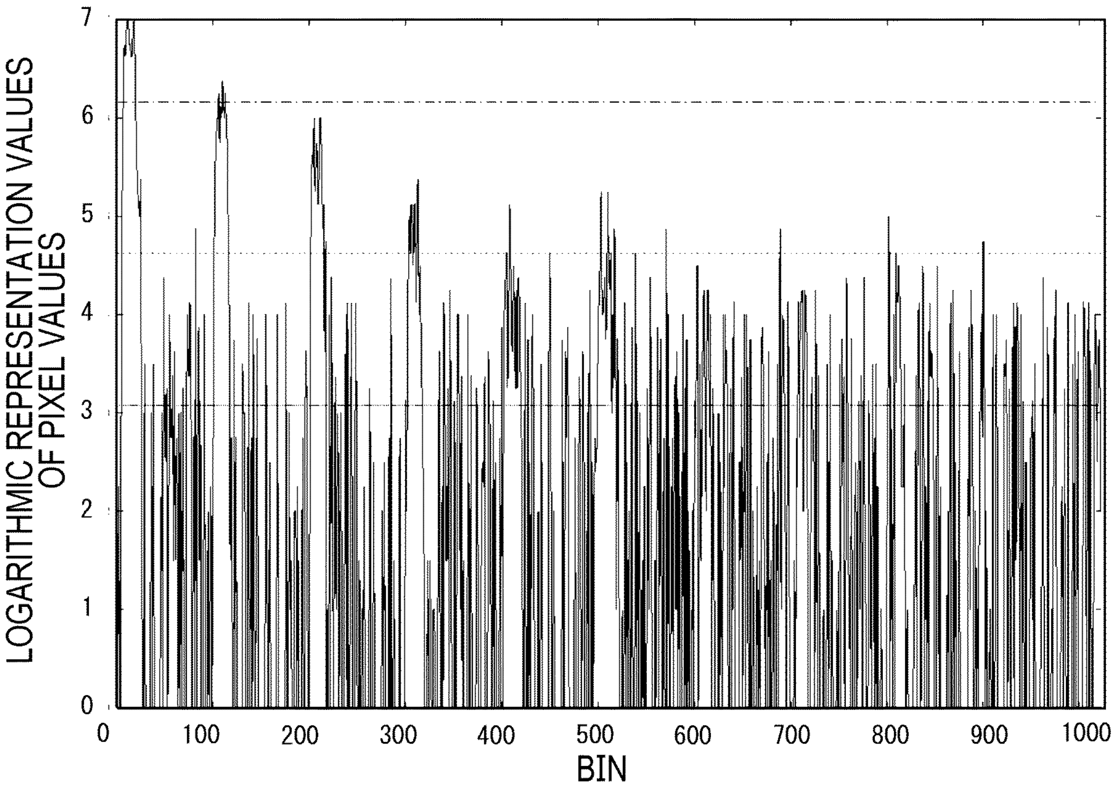

FIG. 25A

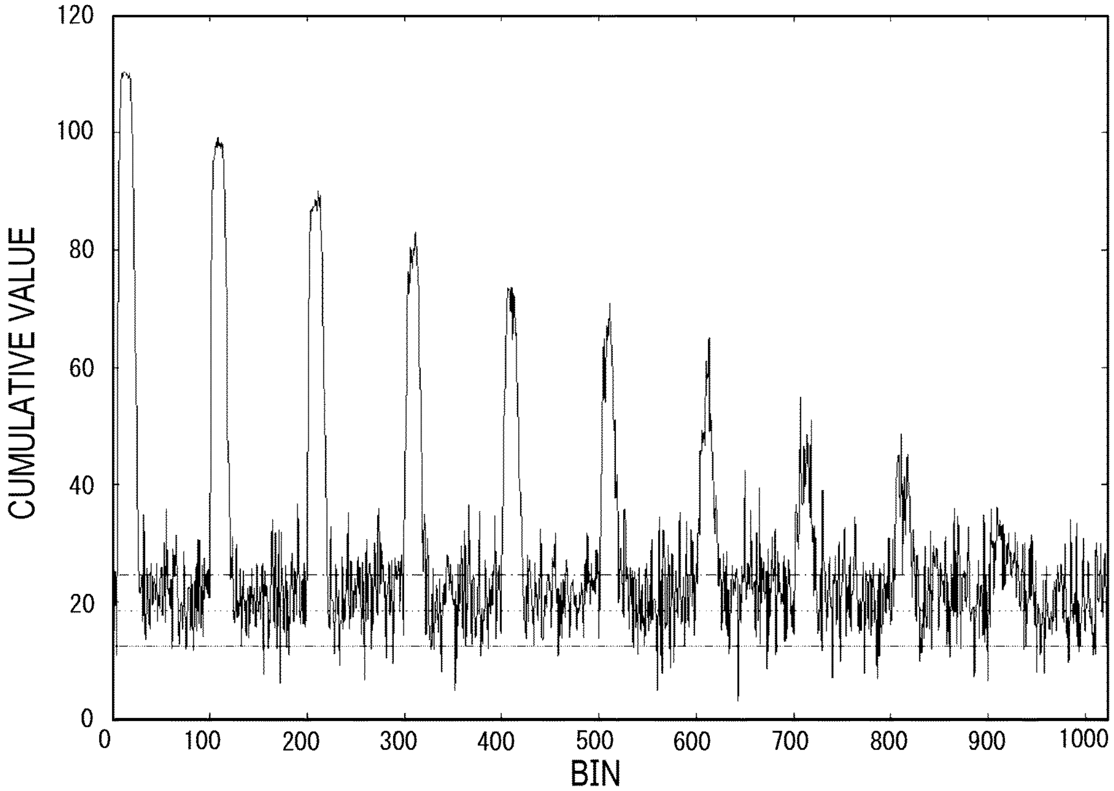


FIG. 25B

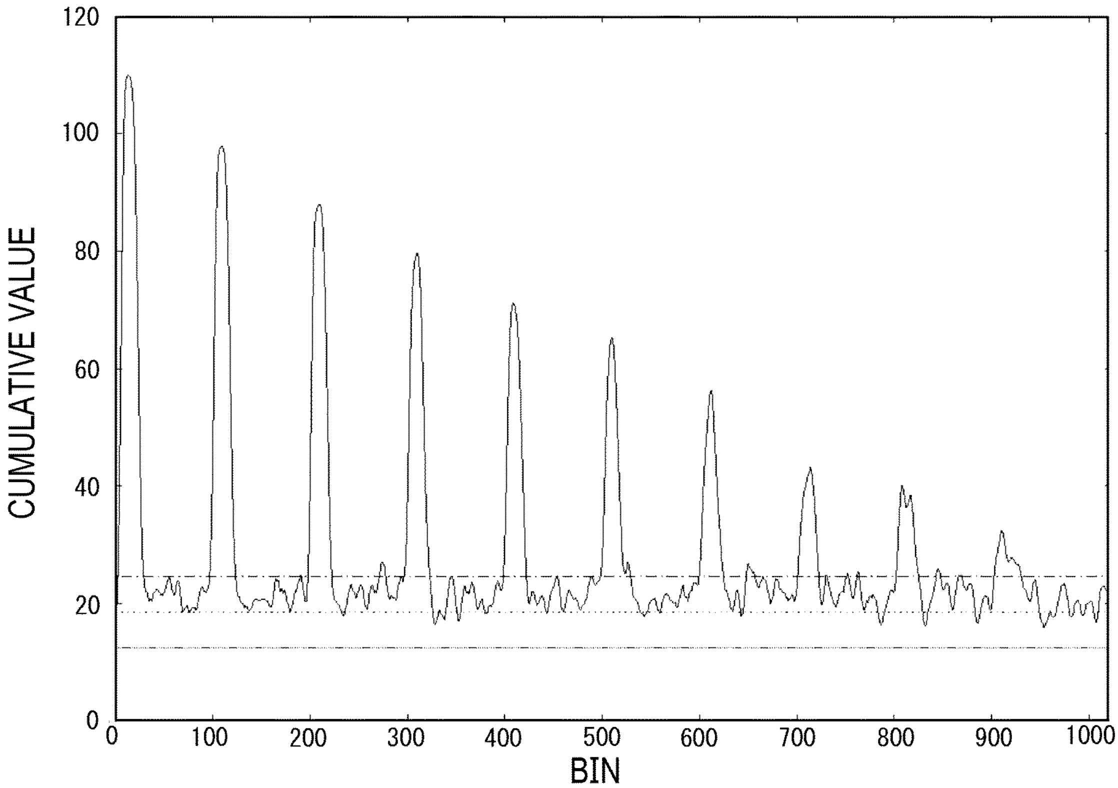

FIG. 26

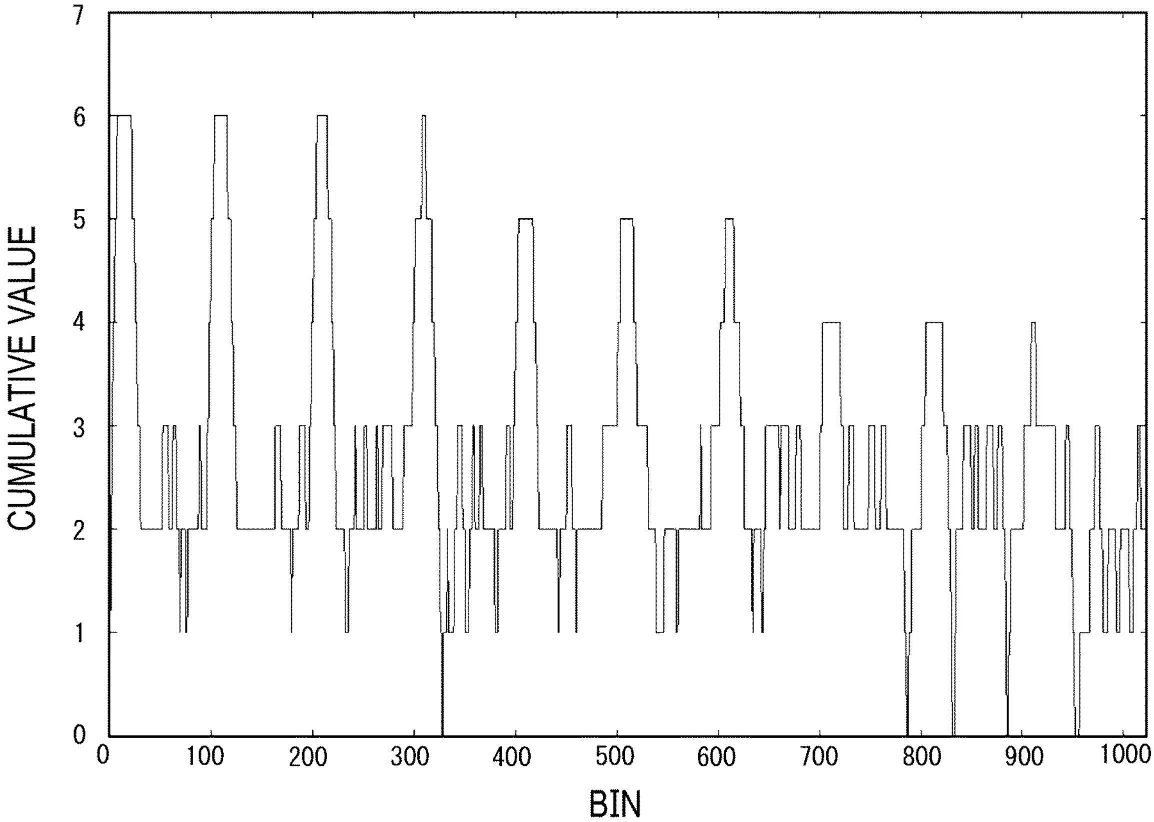
7
6
5
4
3
2
1
0
CUMULATIVE VALUE
0
100
200
300
400
500
600
700
800
900
1000
BIN

FIG. 27A

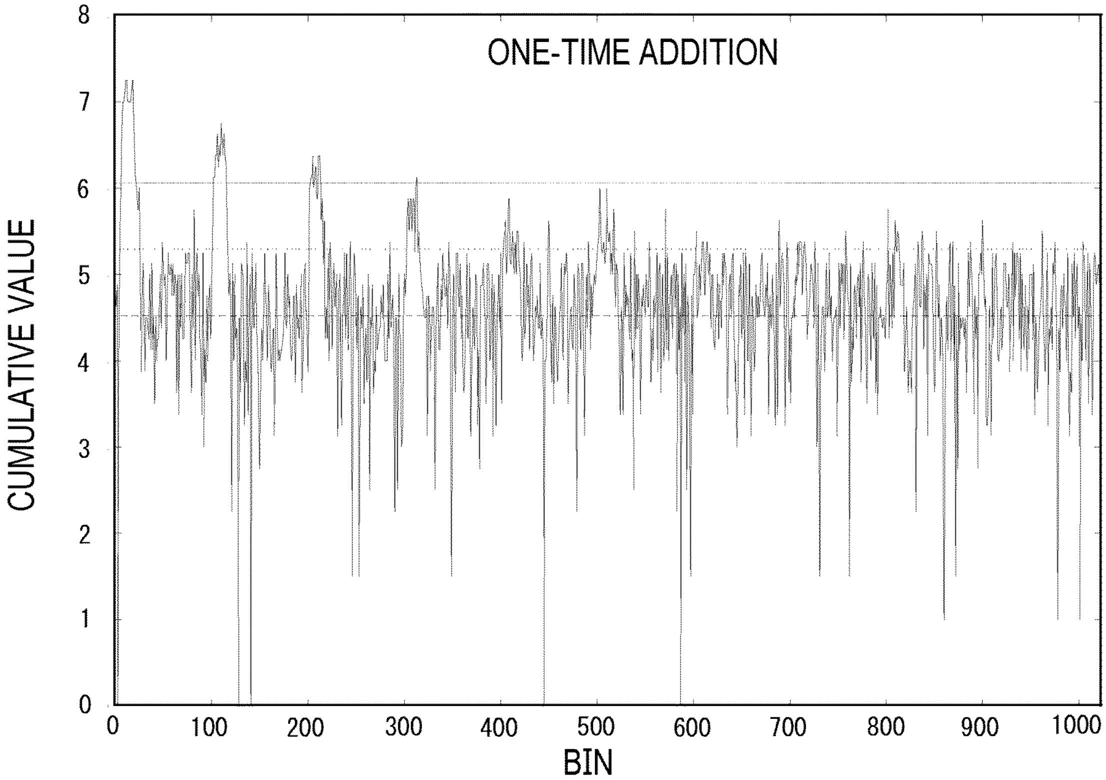


FIG. 27B

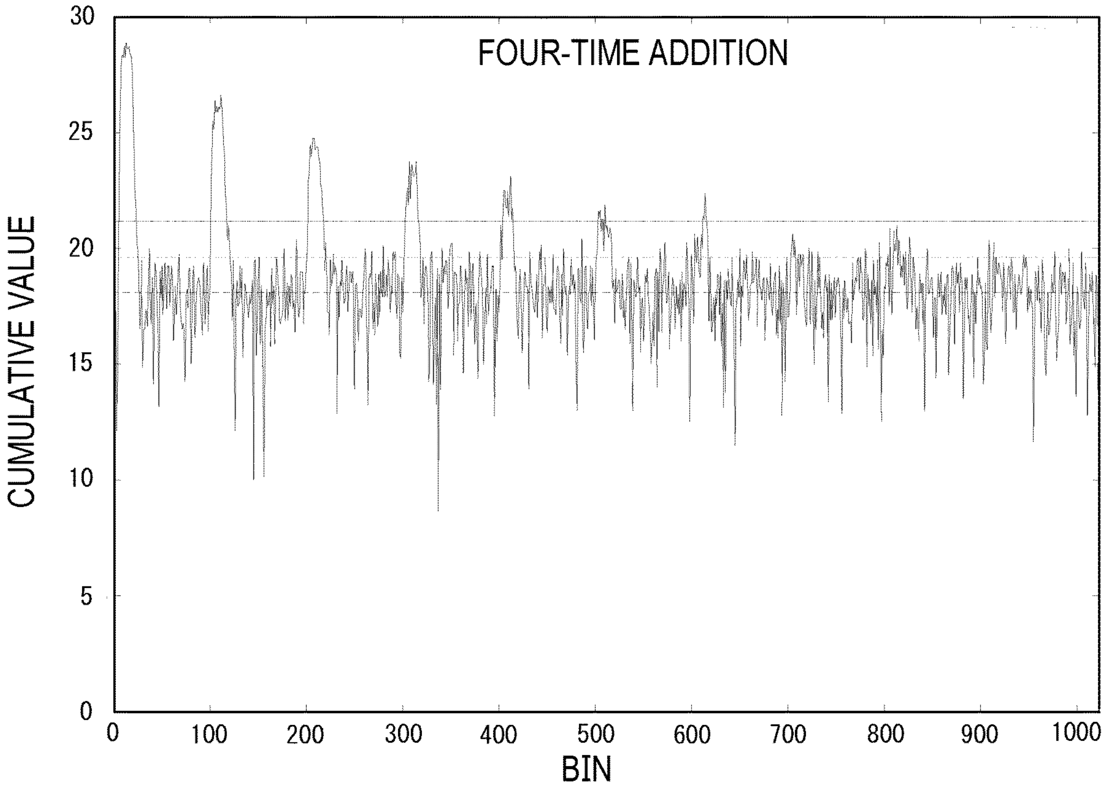

# FIG. 28A

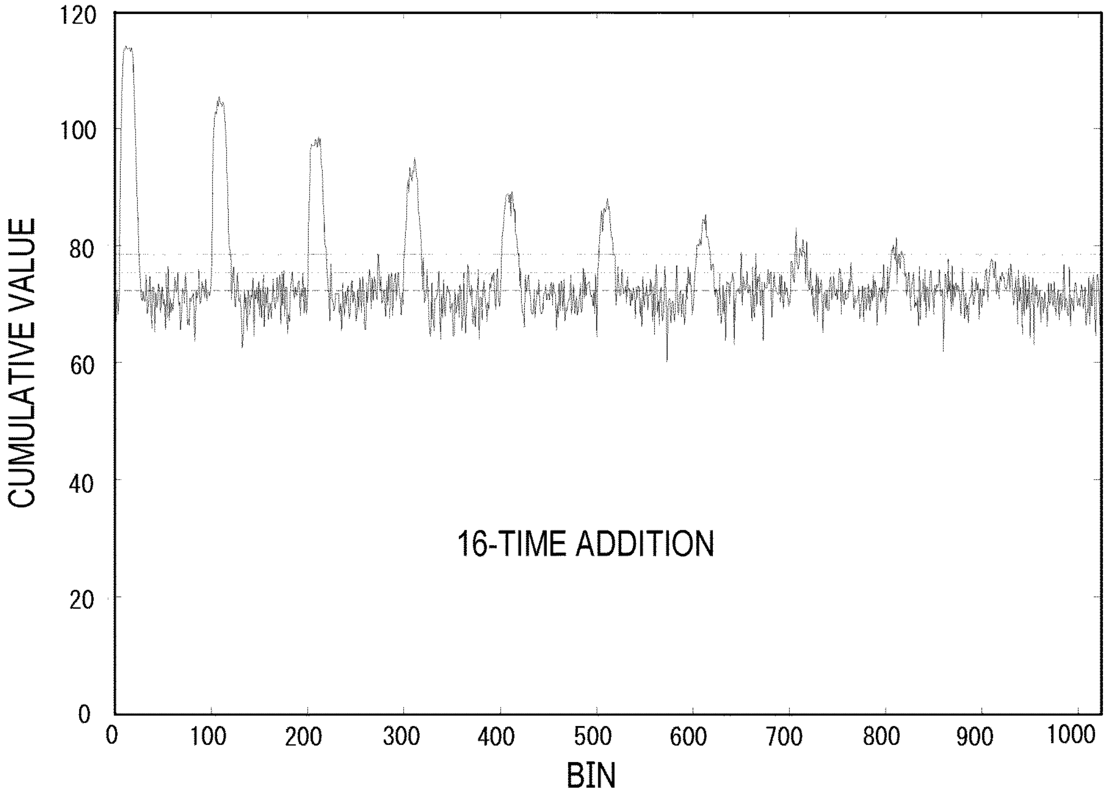


# FIG. 28B

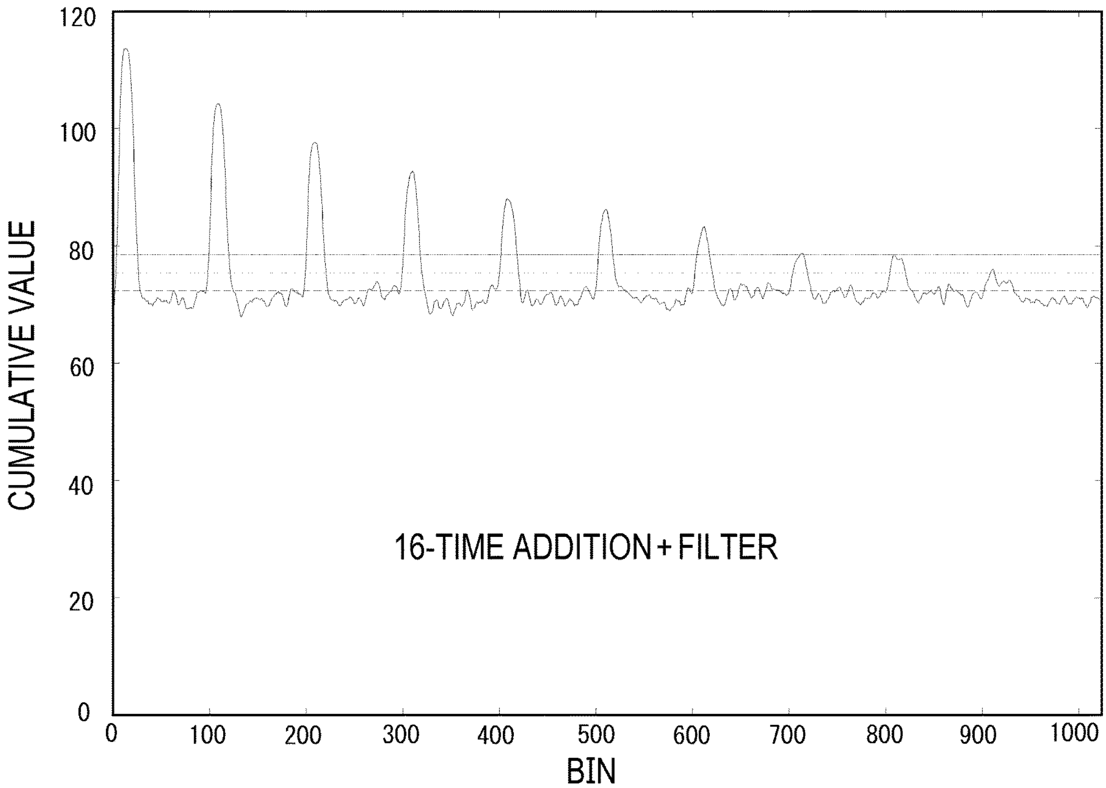

FIG. 29A

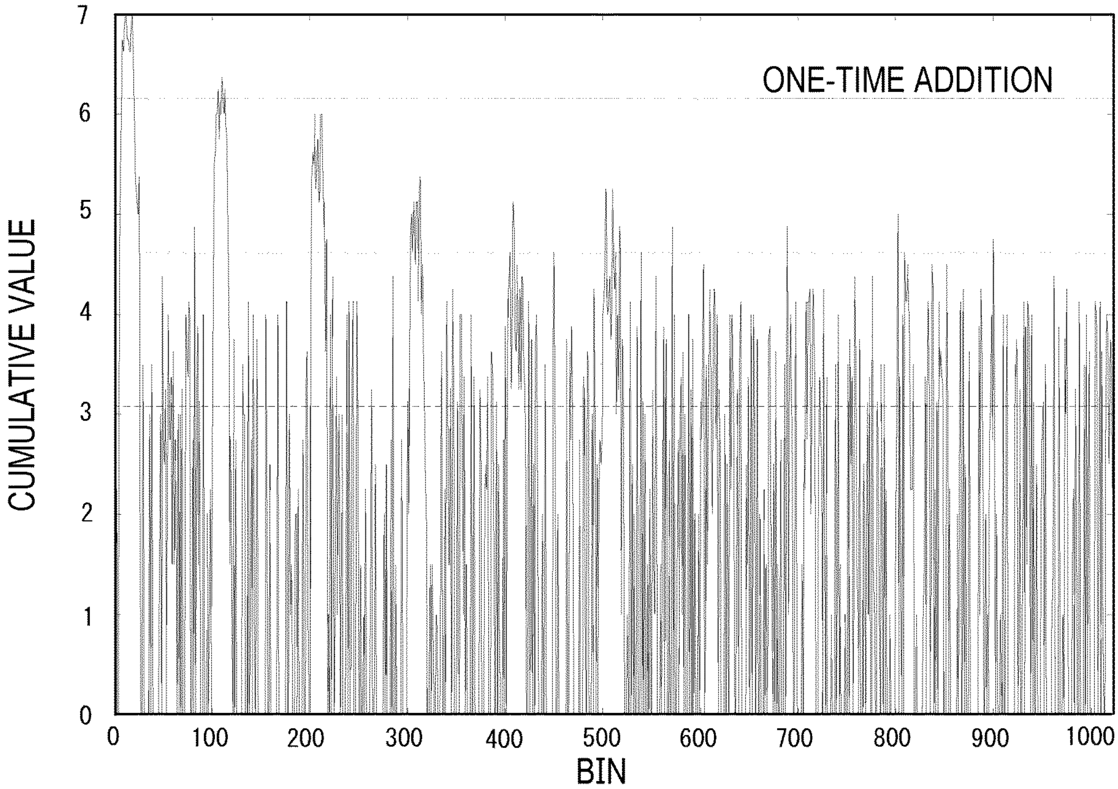


FIG. 29B

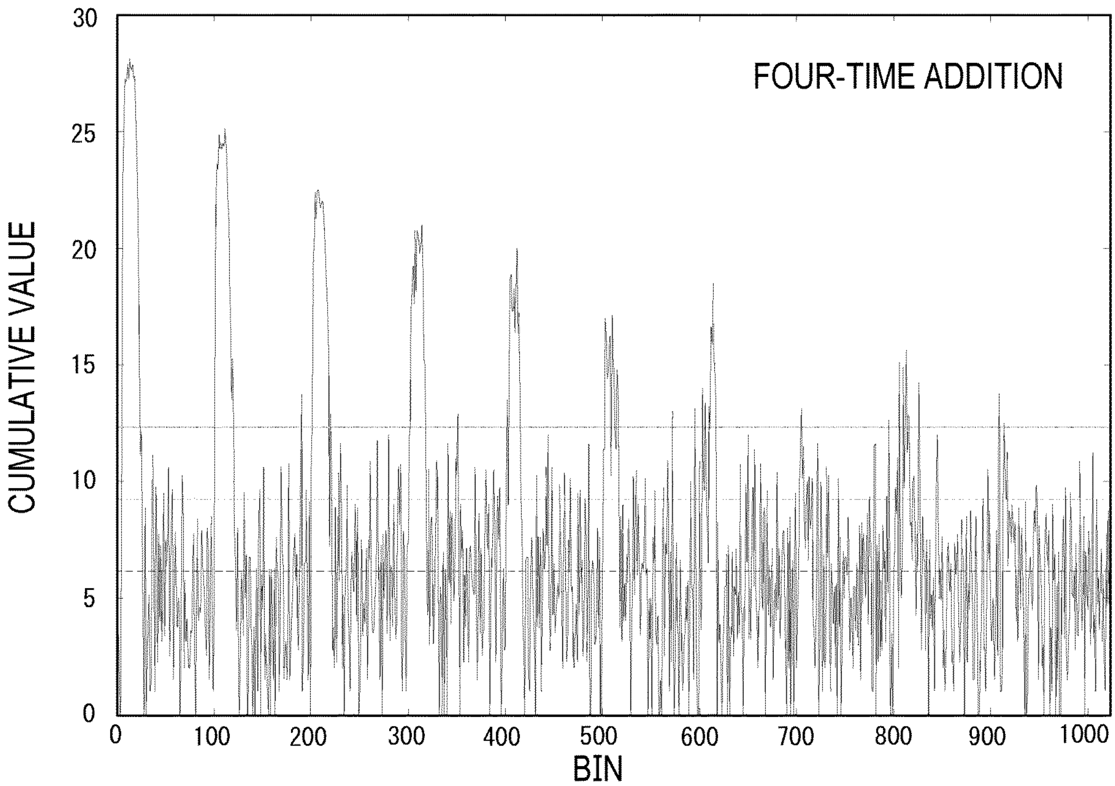

FIG. 30A

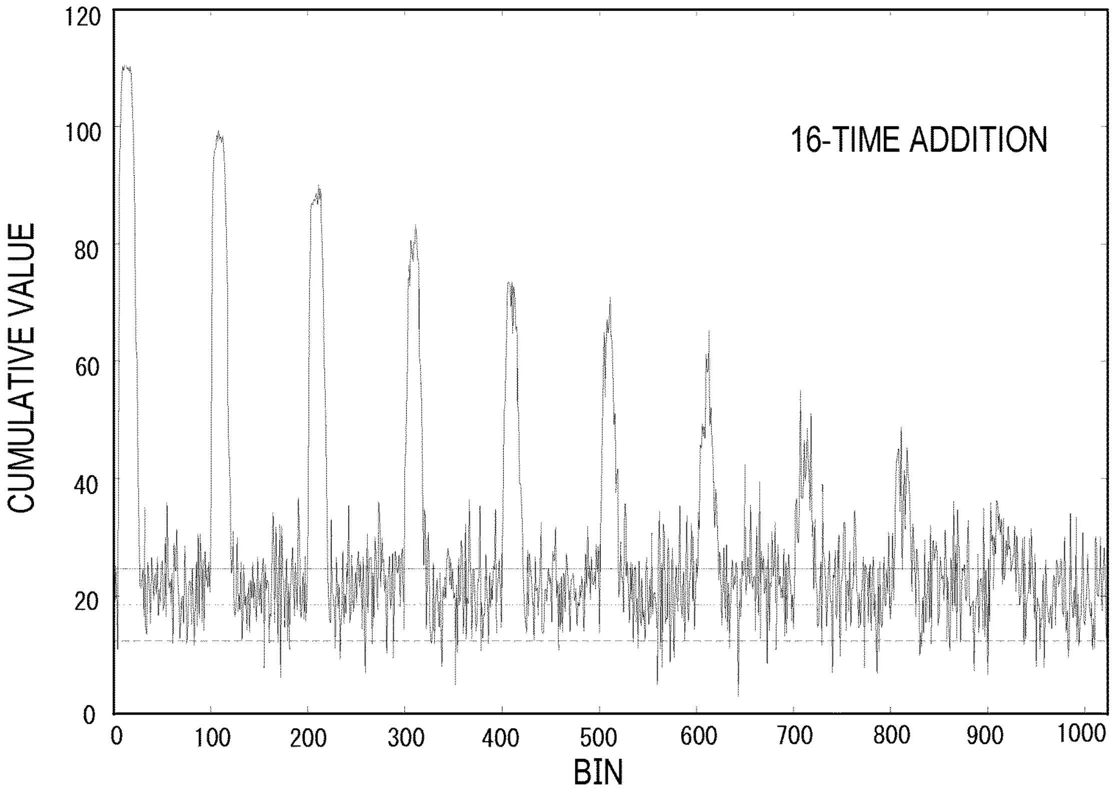


FIG. 30B

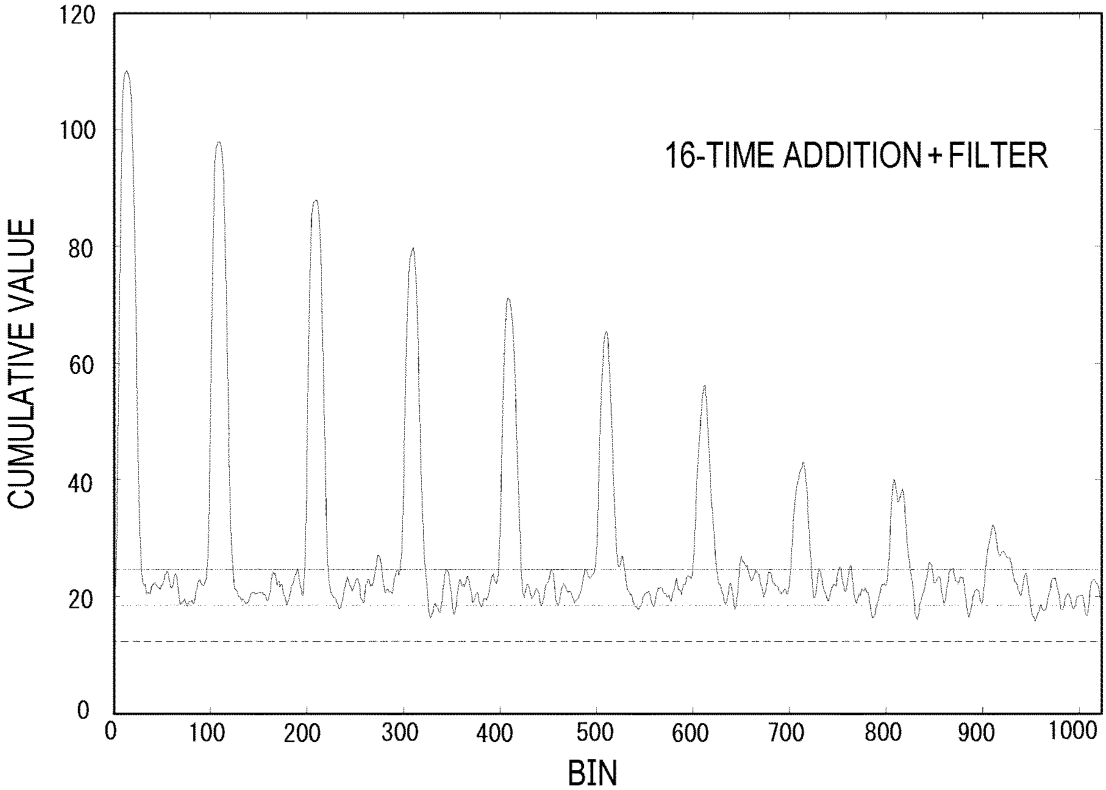

FIG. 31

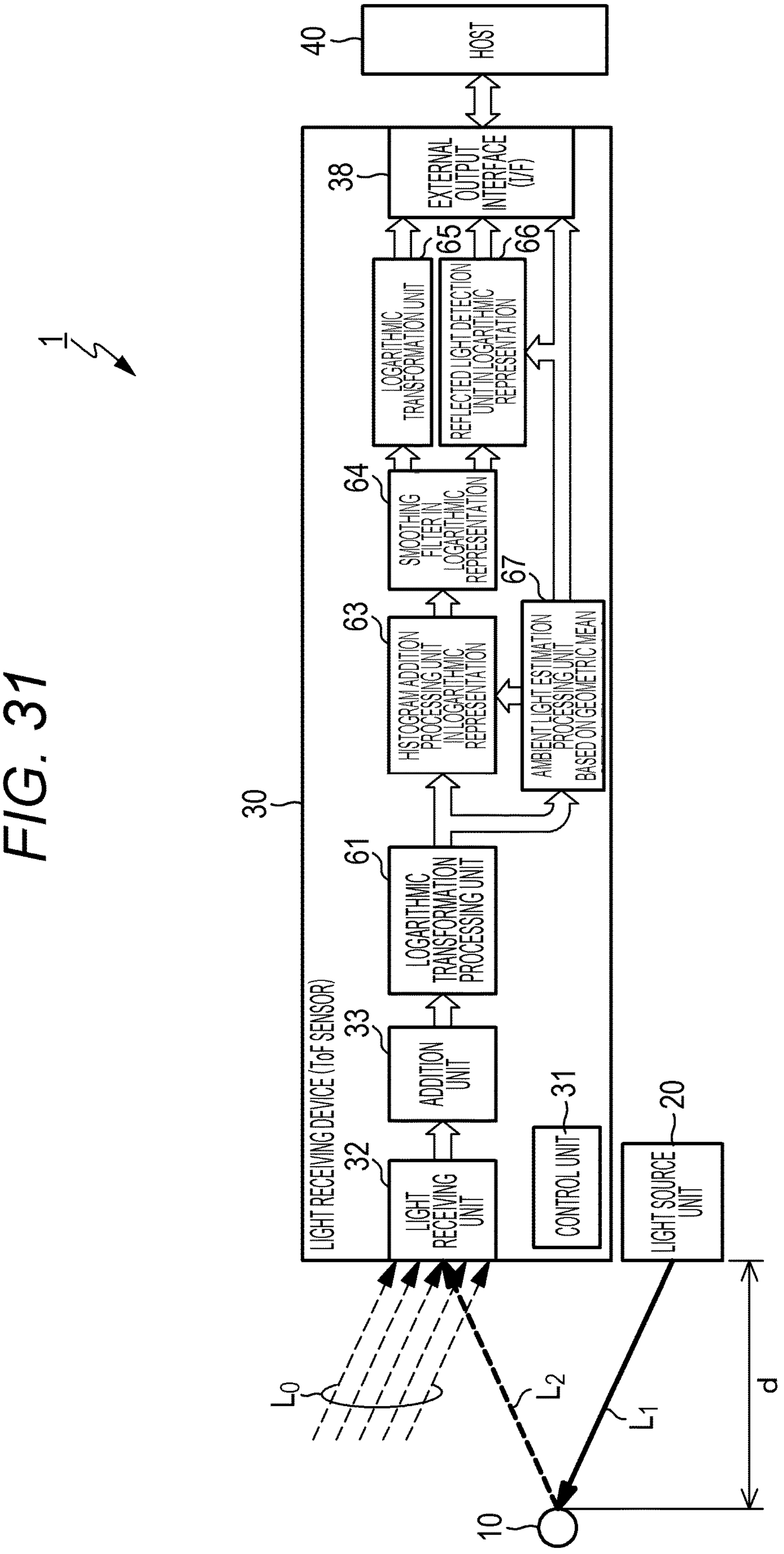
1
40
HOST
38
EXTERNAL OUTPUT INTERFACE (I/F)
65
66
LOGARITHMIC TRANSFORMATION UNIT
REFLECTED LIGHT DETECTION UNIT IN LOGARITHMIC REPRESENTATION
64
SMOOTHING FILTER IN LOGARITHMIC REPRESENTATION
67
63
HISTOGRAM ADDITION PROCESSING UNIT IN LOGARITHMIC REPRESENTATION
AMBIENT LIGHT ESTIMATION PROCESSING UNIT BASED ON GEOMETRIC MEAN
30
61
LOGARITHMIC TRANSFORMATION PROCESSING UNIT
LIGHT RECEIVING DEVICE (ToF SENSOR)
33
ADDITION UNIT
32
LIGHT RECEIVING UNIT
31
CONTROL UNIT
20
LIGHT SOURCE UNIT
L0
L2
L1
d
10

FIG. 32A

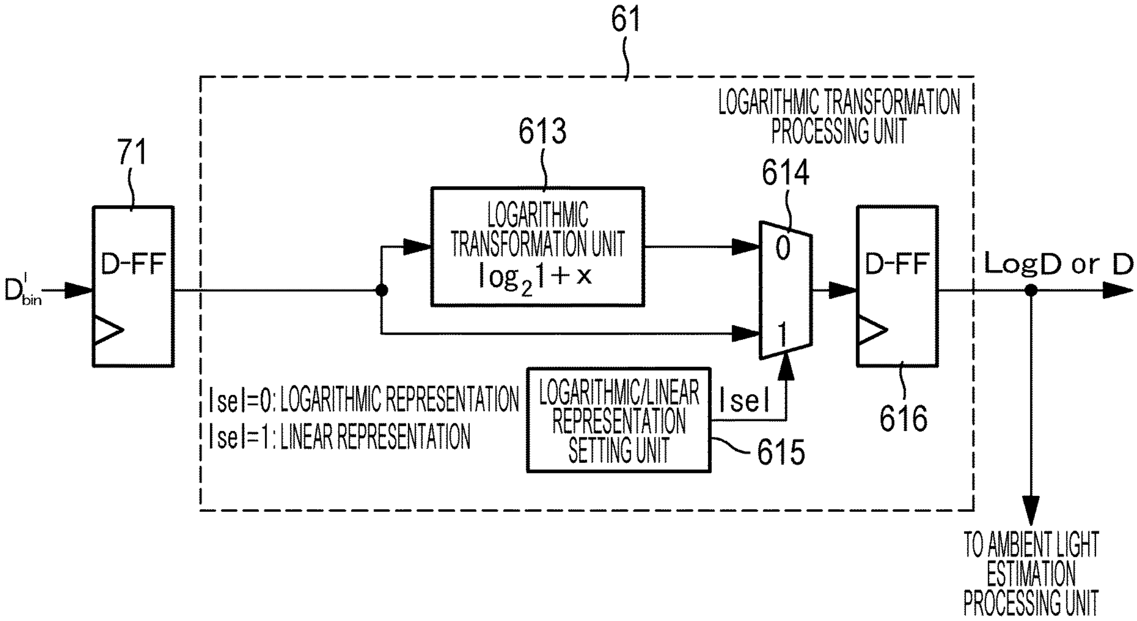


FIG. 32B

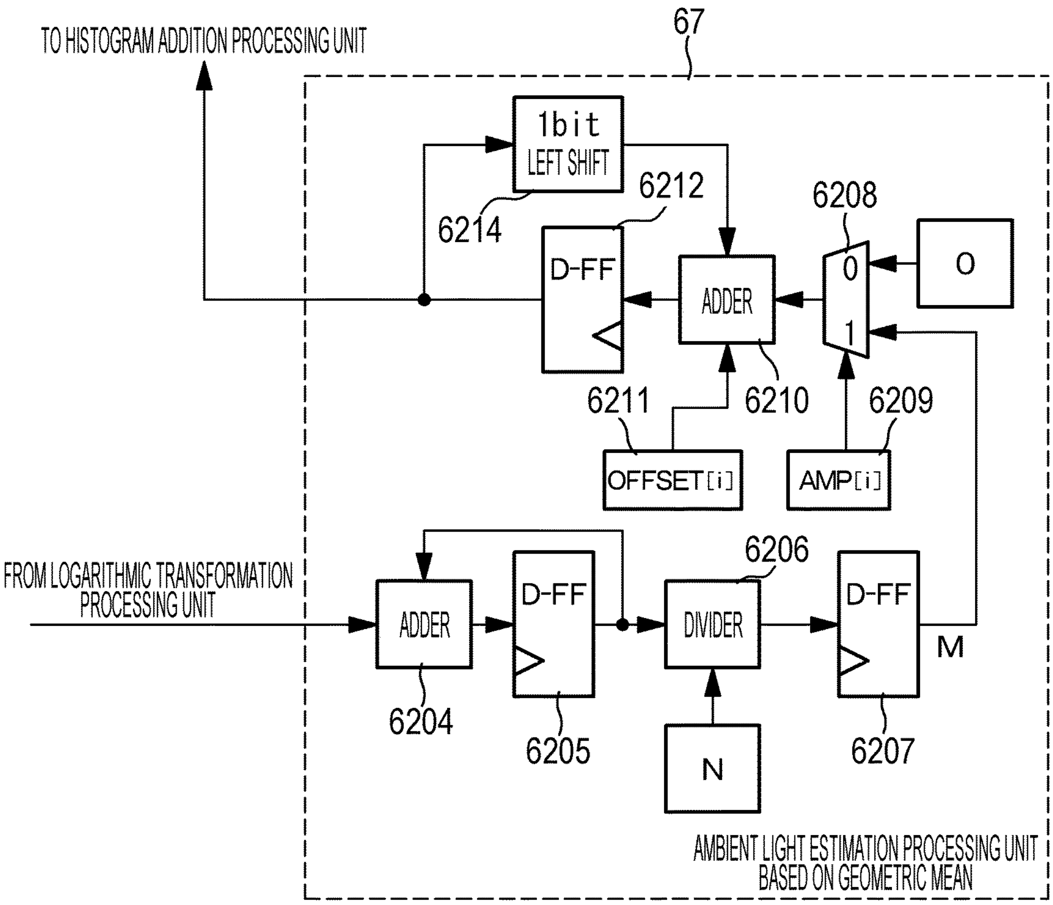

FIG. 33

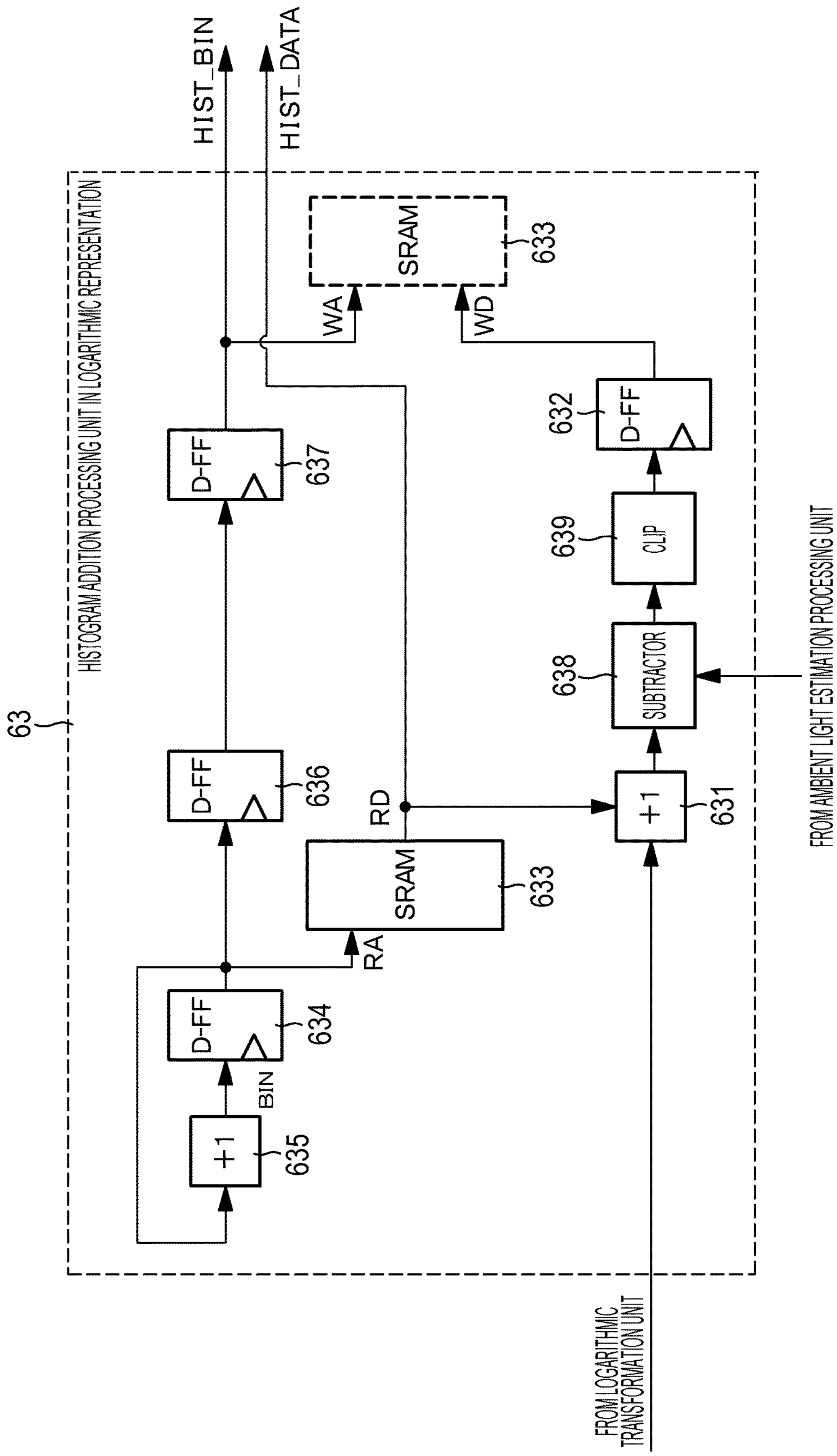

63
HISTOGRAM ADDITION PROCESSING UNIT IN LOGARITHMIC REPRESENTATION
HIST_BIN
HIST_DATA
+1
635
BIN
D-FF
634
RA
SRAM
633
D-FF
636
RD
D-FF
637
WA
SRAM
633
WD
+1
631
SUBTRACTOR
638
CLIP
639
D-FF
632
FROM AMBIENT LIGHT ESTIMATION PROCESSING UNIT
FROM LOGARITHMIC TRANSFORMATION UNIT

FIG. 34

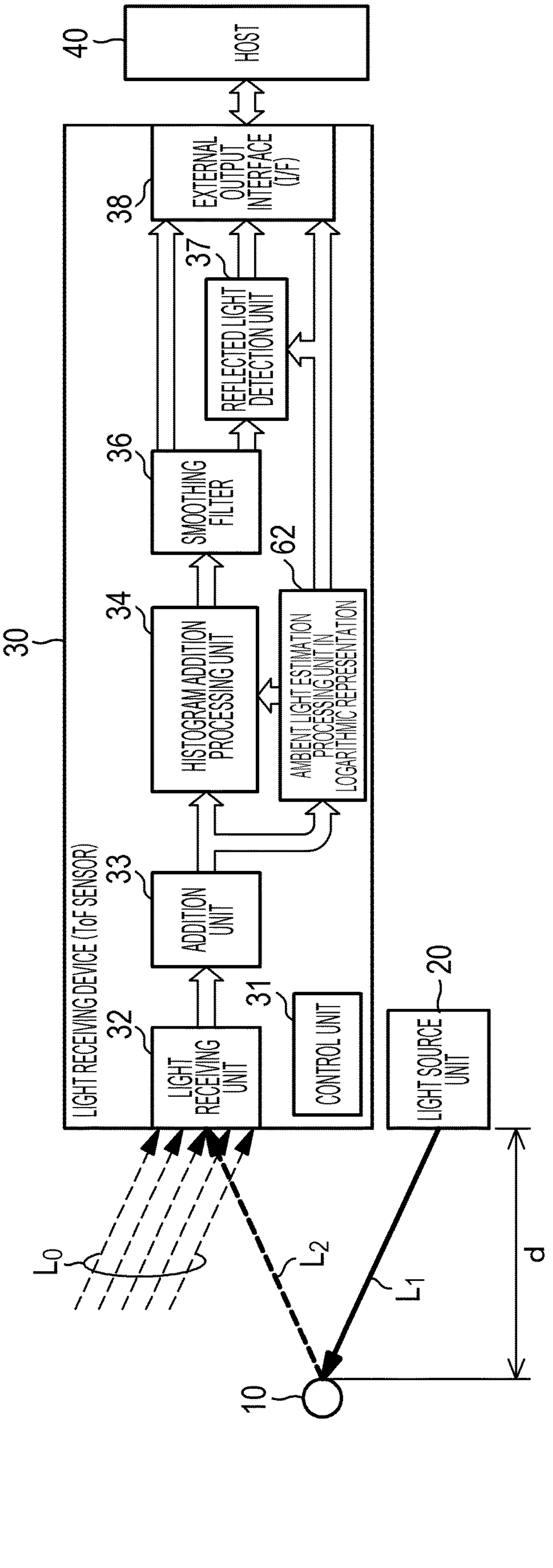
1
40
HOST
30
LIGHT RECEIVING DEVICE (ToF SENSOR)
38
EXTERNAL OUTPUT INTERFACE (I/F)
37
REFLECTED LIGHT DETECTION UNIT
36
SMOOTHING FILTER
34
HISTOGRAM ADDITION PROCESSING UNIT
62
AMBIENT LIGHT ESTIMATION PROCESSING UNIT IN LOGARITHMIC REPRESENTATION
33
ADDITION UNIT
32
LIGHT RECEIVING UNIT
31
CONTROL UNIT
20
LIGHT SOURCE UNIT
$L_0$
$L_2$
$L_1$
d
10

FIG. 35

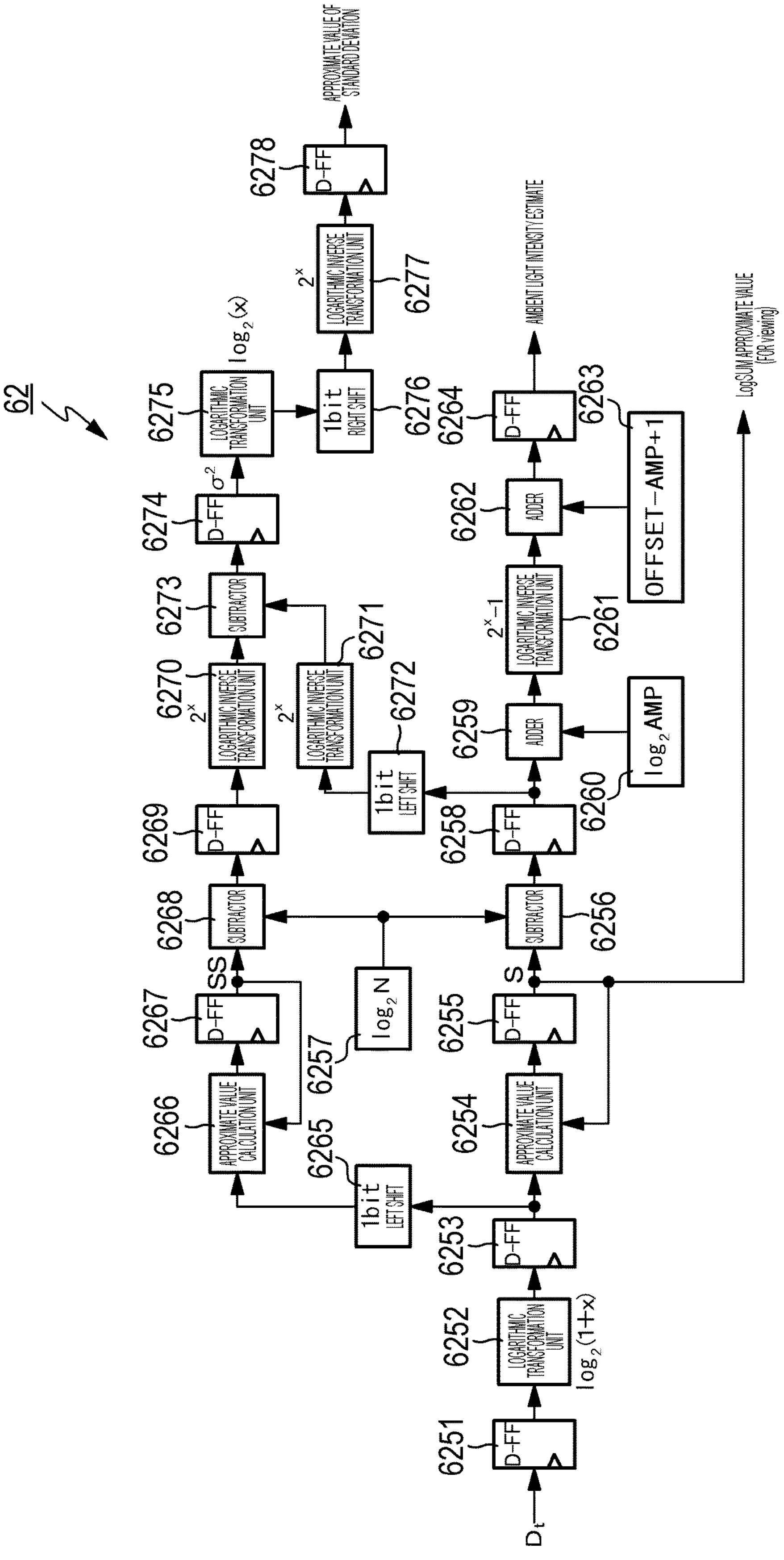
62
Dt
6251
D-FF
6252
LOGARITHMIC TRANSFORMATION UNIT
log2(1+x)
6253
D-FF
6265
1bit LEFT SHIFT
6254
APPROXIMATE VALUE CALCULATION UNIT
6266
APPROXIMATE VALUE CALCULATION UNIT
6255
D-FF
S
6267
D-FF
SS
6257
log2N
6256
SUBTRACTOR
6268
SUBTRACTOR
6258
D-FF
6269
D-FF
6260
log2AMP
6259
ADDER
6272
1bit LEFT SHIFT
6270
2x
LOGARITHMIC INVERSE TRANSFORMATION UNIT
6271
2x
LOGARITHMIC INVERSE TRANSFORMATION UNIT
6261
2x−1
LOGARITHMIC INVERSE TRANSFORMATION UNIT
6273
SUBTRACTOR
6262
ADDER
6263
OFFSET−AMP+1
6274
D-FF
σ2
6264
D-FF
6275
LOGARITHMIC TRANSFORMATION UNIT
log2(x)
6276
1bit RIGHT SHIFT
6277
2x
LOGARITHMIC INVERSE TRANSFORMATION UNIT
6278
D-FF
APPROXIMATE VALUE OF STANDARD DEVIATION
AMBIENT LIGHT INTENSITY ESTIMATE
LogSUM APPROXIMATE VALUE (FOR viewing)

FIG. 36

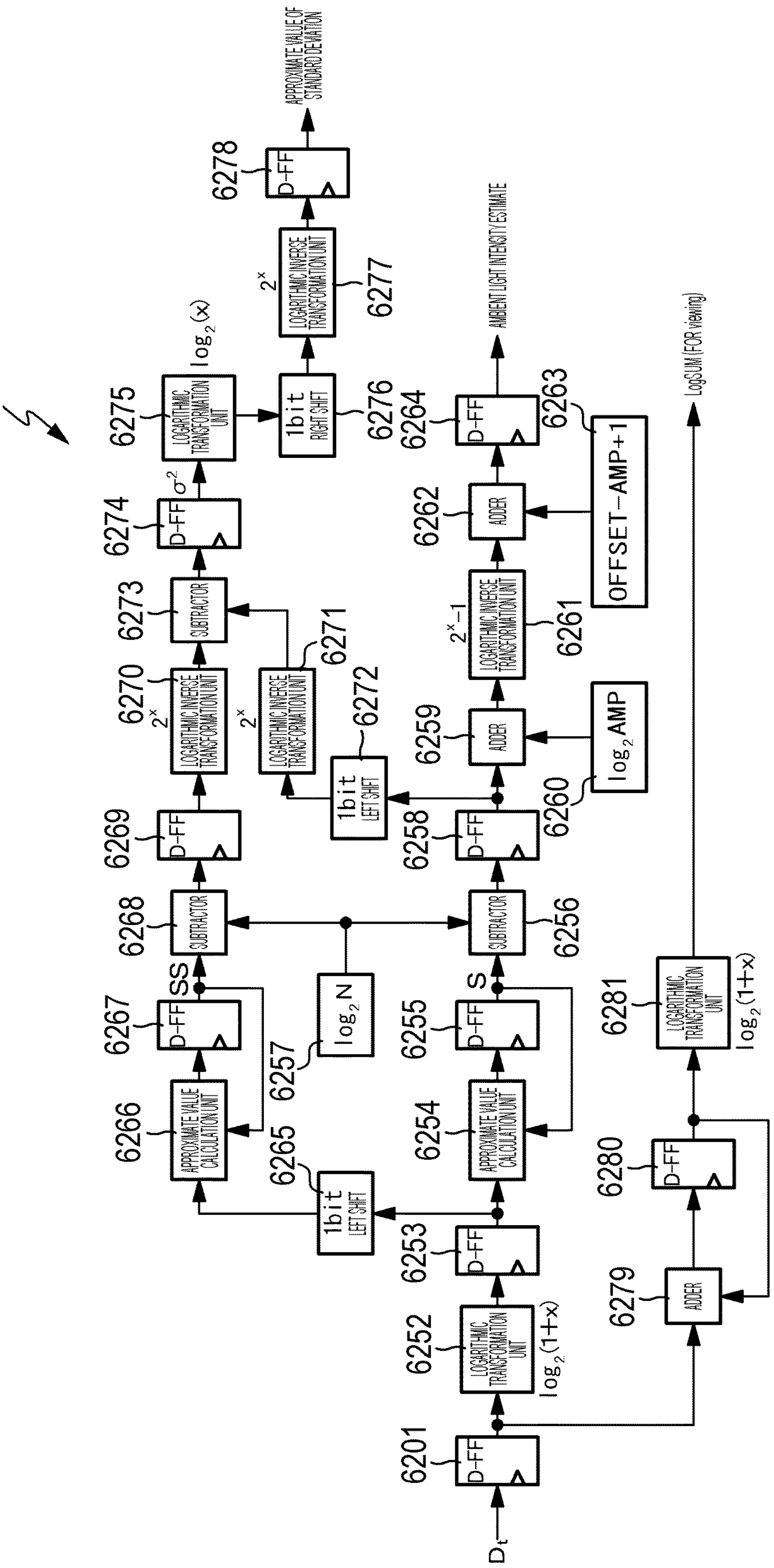
62
APPROXIMATE VALUE OF STANDARD DEVIATION
AMBIENT LIGHT INTENSITY ESTIMATE
LogSUM (FOR viewing)
6278 D-FF
6277 LOGARITHMIC INVERSE TRANSFORMATION UNIT
$2^x$
$\log_2(x)$
6275 LOGARITHMIC TRANSFORMATION UNIT
6276 1bit RIGHT SHIFT
6274 D-FF
$\sigma^2$
6273 SUBTRACTOR
6271 LOGARITHMIC INVERSE TRANSFORMATION UNIT
6270 LOGARITHMIC INVERSE TRANSFORMATION UNIT
6272 1bit LEFT SHIFT
6269 D-FF
6268 SUBTRACTOR
SS
6267 D-FF
6266 APPROXIMATE VALUE CALCULATION UNIT
6265 1bit LEFT SHIFT
6257 $\log_2 N$
6264 D-FF
6263 OFFSET−AMP+1
6262 ADDER
6261 LOGARITHMIC INVERSE TRANSFORMATION UNIT
$2^x-1$
6259 ADDER
6260 $\log_2$AMP
6258 D-FF
6256 SUBTRACTOR
S
6255 D-FF
6254 APPROXIMATE VALUE CALCULATION UNIT
6253 D-FF
6252 LOGARITHMIC TRANSFORMATION UNIT
$\log_2(1+x)$
6201 D-FF
$D_t$
6281 LOGARITHMIC TRANSFORMATION UNIT
6280 D-FF
6279 ADDER

FIG. 37A

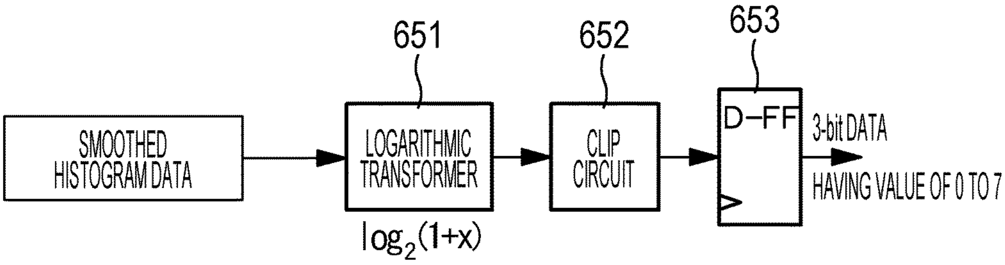


FIG. 37B

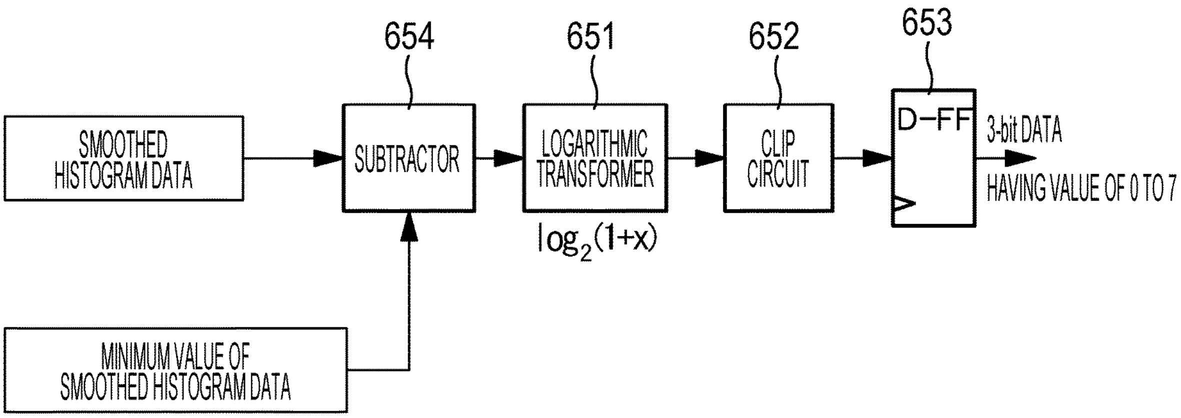

FIG. 38A

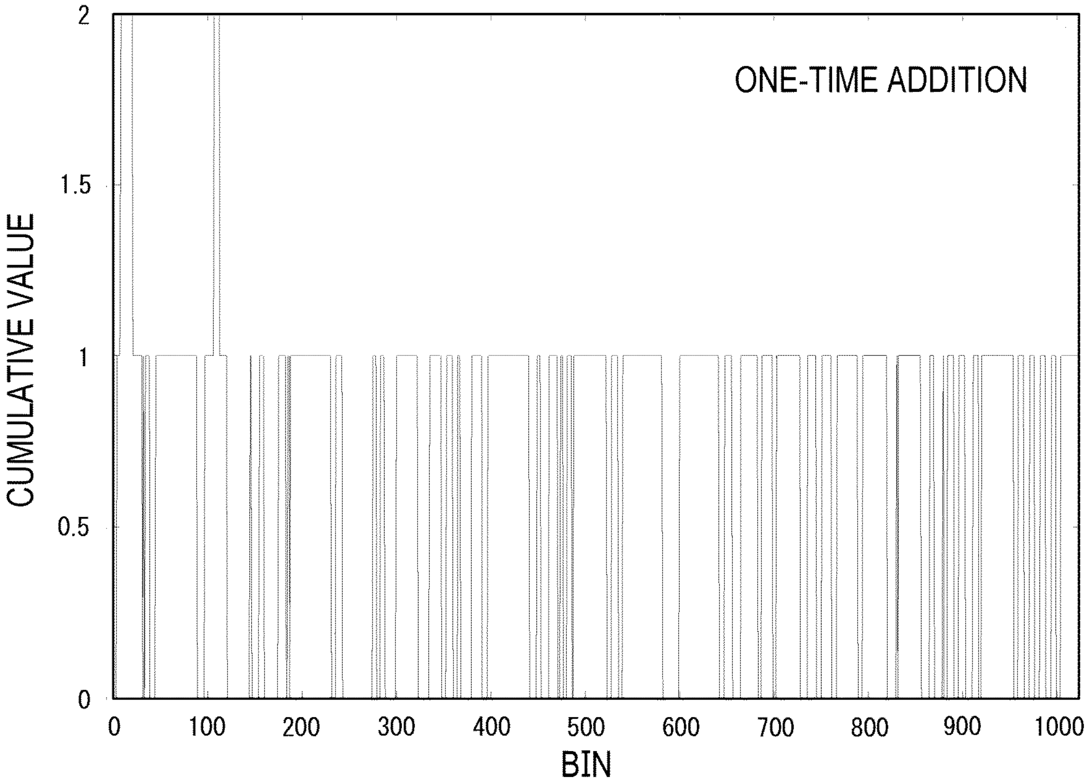


FIG. 38B

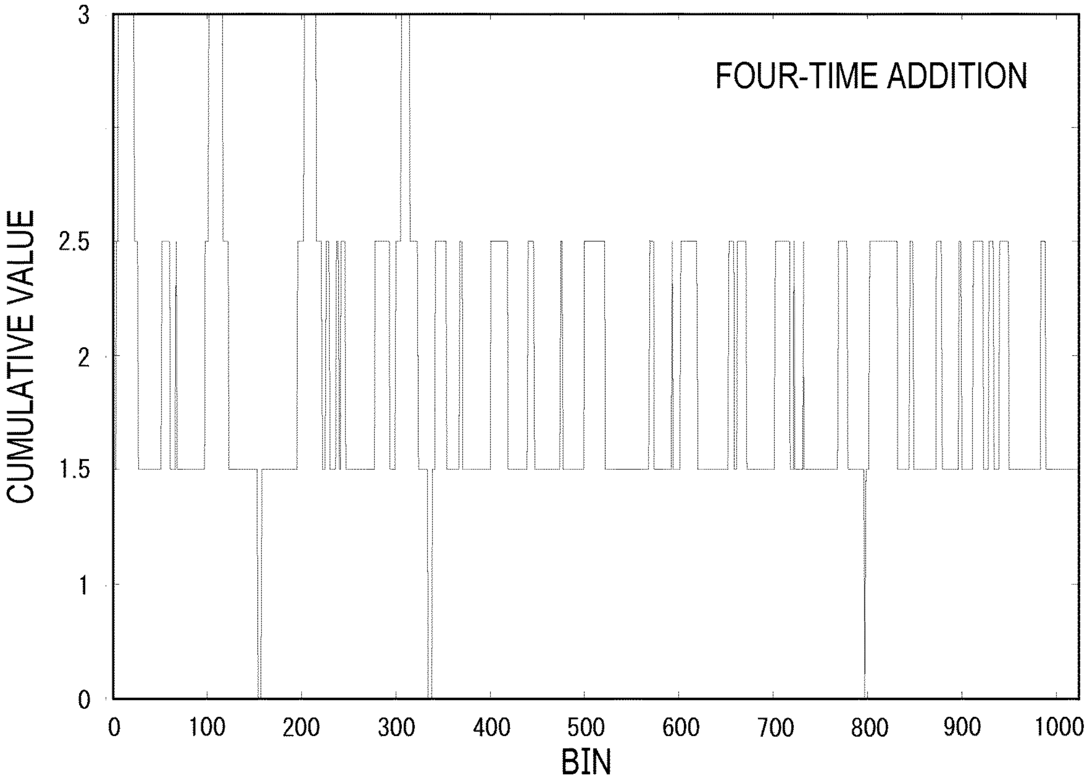

FIG. 39A

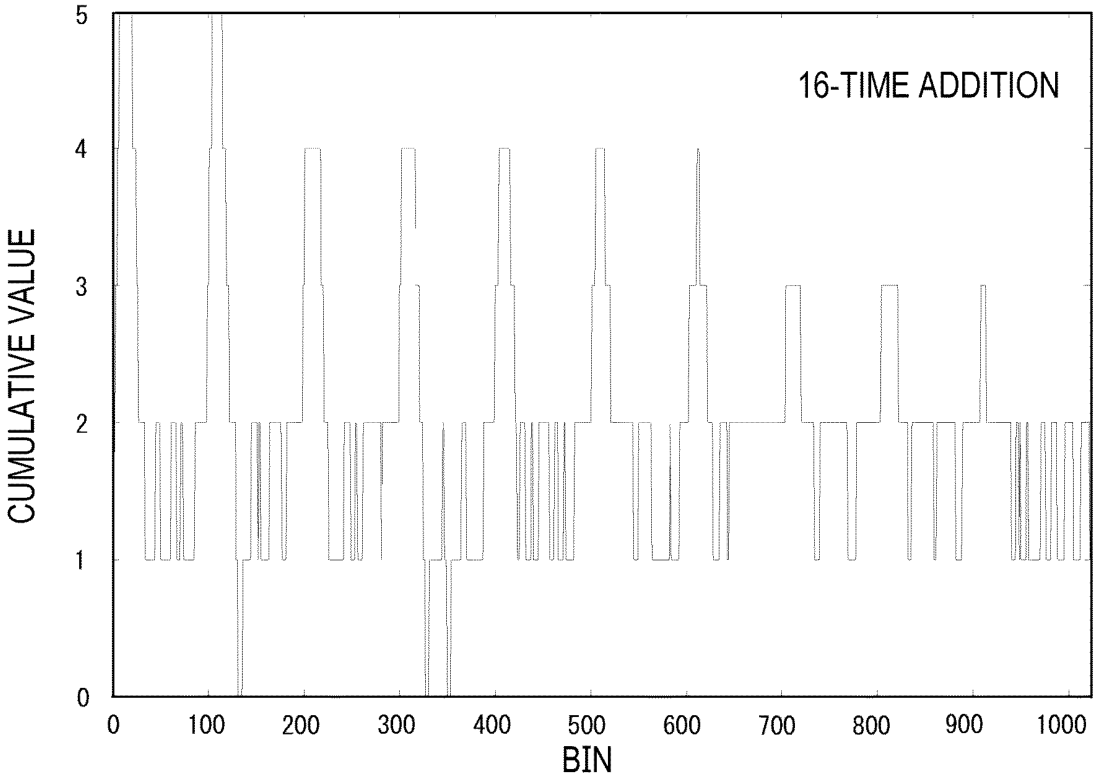


FIG. 39B

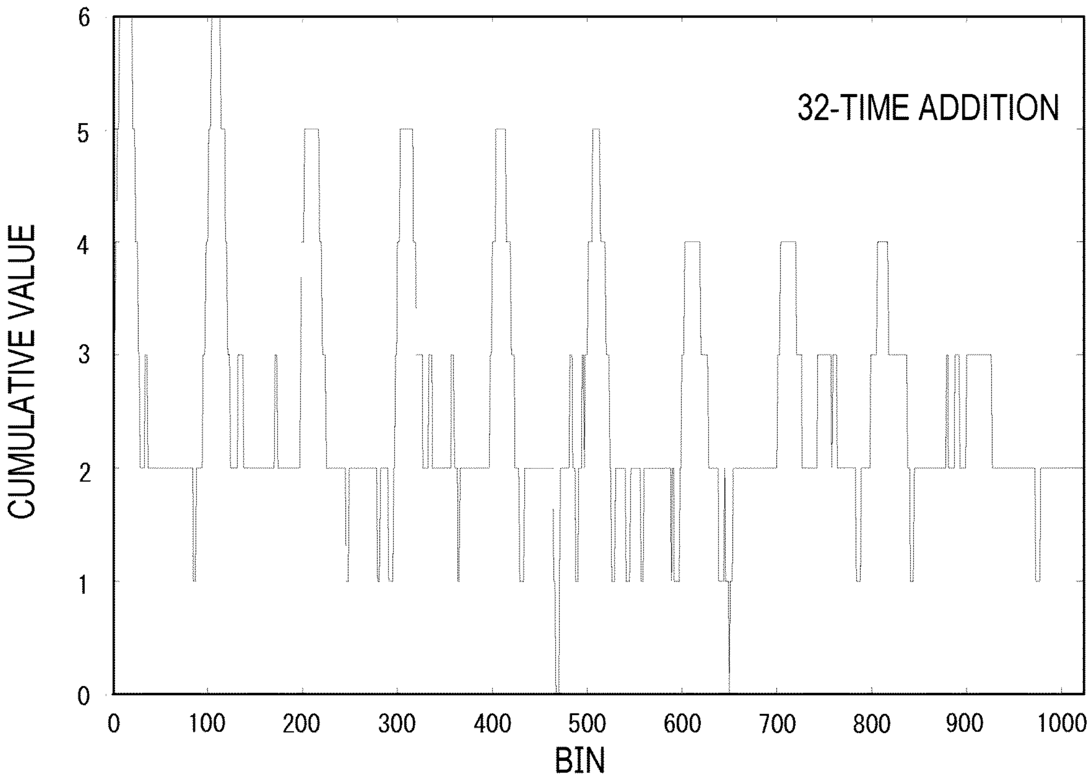

FIG. 40A

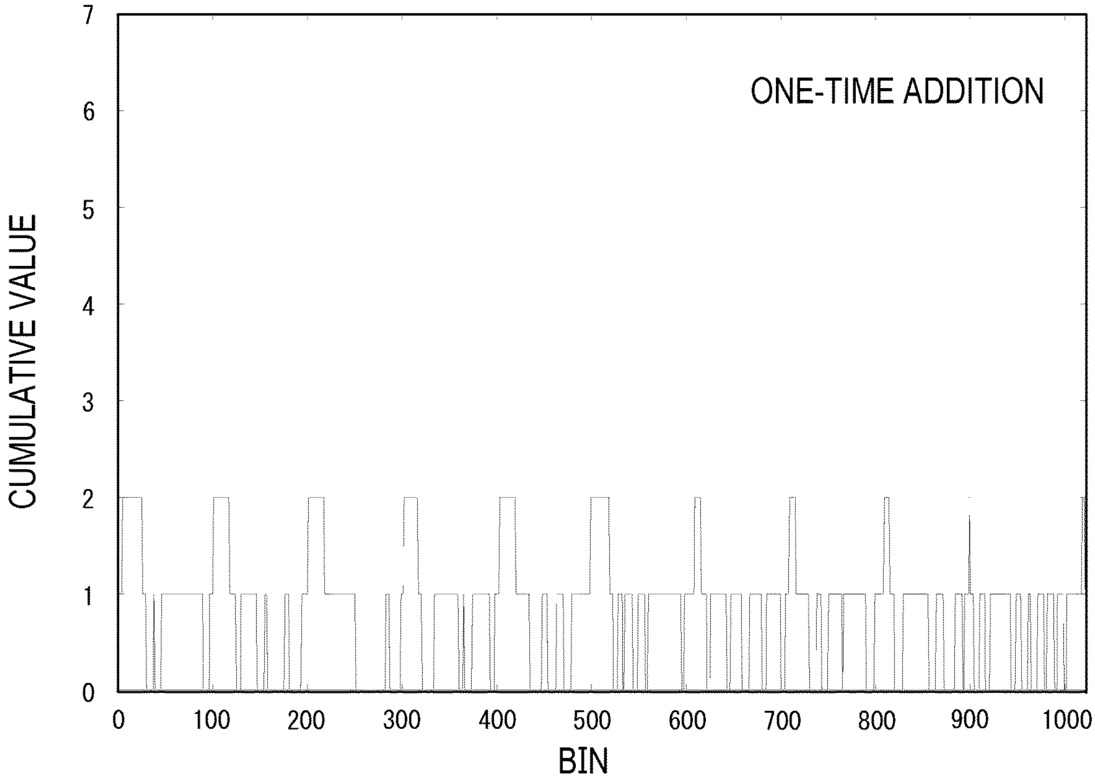


FIG. 40B

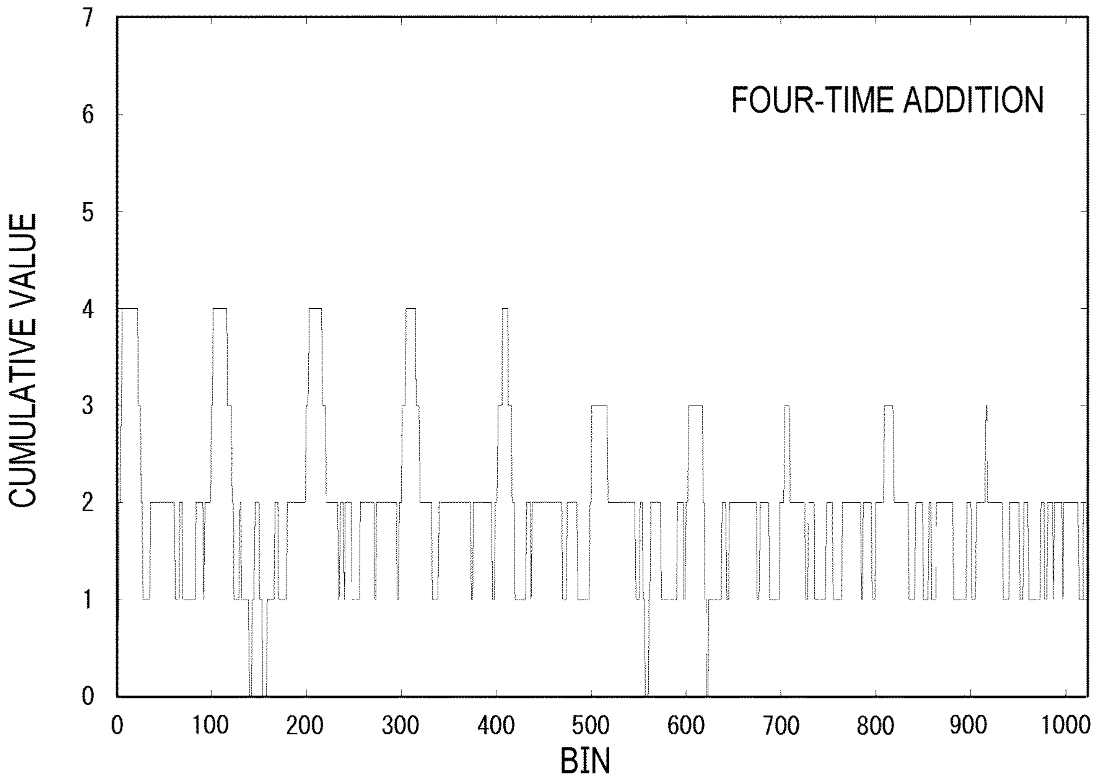

FIG. 41A

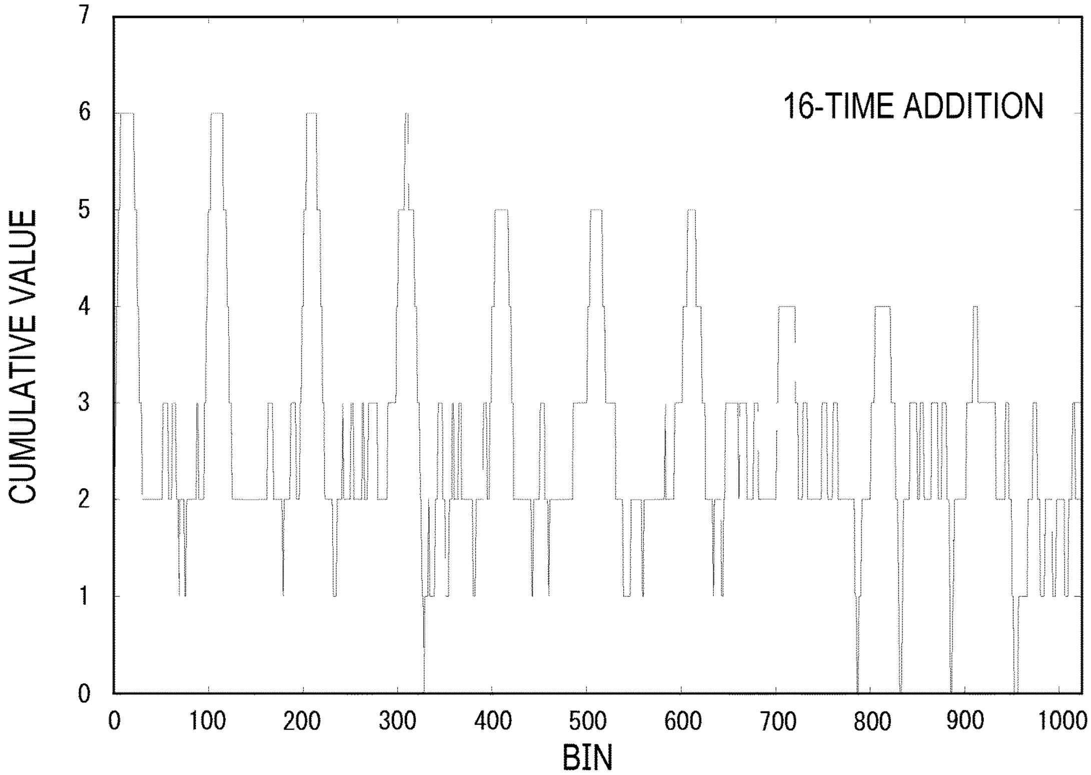


FIG. 41B

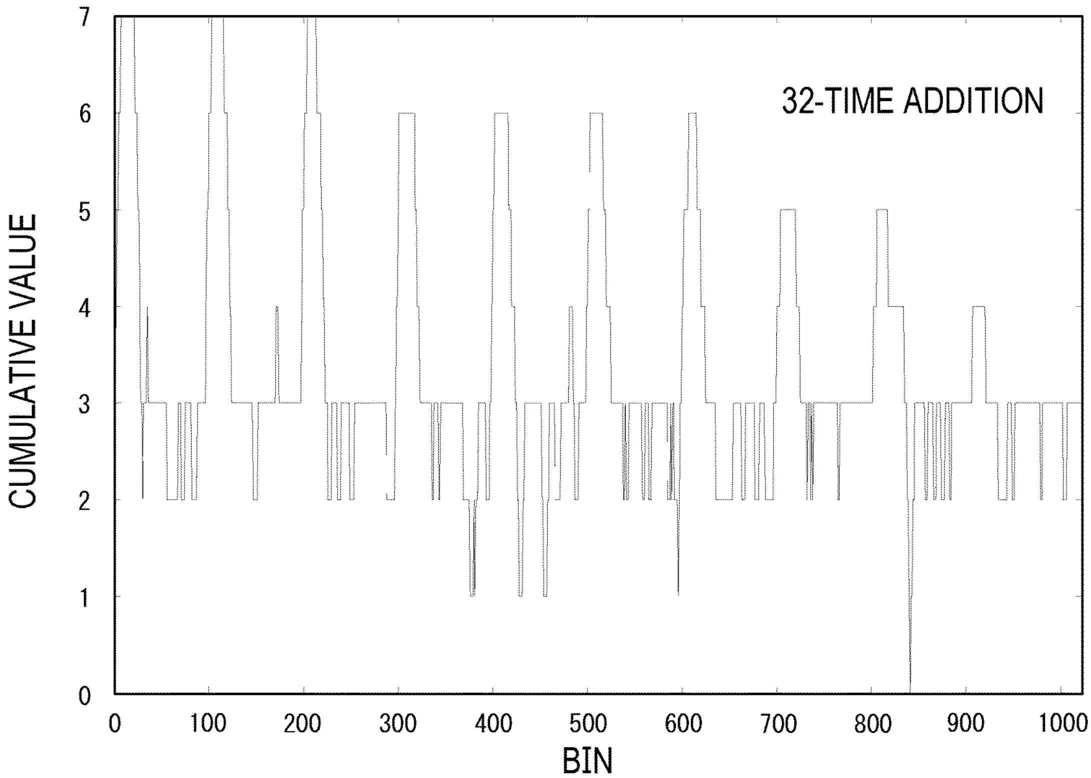

FIG. 42

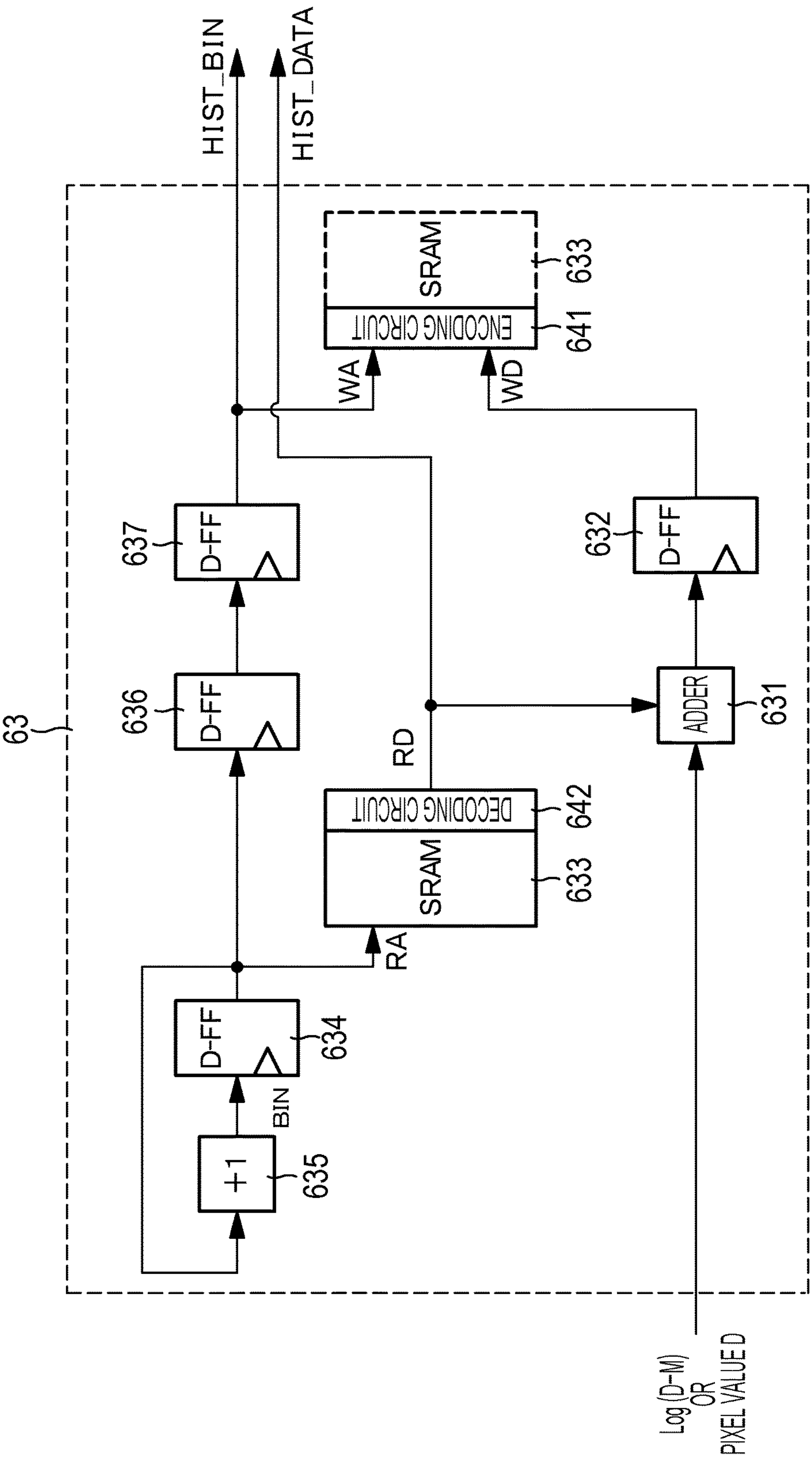
63
HIST_BIN
HIST_DATA
SRAM
633
ENCODING CIRCUIT
641
WA
WD
D-FF
637
636
632
ADDER
631
RD
DECODING CIRCUIT
642
SRAM
633
RA
D-FF
634
BIN
+1
635
Log(D−M)
OR
PIXEL VALUE D

FIG. 43

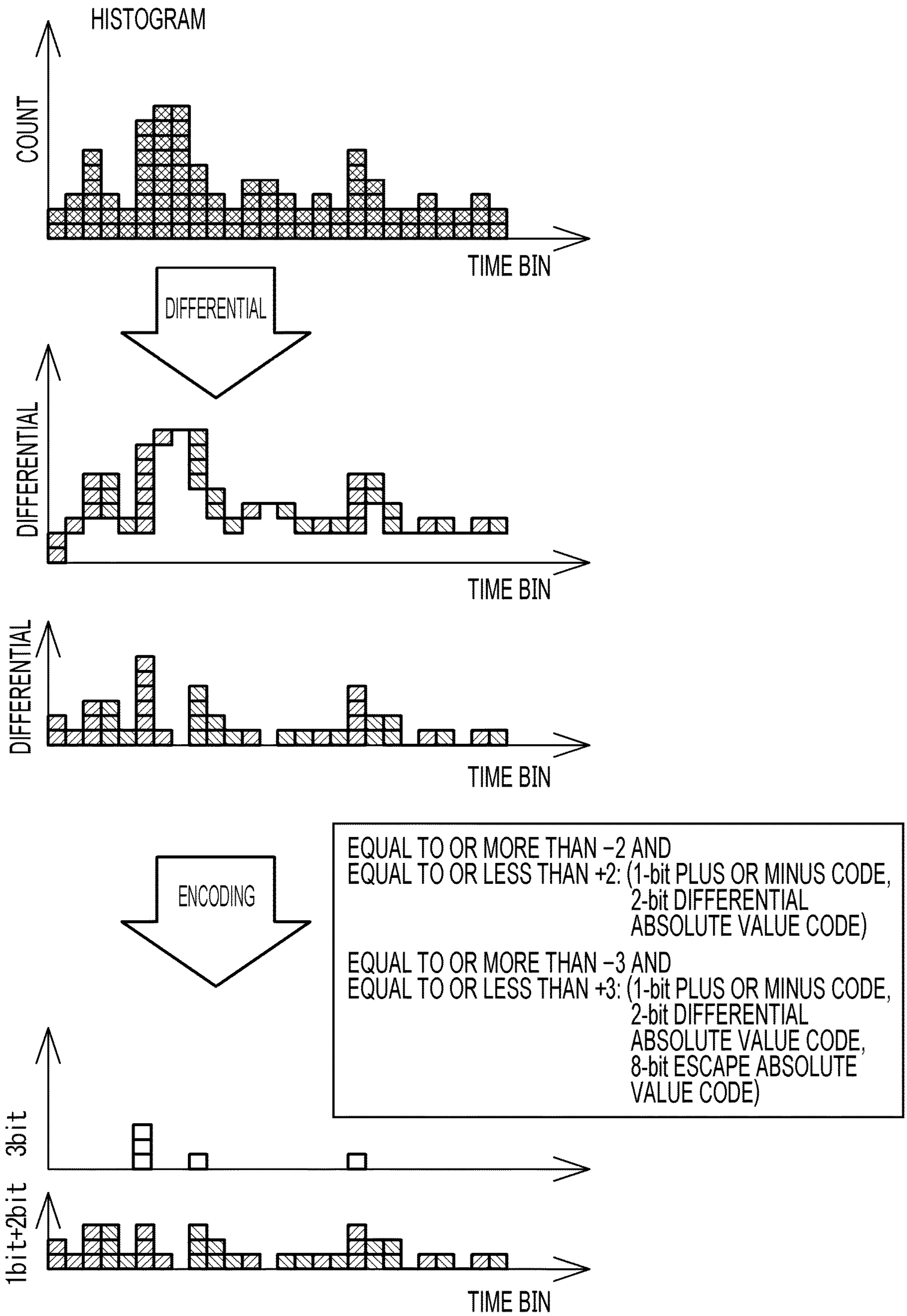
HISTOGRAM
COUNT
TIME BIN
DIFFERENTIAL
DIFFERENTIAL
TIME BIN
DIFFERENTIAL
TIME BIN
ENCODING
EQUAL TO OR MORE THAN −2 AND
EQUAL TO OR LESS THAN +2: (1-bit PLUS OR MINUS CODE, 2-bit DIFFERENTIAL ABSOLUTE VALUE CODE)
EQUAL TO OR MORE THAN −3 AND
EQUAL TO OR LESS THAN +3: (1-bit PLUS OR MINUS CODE, 2-bit DIFFERENTIAL ABSOLUTE VALUE CODE, 8-bit ESCAPE ABSOLUTE VALUE CODE)
3bit
1bit+2bit
TIME BIN

FIG. 44A

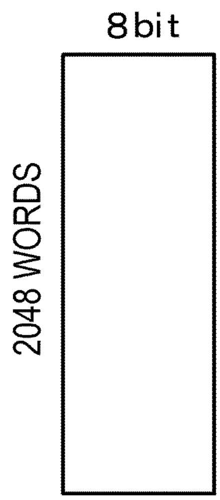


FIG. 44B

| 2-bit CODE | ABSOLUTE VALUE |
|---|---|
| 00b | 0 |
| 01b | 1 |
| 10b | 2 |
| 11b | 3 OR MORE |

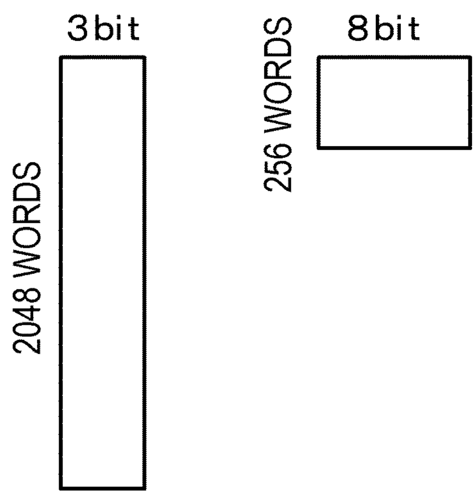

FIG. 45

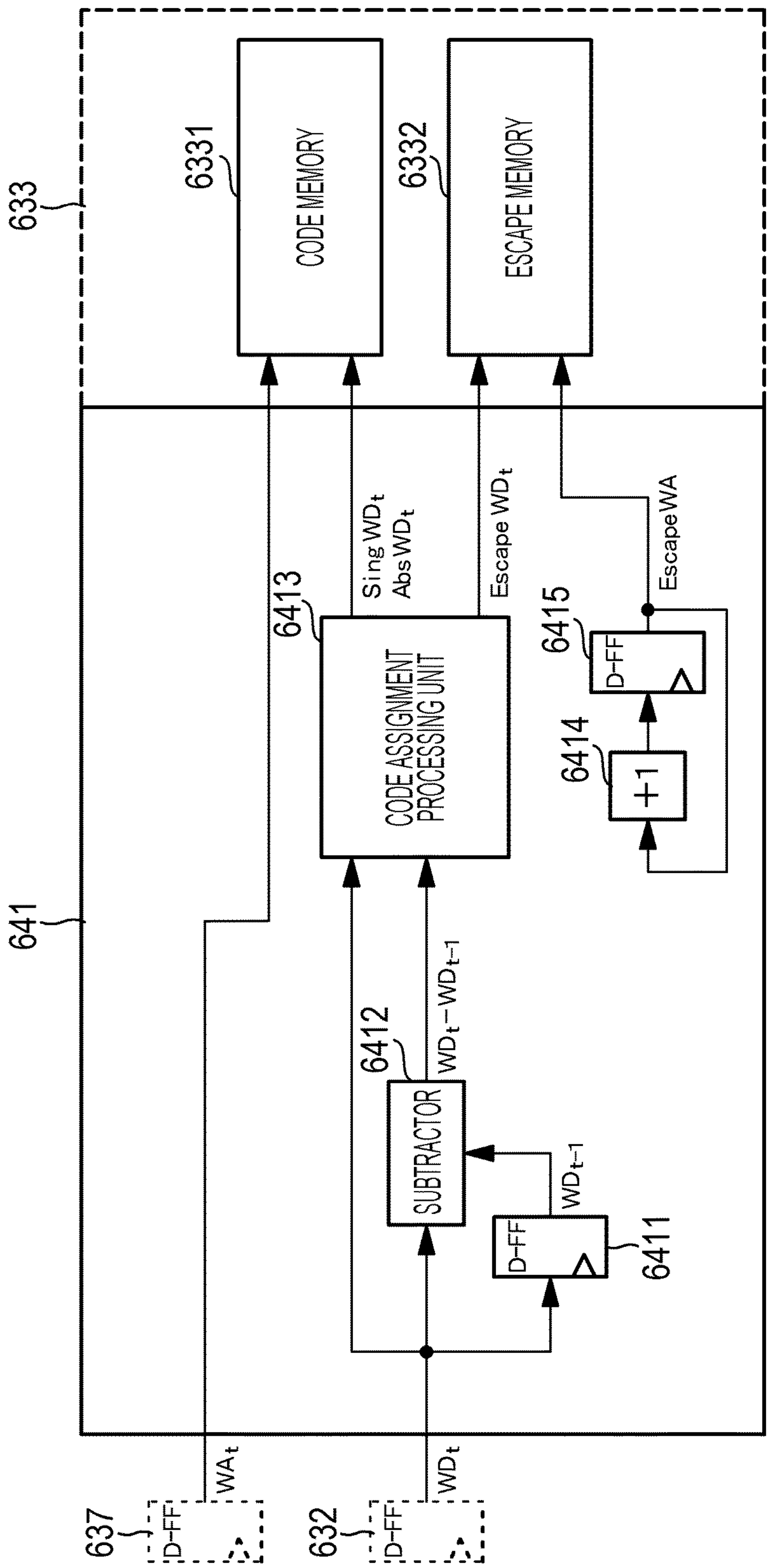
633
6331
CODE MEMORY
6332
ESCAPE MEMORY
641
6413
CODE ASSIGNMENT PROCESSING UNIT
Sing $WD_t$
Abs $WD_t$
Escape $WD_t$
6415
D-FF
6414
+1
Escape WA
6412
SUBTRACTOR
$WD_t - WD_{t-1}$
$WD_{t-1}$
D-FF
6411
637
D-FF
$WA_t$
632
D-FF
$WD_t$

FIG. 46

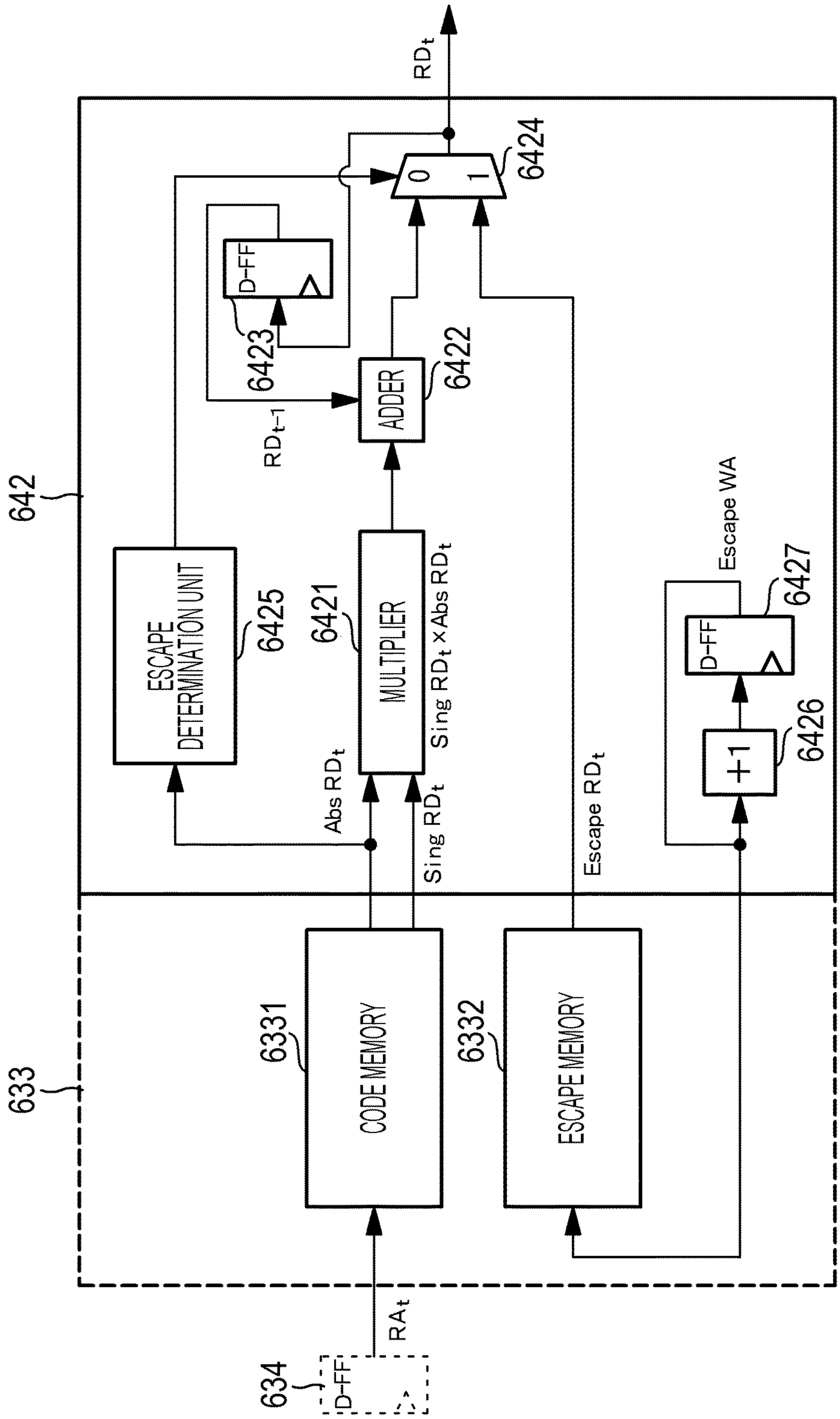

642
633
634
D-FF
$RA_t$
CODE MEMORY
6331
ESCAPE MEMORY
6332
Abs $RD_t$
Sing $RD_t$
Escape $RD_t$
ESCAPE DETERMINATION UNIT
6425
MULTIPLIER
6421
Sing $RD_t$ × Abs $RD_t$
ADDER
6422
$RD_{t-1}$
D-FF
6423
0
1
6424
$RD_t$
+1
6426
D-FF
6427
Escape WA

FIG. 47

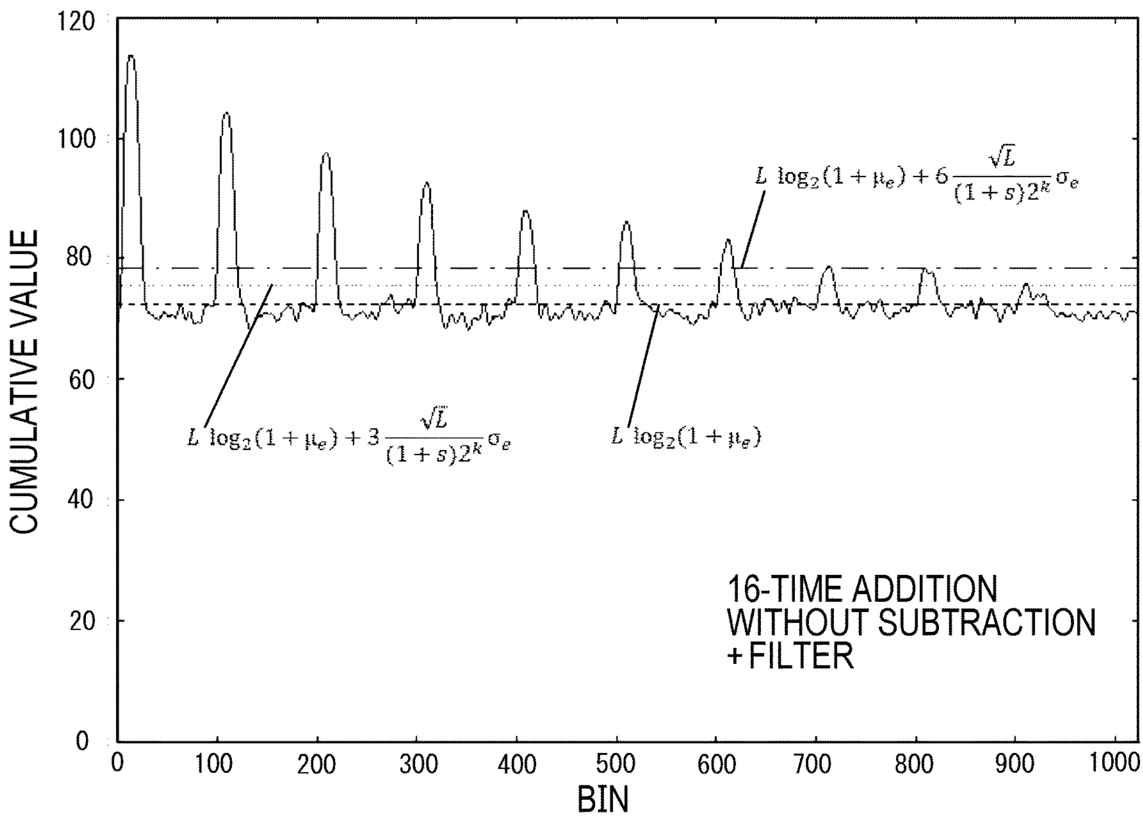
120
100
80
60
40
20
0
CUMULATIVE VALUE
0
100
200
300
400
500
600
700
800
900
1000
BIN
$L\ \log_2(1+\mu_e)+6\frac{\sqrt{L}}{(1+s)2^k}\sigma_e$
$L\ \log_2(1+\mu_e)+3\frac{\sqrt{L}}{(1+s)2^k}\sigma_e$
$L\ \log_2(1+\mu_e)$
16-TIME ADDITION
WITHOUT SUBTRACTION
+FILTER

FIG. 48

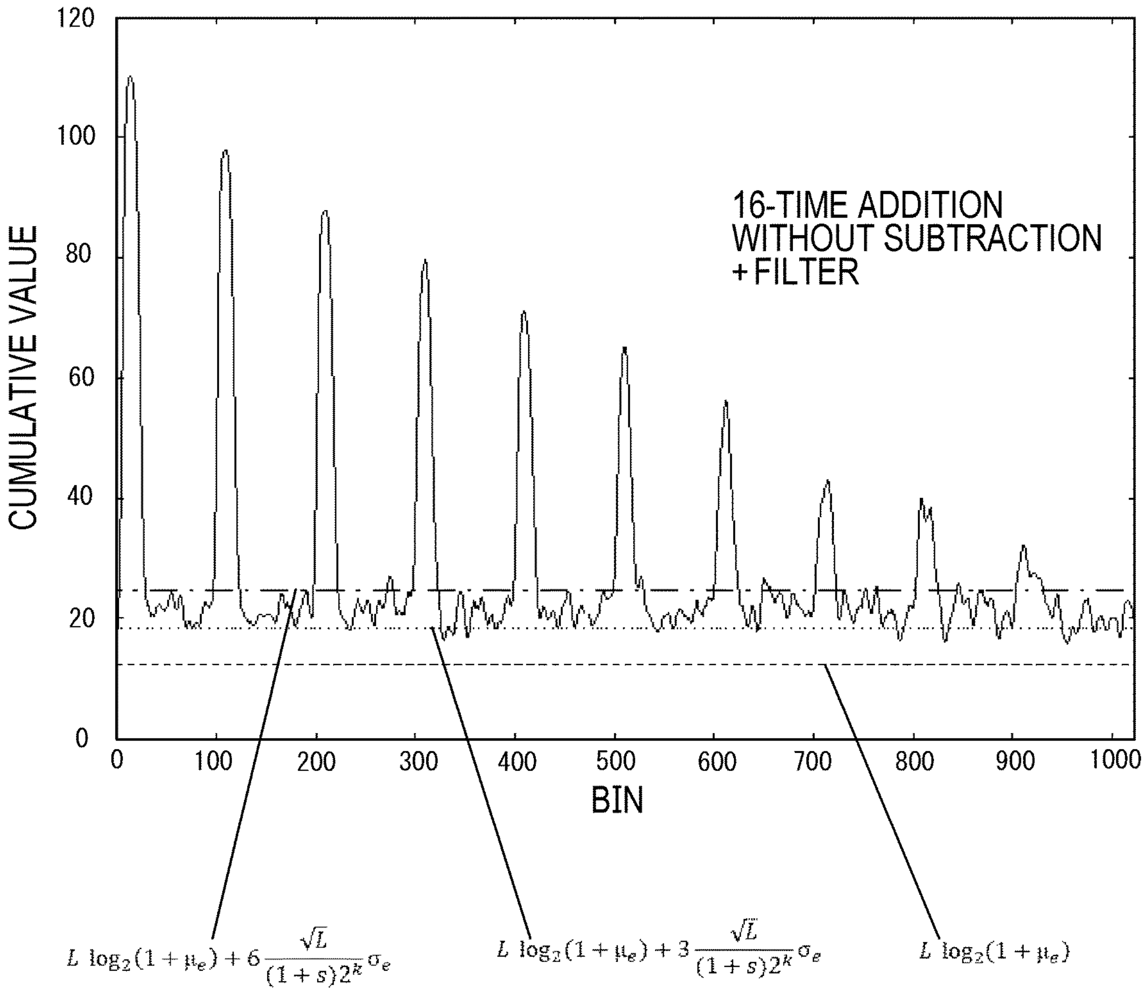
120
100
80
60
40
20
0
CUMULATIVE VALUE
0
100
200
300
400
500
600
700
800
900
1000
BIN
16-TIME ADDITION
WITHOUT SUBTRACTION
+FILTER
$L\ \log_2(1+\mu_e)+6\frac{\sqrt{L}}{(1+s)2^k}\sigma_e$
$L\ \log_2(1+\mu_e)+3\frac{\sqrt{L}}{(1+s)2^k}\sigma_e$
$L\ \log_2(1+\mu_e)$

FIG. 49A

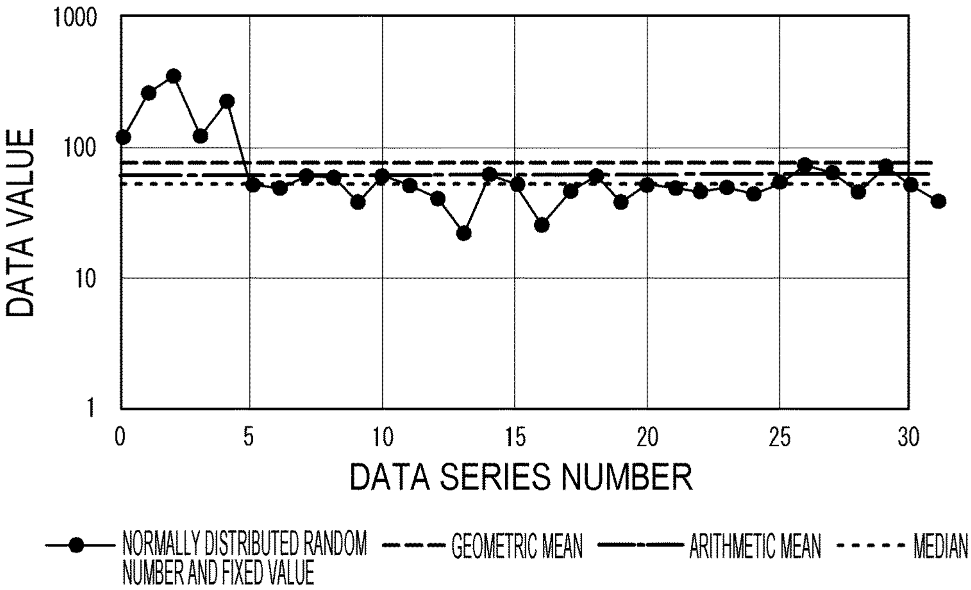


FIG. 49B

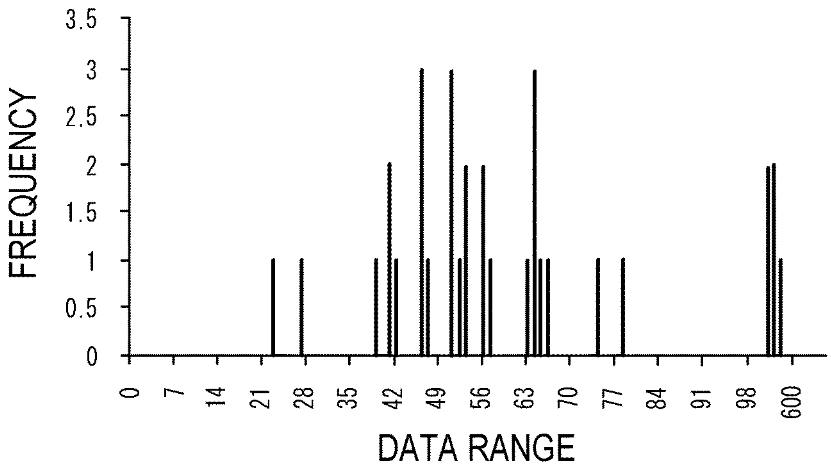

FIG. 50A

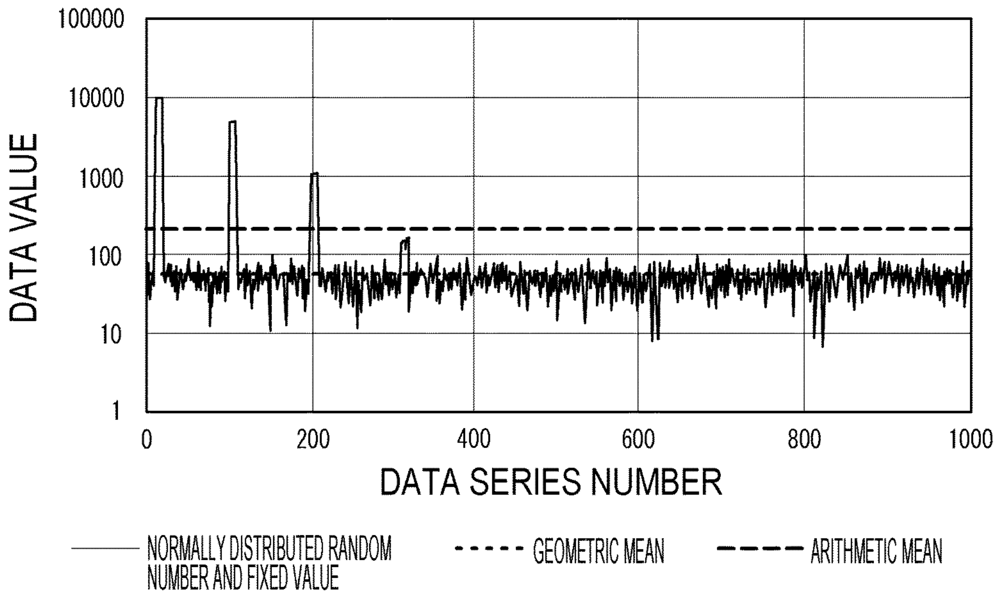


FIG. 50B

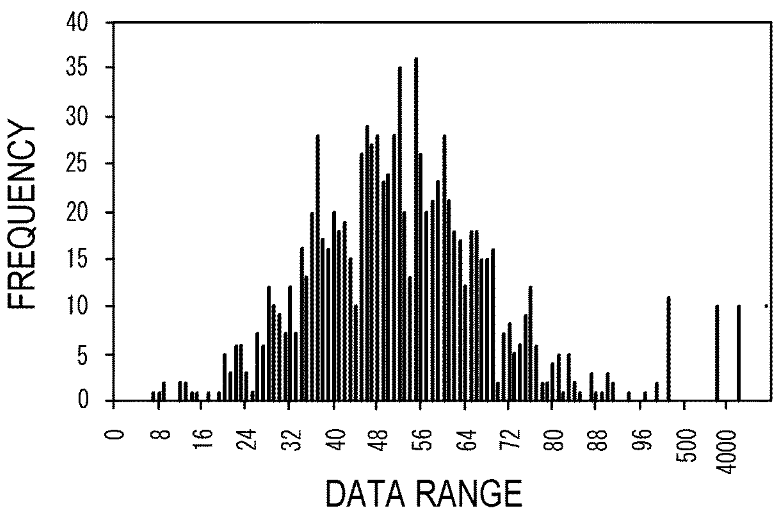

FIG. 51

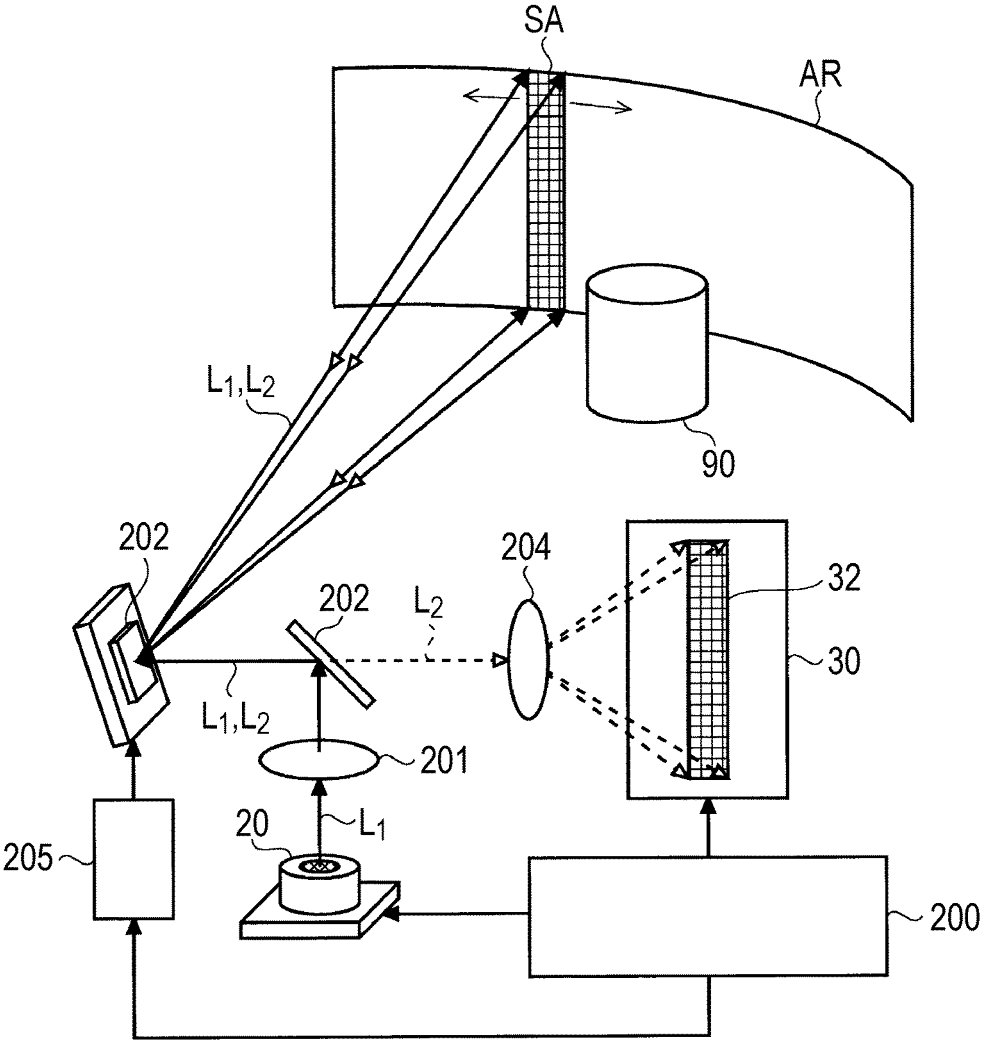

FIG. 52

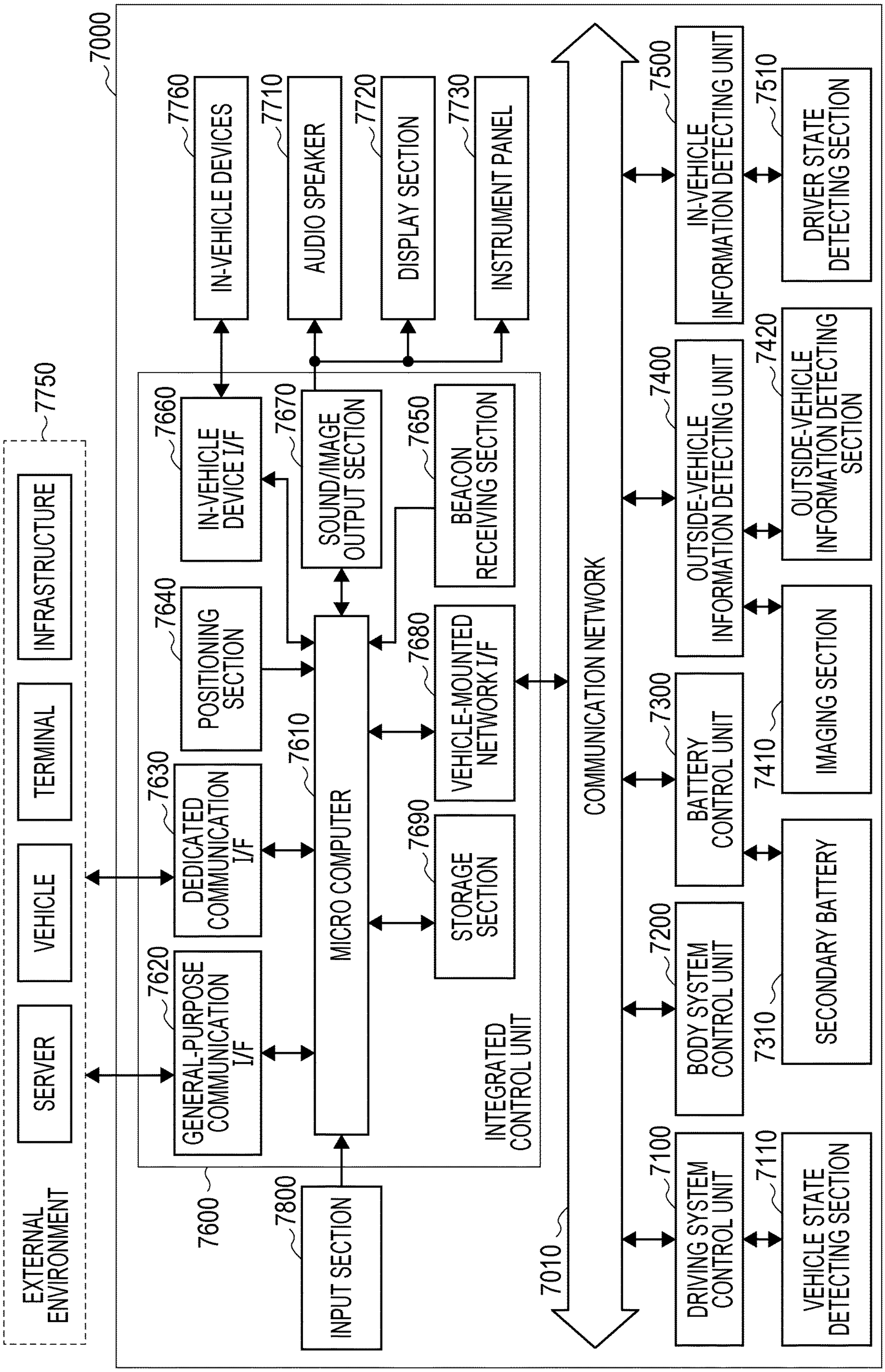
7000
EXTERNAL ENVIRONMENT
7750
SERVER
VEHICLE
TERMINAL
INFRASTRUCTURE
7600
INTEGRATED CONTROL UNIT
7610
MICRO COMPUTER
7620
GENERAL-PURPOSE COMMUNICATION I/F
7630
DEDICATED COMMUNICATION I/F
7640
POSITIONING SECTION
7650
BEACON RECEIVING SECTION
7660
IN-VEHICLE DEVICE I/F
7670
SOUND/IMAGE OUTPUT SECTION
7680
VEHICLE-MOUNTED NETWORK I/F
7690
STORAGE SECTION
7760
IN-VEHICLE DEVICES
7710
AUDIO SPEAKER
7720
DISPLAY SECTION
7730
INSTRUMENT PANEL
7800
INPUT SECTION
7010
COMMUNICATION NETWORK
7100
DRIVING SYSTEM CONTROL UNIT
7110
VEHICLE STATE DETECTING SECTION
7200
BODY SYSTEM CONTROL UNIT
7300
BATTERY CONTROL UNIT
7310
SECONDARY BATTERY
7400
OUTSIDE-VEHICLE INFORMATION DETECTING UNIT
7410
IMAGING SECTION
7420
OUTSIDE-VEHICLE INFORMATION DETECTING SECTION
7500
IN-VEHICLE INFORMATION DETECTING UNIT
7510
DRIVER STATE DETECTING SECTION

FIG. 53

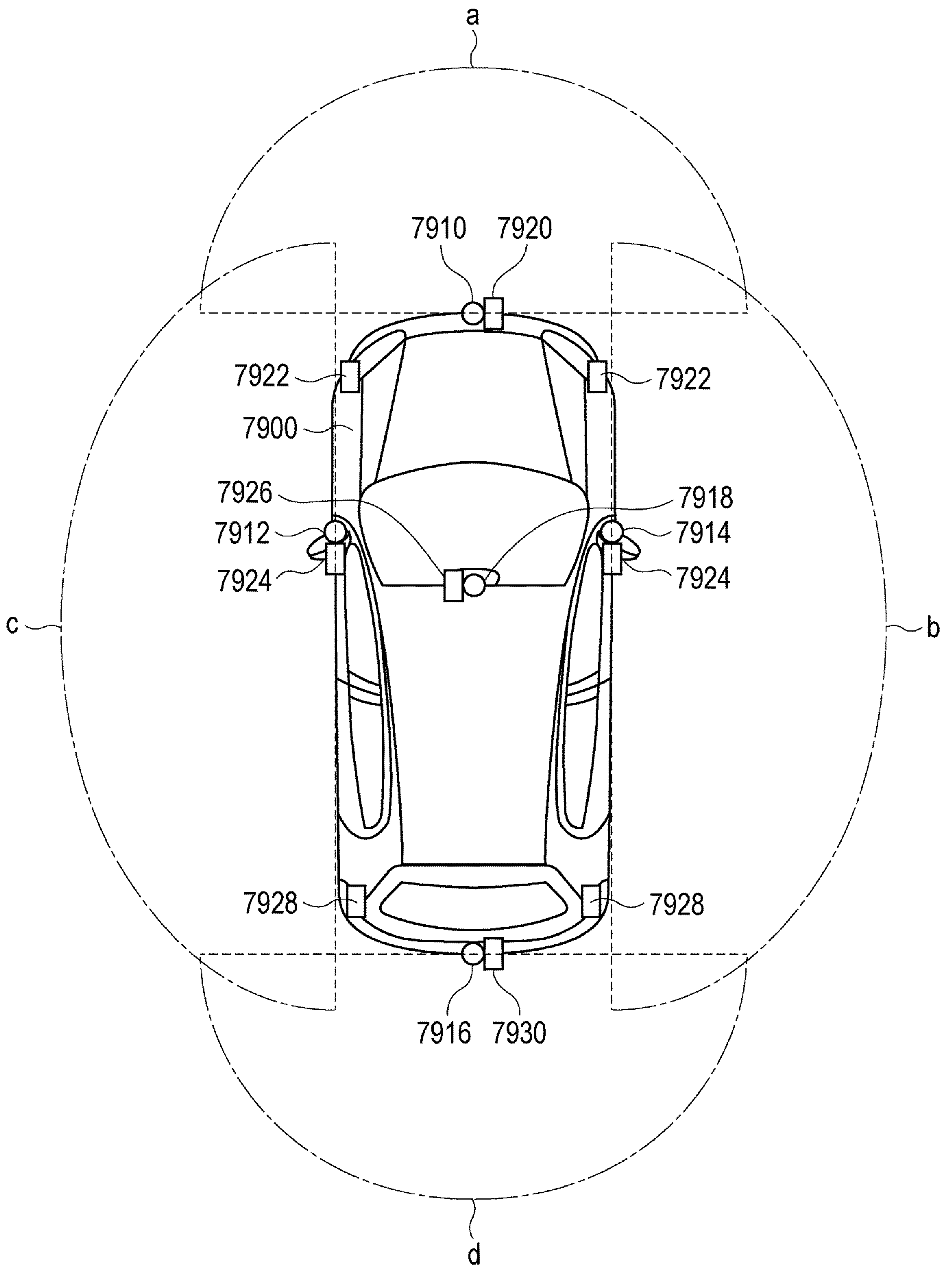
a
7910
7920
7922
7922
7900
7926
7918
7912
7914
7924
7924
c
b
7928
7928
7916
7930
d

**INTERNATIONAL SEARCH REPORT**

International application No. PCT/JP2020/047303

A. CLASSIFICATION OF SUBJECT MATTER
Int. Cl. G01S7/4861(2020.01)i, G01S17/10(2020.01)i
FI: G01S7/4861, G01S17/10

According to International Patent Classification (IPC) or to both national classification and IPC

B. FIELDS SEARCHED

Minimum documentation searched (classification system followed by classification symbols)
Int. Cl. G01S7/48-7/51, G01S17/00-17/95, G01C3/00-3/32

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2018-169384 A (DENSO CORP.) 01 November 2018, entire text, all drawings | 1-20 |
| A | JP 2016-161438 A (DENSO CORP.) 05 September 2016, entire text, all drawings | 1-20 |
| A | US 2018/0164415 A1 (SENSE TECHNOLOGIES LTD.) 14 June 2018, entire text, all drawings | 1-20 |
| A | US 2019/0257950 A1 (STMICROELECTRONICS (RESEARCH & DEVELOPMENT) LIMITED) 22 August 2019, entire text, all drawings | 1-20 |
| A | JP 2001-289951 A (YOKOGAWA ELECTRIC CORP.) 19 October 2001, claims | 1-20 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19.01.2021 | 02.02.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/047303

| Patent Documents referred to in the Report | Publication Date | Patent Family | Publication Date |
|---|---|---|---|
| JP 2018-169384 A | 01.11.2018 | US 2020/0018853 A1<br>entire text, all drawings<br>WO 2018/181013 A1<br>CN 110462437 A | |
| JP 2016-161438 A | 05.09.2016 | (Family: none) | |
| US 2018/0164415 A1 | 14.06.2018 | WO 2018/108934 A1<br>entire text, all drawings<br>DE 112017005641 T<br>CN 110073244 A<br>KR 10-2019-0093611 A | |
| US 2019/0257950 A1 | 22.08.2019 | (Family: none) | |
| JP 2001-289951 A | 19.10.2001 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2018169384 A